# EUROPEAN PATENT APPLICATION

(11) **EP 4 415 410 A1**
(43) Date of publication of application: **14.08.2024**
(21) Application number: 22885993.0
(22) Date of filing: 26.10.2022
(51) Int. Cl.: H04W 16/28

(54) **BEAM USE METHOD AND RELATED APPARATUS**

(30) Priority: 29.10.2021 CN 202111277512; 11.08.2022 CN 202210963817
(71) Applicant: Huawei Technologies Co., Ltd., Shenzhen, Guangdong 518129 (CN)
(72) Inventor: FAN, Bo, Shenzhen, Guangdong 518129 (CN); ZHANG, Xi, Shenzhen, Guangdong 518129 (CN); YUAN, Shitong, Shenzhen, Guangdong 518129 (CN)
(74) Representative: Gill Jennings & Every LLP
(86) International application number: PCT/CN2022/127553
(87) International publication number: WO 2023/072116

(57) **Abstract**

Embodiments of this application disclose a beam usage method, including: A first communication device determines a first beam and a second beam, where the first beam and the second beam are beams of a same type. The first communication device determines, according to a first rule, a beam used for a first control resource set, where the beam used for the first control resource set is the first beam and/or the second beam. In this way, the first communication device correctly applies a beam, that is indicated by a network device, to a channel corresponding to a control resource set, so that the channel corresponding to the control resource set is transmitted through the correct beam, to improve communication transmission performance. For example, in a multi-site transmission scenario, the first communication device determines, according to the technical solutions of this application, to correctly apply the first beam and the second beam to a corresponding physical downlink control channel, to implement multi-site transmission.

## Description

This application claims priorities to Chinese Patent Application No. 202111277512.9, filed with the China National Intellectual Property Administration on October 29, 2021 and entitled "BEAM USAGE METHOD AND RELATED APPARATUS", and to Chinese Patent Application No. 202210963817.3, filed with the China National Intellectual Property Administration on August 11, 2022 and entitled "BEAM USAGE METHOD AND RELATED APPARATUS", which are incorporated herein by reference in their entireties.

### TECHNICAL FIELD

This application relates to the field of communication technologies, and in particular, to a beam usage method and a related apparatus.

### BACKGROUND

In a 5th generation (5th generation, 5G) mobile communication system, high-frequency communication may be used, that is, data is transmitted by using an ultra-high band (>6 GHz) signal. A main problem of high-frequency communication is that energy of a signal sharply decreases as a transmission distance increases, resulting in a short transmission distance of the signal. To resolve this problem, an analog beam technology is used in high-frequency communication. Weighted processing is performed on an antenna array, to concentrate the signal energy in a small angle range, and form a signal (referred to as an analog beam, a beam for short) similar to a light beam, so as to extend the transmission distance.

Transmission is performed between a network device and a terminal device through the beam. The network device may indicate a plurality of beams of a same type to the terminal device, for example, a plurality of uplink common beams, a plurality of downlink common beams, or a plurality of uplink and downlink common beams. However, how to correctly apply the beam, that is indicated by the network device, to a corresponding channel is a problem to be resolved urgently.

### SUMMARY

This application provides a beam usage method and a related apparatus, so that a first communication device determines, according to a first rule, a beam used for a first control resource set. In this way, the first communication device correctly applies a beam, that is indicated by a network device, to a channel corresponding to a control resource set, so that the channel corresponding to the control resource set is transmitted through the correct beam, to improve communication transmission performance.

A first aspect of this application provides a beam usage method, including:
a first communication device determines a first beam and a second beam, where the first beam and the second beam are beams of a same type; and then the first communication device determines, according to a first rule, a beam used for a first control resource set, where the beam used for the first control resource set is the first beam and/or the second beam.

In the foregoing technical solution, the first communication device determines the first beam and the second beam, and the first beam and the second beam are the beams of the same type. For example, the first beam and the second beam are common beams of a same type. For example, the first beam and the second beam are two downlink common beams or two uplink and downlink common beams. The first communication device can determine, from the first beam and the second beam according to the first rule, the beam used for the first control resource set. In this way, the first communication device can correctly apply a beam, that is indicated by a network device, to a channel corresponding to a control resource set, so that the channel corresponding to the control resource set is transmitted through the correct beam, to improve communication transmission performance. For example, in a multi-site transmission scenario, the first communication device determines, according to the technical solutions of this application, to correctly apply the first beam and the second beam to a corresponding physical downlink control channel (physical downlink control channel, PDCCH), to implement multi-site transmission.

In a possible implementation, if the network device configures two control resource set groups for a terminal device, and each control resource set group includes at least one control resource set, that the first communication device determines, according to a first rule, a beam used for a first control resource set includes:
if the first control resource set belongs to a first control resource set group in the two control resource set groups, the first communication device determines that the beam used for the first control resource set is the first beam; or if the first control resource set belongs to a second control resource set group in the two control resource set groups, the first communication device determines that the beam used for the first control resource set is the second beam, where
the first control resource set group is a control resource set group with a smaller group index in the two control resource set groups, and the second control resource set group is a control resource set group with a larger group index in the two control resource set groups; or the first control resource set group is a control resource set group with a larger group index in the two control resource set groups, and the second control resource set group is a control resource set group with a smaller group index in the two control resource set groups.

In the foregoing implementation, when the network device configures the two control resource set groups for the terminal device, a specific manner in which the first communication device determines the beam used for the first control resource set is provided, so that the first communication device transmits, through a correct beam, a PDCCH corresponding to the first control resource set. For example, in the multi-site transmission scenario, the two control resource set groups respectively correspond to two sites. According to the technical solutions of this application, the first communication device can determine corresponding beams used for control resource sets belonging to the two control resource set groups, to implement multi-site transmission.

In another possible implementation, if the network device configures two control resource sets for a terminal device, and the two control resource sets are used for repeat transmission of a control channel, that the first communication device determines, according to a first rule, a beam used for a first control resource set includes:
if the first control resource set is a control resource set with a smaller index in the two control resource sets, the first communication device determines that the beam used for the first control resource set is the first beam; or if the first control resource set is a control resource set with a larger index in the two control resource sets, the first communication device determines that the beam used for the first control resource set is the second beam; or
if the first control resource set is a control resource set with a higher configuration ranking in the two control resource sets, the first communication device determines that the beam used for the first control resource set is the first beam; or if the first control resource set is a control resource set with a lower configuration ranking in the two control resource sets, the first communication device determines that the beam used for the first control resource set is the second beam.

In the foregoing implementation, when the network device configures the two control resource sets for the terminal device, and the two control resource sets are used for repeat transmission of the control channel, a specific manner in which the first communication device determines the beam used for the first control resource set is provided, so that the first communication device transmits, through a correct beam, a PDCCH corresponding to the first control resource set. For example, in the multi-site transmission scenario, the two control resource sets respectively correspond to two sites. According to the technical solutions of this application, the first communication device can determine beams respectively used for the two control resource sets, to implement multi-site transmission.

In another possible implementation, if the network device configures two control resource sets for a terminal device, and the two control resource sets are used for repeat transmission of a control channel, that the first communication device determines, according to a first rule, a beam used for a first control resource set includes:
if the first control resource set is a control resource set with a larger index in the two control resource sets, the first communication device determines that the beam used for the first control resource set is the first beam; or if the first control resource set is a control resource set with a smaller index in the two control resource sets, the first communication device determines that the beam used for the first control resource set is the second beam; or
if the first control resource set is a control resource set with a lower configuration ranking in the two control resource sets, the first communication device determines that the beam used for the first control resource set is the first beam; or if the first control resource set is a control resource set with a higher configuration ranking in the two control resource sets, the first communication device determines that the beam used for the first control resource set is the second beam.

In the foregoing implementation, when the network device configures the two control resource sets for the terminal device, and the two control resource sets are used for repeat transmission of the control channel, another specific manner in which the first communication device determines the beam used for the first control resource set is provided, so that the first communication device transmits, through a correct beam, a PDCCH corresponding to the first control resource set. For example, in the multi-site transmission scenario, the two control resource sets respectively correspond to two sites. According to the technical solutions of this application, the first communication device can determine beams respectively used for the two control resource sets, to implement multi-site transmission.

In another possible implementation, that the two control resource sets are used for repeat transmission of the control channel meets any one of the following conditions:
the network device configures two control resource set groups for the terminal device, and the two control resource sets belong to different control resource set groups;
the network device configures two control resource set groups for the terminal device, an index of a control resource set in a first control resource set group in the two control resource set groups is less than an index of a control resource set in a second control resource set group in the two control resource set groups; or a configuration ranking of a control resource set in a first control resource set group is prior to a configuration ranking of a control resource set in a second control resource set group, where the first control resource set group is a control resource set group with a smaller group index in the two control resource set groups, and the second control resource set group is a control resource set group with a larger group index in the two control resource set groups; or
the network device configures two control resource set groups for the terminal device, an index of a control resource set in a first control resource set group in the two control resource set groups is greater than an index of a control resource set in a second control resource set group in the two control resource set groups; or a configuration ranking of a control resource set in a first control resource set group is after a configuration ranking of a control resource set in a second control resource set group, where the first control resource set group is a control resource set group with a smaller group index in the two control resource set groups, and the second control resource set group is a control resource set group with a larger group index in the two control resource set groups; or
the network device configures only one control resource set group for the terminal device, and the two control resource sets belong to the control resource set group.

In the foregoing implementation, specific examples of some conditions that are met when the two control resource sets are used for repeat transmission of the control channel, so that the first communication device correctly determines the beams used for the two control resource sets, to improve communication transmission performance. For example, in the multi-site transmission scenario, the first communication device can determine, according to the technical solutions of this application, the beams used for the two control resource sets, to implement multi-site transmission.

In another possible implementation, if the network device configures one control resource set group for a terminal device, the control resource set group includes one or more single-beam control resource sets, and the first control resource set belongs to one of the one or more single-beam control resource sets, that the first communication device determines, according to a first rule, a beam used for a first control resource set includes:
the first communication device determines that the beam used for the first control resource set is the first beam;
the first communication device determines that the beam used for the first control resource set is the second beam; or
if a beam currently used for the first control resource set and the first beam belong to a same beam set, the first communication device determines to update the beam currently used for the first control resource set to the first beam, or if a beam currently used for the first control resource set and the second beam belong to a same beam set, the first communication device determines to update the beam currently used for the first control resource set to the second beam.

In the foregoing implementation, when the network device configures the control resource set group for the terminal device, and the first control resource set is a single-beam resource set, a specific determining manner in which the first communication device determines the beam used for the first control resource set is provided. In this way, the first communication device correctly determines the beam used for the first control resource set, to select an appropriate beam to transmit a PDCCH corresponding to the first control resource set, so as to improve communication transmission performance. For example, beams used by different sites are configured in different beam sets. In other words, a beam in a same beam set is a beam used by a same site. If the beam currently used for the first control resource set and the first beam belong to the same beam set, a same site is preferably used to transmit the PDCCH corresponding to the first control resource set. Accordingly, the beam currently used for the first control resource set is updated to the first beam. Descriptions of the second beam are similar. Details are not provided one by one herein again.

In another possible implementation, the first control resource set is not used for repeat transmission of a control channel.

In the foregoing implementation, the first control resource set and another control resource set are not used for repeat transmission of the control channel. In this way, the first communication device determines, with reference to the first rule, the beam used for the first control resource set, to select an appropriate beam to transmit a PDCCH corresponding to the first control resource set, so as to improve communication transmission performance.

In another possible implementation, if the network device configures one control resource set group for a terminal device, the control resource set group includes one or more multi-beam control resource sets, and the first control resource set belongs to one of the one or more multi-beam control resource sets, that the first communication device determines, according to a first rule, a beam used for a first control resource set includes: The first communication device determines that the beam used for the first control resource set is the first beam and the second beam.

In this implementation, when the network device configures the control resource set group for the terminal device, and the first control resource set belongs to the one of the control resource set group, the first beam and the second beam can be directly used for the first control resource set group. For example, the first beam and the second beam are beams used by two sites. The terminal device and the two sites transmit, through a corresponding beam, a PDCCH corresponding to the first control resource set, to implement multi-site transmission.

In another possible implementation, the method further includes: The first communication device receives a first media access control control element (media access control control element, MAC CE) from a second communication device, where the first MAC CE includes an index of the first control resource set. That the first communication device determines, according to a first rule, a beam used for a first control resource set includes:
if the first MAC CE is a first-type MAC CE, the first MAC CE includes first beam indication information, and the first beam indication information indicates the first beam, the first communication device determines that at any moment within a first time period, a 1^{st} common beam in two common beams of a same type that become effective at the any moment is used for the first control resource set, where the first time period is a time interval from an effective time point of a beam indicated by the first MAC CE to an effective time point of a beam indicated by a second MAC CE, and the second MAC CE is a MAC CE that indicates the beam used by the first control resource set and that is recently received by the first communication device after the first MAC CE is received;
if the first MAC CE is a first-type MAC CE, the first MAC CE includes first beam indication information, and the first beam indication information indicates the second beam, the first communication device determines that at any moment within a first time period, a 2^{nd} common beam in two common beams of a same type that become effective at the any moment is used for the first control resource set; or
if the first MAC CE is a second-type MAC CE, the first MAC CE includes second beam indication information and third beam indication information, the second beam indication information indicates the first beam, and the third beam indication information indicates the second beam, the first communication device determines that at any moment within a first time period, two common beams of a same type that become effective at the any moment are used for the first control resource set.

In this implementation, the first communication device can determine, with reference to the received first MAC CE, the beam used for the first control resource set. In this way, the first communication device correctly determines the beam used for the first control resource set, to select an appropriate beam to transmit a PDCCH corresponding to the first control resource set, so as to improve communication transmission performance.

In another possible implementation, the method further includes: The first communication device determines a type of the first control resource set, where the type of the first control resource set includes a single-beam control resource set or a multi-beam control resource set.

In this implementation, the first communication device can first determine the type of the first control resource set, and then correctly determine, with reference to the type of the first control resource set, the beam used for the first control resource set.

In another possible implementation, that the first communication device determines a type of the first control resource set includes:
the first communication device determines the type of the first control resource set based on a configuration parameter in the first control resource set;
the first communication device receives first indication information from the second communication device, where the first indication information indicates whether a plurality of beams are allowed to be used for the first control resource set, or the first indication information indicates the type of the first control resource set, the first communication device is a terminal device, and the second communication device is a network device;
the first communication device determines the type of the first control resource set based on a quantity of beams currently used for the first control resource set;
the first communication device receives a third MAC CE from the second communication device, where the third MAC CE indicates the type of the first control resource set, or the third MAC CE indicates a quantity of beams used for the first control resource set, and the quantity of beams includes 1 or 2; or the third MAC CE indicates the beam used for the first control resource set, and the beam used for the first control resource set includes the first beam and/or the second beam; or
the first communication device receives the first MAC CE from the second communication device; and the first communication device determines the type of the first control resource set based on a type of the first MAC CE.

In the foregoing implementation, several possible implementations in which the first communication device determines the type of the first control resource set are shown, to facilitate implementation of the solution. For example, the first communication device may determine the type of the first control resource set by using the configuration parameter in the first control resource set. The method is simple and implemented easily. Alternatively, the first communication device determines the type of the first control resource set by receiving the first indication information from the second communication device. Alternatively, the first communication device indirectly determines the type of the first control resource set by using the quantity of beams currently used for the first control resource set.

In another possible implementation, that the first communication device determines the type of the first control resource set based on a type of the first MAC CE includes:
if the first MAC CE is the first-type MAC CE, the first communication device determines that the first control resource set is a single-beam control resource set; or if the first MAC CE is the second-type MAC CE, the first communication device determines that the first control resource set is a multi-beam control resource set. Optionally, the first-type MAC CE is a MAC CE that indicates a single beam, and the second-type MAC CE is a MAC CE that indicates a plurality of beams.

In the foregoing implementation, a specific process in which the first communication device determines the type of the first control resource set based on the type of the first MAC CE is shown, to facilitate implementation of the solution.

In another possible implementation, that the first communication device determines the type of the first control resource set based on a quantity of beams currently used for the first control resource set includes:
if the quantity of beams currently used for the first control resource set is 1, the first communication device determines that the type of the first control resource set is a single-beam control resource set; or
if the quantity of beams currently used for the first control resource set is greater than 1, the first communication device determines that the type of the first control resource set is a multi-beam control resource set.

In the foregoing implementation, a specific process in which the first communication device determines the type of the first control resource set with reference to the quantity of beams currently used for the first control resource set is shown, to facilitate implementation of the solution.

In another possible implementation, a quantity of beams currently used for the single-beam resource set is 1, and a quantity of beams currently used for the multi-beam resource set is greater than 1.

In the foregoing implementation, some possible manners of distinguishing between the first beam and the second beam are shown, so that the first communication device distinguishes two beams of a same type that are indicated by the network device. For example, in the multi-site transmission scenario, the first beam and the second beam may be beams used by two different sites. Specifically, the first beam and the second beam may be indicated in any one of the manners shown above.

In another possible implementation, the first communication device includes a network device or a terminal device.

In another possible implementation, that a first communication device determines a first beam and a second beam includes:
the first communication device receives second indication information from the second communication device, where the second indication information indicates the first beam and the second beam, the first communication device is a terminal device, and the second communication device is a network device. In this implementation, the first communication device can determine the first beam and the second beam by using the second indication information from the second communication device.

A second aspect of this application provides a beam usage method, including:
a first communication device determines a first beam and a second beam, where the first beam and the second beam are beams of a same type; and the first communication device determines, according to a first rule, a beam used for a first physical uplink control channel (physical uplink control channel, PUCCH), where the beam used for the first PUCCH is the first beam and/or the second beam.

In the foregoing technical solution, the first communication device determines the first beam and the second beam, and the first beam and the second beam are the beams of the same type. For example, the first beam and the second beam are common beams of a same type. For example, the first beam and the second beam are two uplink common beams or two uplink and downlink common beams. The first communication device can determine, from the first beam and the second beam according to the first rule, the beam used for the first PUCCH. In this way, the first communication device can correctly apply, to the first PUCCH, a beam indicated by a network device, to transmit the first PUCCH through the correct beam, so as to improve communication transmission performance. For example, in a multi-site transmission scenario, the first communication device determines, according to the technical solutions of this application, to correctly apply the first beam and the second beam to a corresponding PUCCH, to implement multi-site transmission.

In a possible implementation, if the first PUCCH is a single-beam PUCCH, that the first communication device determines, according to a first rule, a beam used for a first PUCCH includes:
the first communication device determines that the beam used for the first PUCCH is the first beam;
the first communication device determines that the beam used for the first PUCCH is the second beam; or
if a beam currently used for the first PUCCH and the first beam belong to a same beam set, the first communication device determines to update the beam currently used for the first PUCCH to the first beam; or if a beam currently used for the first PUCCH and the second beam belong to a same beam set, the first communication device determines to update the beam currently used for the first PUCCH to the second beam.

In the foregoing implementation, when the first PUCCH is a single-beam PUCCH, a specific determining manner in which the first communication device determines the beam used for the first PUCCH is provided. In this way, the first communication device correctly determines the beam used for the first PUCCH, to select an appropriate beam to transmit the first PUCCH, so as to improve communication transmission performance. For example, beams used by different sites are configured in different beam sets. In other words, a beam in a same beam set is a beam used by a same site. If the beam currently used for the first PUCCH and the first beam belong to the same beam set, a same site is preferably used to transmit the first PUCCH. Accordingly, the beam currently used for the first PUCCH is updated to the first beam. Descriptions of the second beam are similar. Details are not provided herein again.

In another possible implementation, if the first PUCCH is a multi-beam PUCCH, that the first communication device determines, according to a first rule, a beam used for a first PUCCH includes: The first communication device determines that the beam used for the first PUCCH is the first beam and the second beam.

In this implementation, when the first PUCCH is a multi-beam PUCCH, the first beam and the second beam may be directly used for the first PUCCH. For example, the first beam and the second beam are beams used by two sites. A terminal device and the two sites transmit, through the corresponding beam, the first PUCCH, to implement multi-site transmission.

In another possible implementation, the method further includes: The first communication device receives a fourth MAC CE from a second communication device, where the fourth MAC CE includes an index of the first PUCCH. That the first communication device determines, according to a first rule, a beam used for a first PUCCH includes:
if the fourth MAC CE is a first-type MAC CE, the fourth MAC CE includes fourth beam indication information, and the fourth beam indication information indicates the first beam, the first communication device determines that at any moment within a second time period, a 1^{st} common beam in two common beams of a same type that become effective at the any moment is used for the first PUCCH, where the second time period is a time interval from an effective time point of a beam, that is indicated by the fourth MAC CE, to an effective time point of a beam indicated by a fifth MAC CE; and the fifth MAC CE is a MAC CE that indicates the beam used for the first PUCCH and that is recently received by the first communication device after the fourth MAC CE is received;
if the fourth MAC CE is a first-type MAC CE, the fourth MAC CE includes fourth beam indication information, and the fourth beam indication information indicates the second beam, the first communication device determines that at any moment within a second time period, a 2^{nd} common beam in two common beams of a same type that become effective at the any moment is used for the first PUCCH; or
if the fourth MAC CE is a second-type MAC CE, the fourth MAC CE includes fifth beam indication information and sixth beam indication information, the fifth beam indication information indicates the first beam, and the sixth beam indication information indicates the second beam, the first communication device determines that at any moment within a second time period, two common beams of a same type that become effective at the any moment are used for the first PUCCH.

In the foregoing implementation, a specific determining manner in which the first communication device can determine, with reference to the fourth MAC CE, the beam used for the first PUCCH is provided. In this way, the first communication device correctly determines the beam used for the first PUCCH, to select an appropriate beam to transmit the first PUCCH, so as to improve communication transmission performance.

In another possible implementation, before the first communication device determines, according to the first rule, the beam used for the first PUCCH, the method further includes:
the first communication device determines a type of the first PUCCH, where the type of the first PUCCH includes a single-beam PUCCH or a multi-beam PUCCH, a quantity of beams used for a single-beam PUCCH is 1, and a quantity of beams used for a multi-beam PUCCH is greater than 1.

In another possible implementation, that the first communication device determines a type of the first PUCCH includes:
the first communication device determines the type of the first PUCCH based on a configuration parameter in the first PUCCH;
the first communication device receives first indication information from the second communication device, where the first indication information indicates whether a plurality of beams are allowed to be used for the first PUCCH, or indicates the type of the first PUCCH;
the first communication device determines the type of the first PUCCH based on a quantity of beams currently used for the first PUCCH;
the first communication device receives a sixth MAC CE from the second communication device, where the sixth MAC CE indicates the type of the first PUCCH, or indicates a quantity of beams used for the first PUCCH, and the quantity of beams is 1 or 2, or the sixth MAC CE indicates the beam used for the first PUCCH, and the beam used for the first PUCCH includes the first beam and/or the second beam; or
the first communication device receives the fourth MAC CE from the second communication device; and the first communication device determines the type of the first PUCCH based on a type of the fourth MAC CE.

In another possible implementation, that the first communication device determines the type of the first PUCCH based on a type of the fourth MAC CE includes:
if the fourth MAC CE is a first-type MAC CE, the first communication device determines that the first PUCCH is a single-beam PUCCH; or if the fourth MAC CE is a second-type MAC CE, the first communication device determines that the first PUCCH is a multi-beam PUCCH, where the first-type MAC CE is a MAC CE that indicates a single beam, and the second-type MAC CE is a MAC CE that indicates a plurality of beams.

In another possible implementation, if the network device configures two control resource set groups for a terminal device, that the first communication device determines, according to a first rule, a beam used for a first PUCCH includes:
if the first PUCCH is associated with a group index of a first control resource set group in the two control resource set groups, the first communication device determines that the beam used for the first PUCCH is the first beam; or if the first PUCCH is associated with a group index of a second control resource set group in the two control resource set groups, the first communication device determines that the beam used for the first PUCCH is the second beam, where
the first control resource set group is a control resource set group with a smaller group index in the two control resource set groups, and the second control resource set group is a control resource set group with a larger group index in the two control resource set groups; or the first control resource set group is a control resource set group with a larger group index in the two control resource set groups, and the second control resource set group is a control resource set group with a smaller group index in the two control resource set groups.

In the foregoing implementation, when the network device configures the two control resource set groups for the terminal device, a specific manner in which the first communication device determines the beam used for the first PUCCH is provided, so that the first communication device correctly determines the beam used for the first PUCCH, to improve communication transmission performance. For example, in the multi-site transmission scenario, the first communication device can determine, according to the technical solutions of this application, beams used for a plurality of PUCCHs, to implement multi-site transmission.

In another possible implementation, the first communication device includes a network device or a terminal device.

In another possible implementation, that a first communication device determines a first beam and a second beam includes:
the first communication device receives second indication information from the second communication device, where the second indication information indicates the first beam and the second beam, the first communication device is a terminal device, and the second communication device is a network device. In this implementation, the first communication device can determine the first beam and the second beam by using the second indication information from the second communication device.

A third aspect of this application provides a beam usage method, including:
a first communication device determines a first beam and a second beam, where the first beam and the second beam are beams of a same type; and the first communication device receives third indication information from a second communications device, where the third indication information indicates any one of the following:
the first beam is used for a first shared channel;
the second beam is used for a first shared channel;
the first beam and the second beam are used for a first shared channel; or
the first beam and the second beam are not used for a first shared channel.

In the foregoing technical solution, the first communication device determines the first beam and the second beam, and the first beam and the second beam are the beams of the same type. For example, if the first shared channel is a physical downlink shared channel (physical downlink sharing channel, PDSCH), the first beam and the second beam are two downlink common beams or two uplink and downlink common beams. If the first shared channel is a physical uplink shared channel (physical uplink sharing channel, PUSCH), the first beam and the second beam are two uplink common beams or two uplink and downlink common beams. The first communication device can determine, based on the third indication information, the beam used for the first shared channel. In this way, the first communication device can correctly apply, to the first shared channel, a beam indicated by a network device, to transmit the first shared channel through the correct beam, so as to improve communication transmission performance. The second communication device can flexibly indicate, by using the third indication information, the first communication device to transmit the first shared channel through the first beam and/or the second beam. For example, in a multi-site transmission scenario, the first communication device determines, according to the technical solutions of this application, to correctly apply the first beam and the second beam to the first shared channel, to implement multi-site transmission.

In a possible implementation, the third indication information is carried in downlink control information (downlink control information, DCI). In this implementation, the second communication device can send the third indication information to the first communication device by using the DCI, to provide a specific carrier for sending indication information.

In another possible implementation, if a value of the third indication information is "00", the third indication information indicates that the first beam is used for the first shared channel. If a value of the third indication information is "01", the third indication information indicates that the second beam is used for the first shared channel. If a value of the third indication information is "10", the third indication information indicates that the first beam and the second beam are used for the first shared channel. If a value of the third indication information is "11", the third indication information indicates that the first beam and the second beam are not used for the first shared channel.

In the foregoing implementation, some possible values of the third indication information and meanings of indications corresponding to the values are shown, to facilitate implementation of the solution.

In another possible implementation, the first communication device includes a network device or a terminal device.

In another possible implementation, that a first communication device determines a first beam and a second beam includes:
the first communication device receives second indication information from the second communication device, where the second indication information indicates the first beam and the second beam, the first communication device is a terminal device, and the second communication device is a network device. In this implementation, the first communication device can determine the first beam and the second beam by using the second indication information from the second communication device.

A fourth aspect of this application provides a beam usage method, including:
a first communication device determines a first beam and a second beam, where the first beam and the second beam are beams of a same type; and the first communication device determines, according to a first rule, a beam used for a first sounding reference signal (sounding reference signal, SRS) resource, where the beam used for the first SRS resource is the first beam or the second beam.

In the foregoing technical solution, the first communication device determines the first beam and the second beam, and the first beam and the second beam are the beams of the same type. For example, the first beam and the second beam are common beams of a same type. For example, the first beam and the second beam are two uplink common beams or two uplink and downlink common beams. The first communication device can determine, according to the first rule, the beam used for the first SRS resource. In this way, the first communication device can correctly apply a beam, that is indicated by a network device, to transmission of a corresponding reference signal, to improve communication transmission performance.

In a possible implementation, if the network device configures two SRS resource sets of a same type for a terminal device, that the first communication device determines, according to a first rule, a beam used for a first SRS resource includes:
if the first SRS resource belongs to a corresponding SRS resource in a first SRS resource set in the two SRS resource sets, the first communication device determines that the beam used for the first SRS resource is the first beam; or if the first SRS resource belongs to a corresponding SRS resource in a second SRS resource set in the two SRS resource sets, the first communication device determines that the beam used for the first SRS resource is the second beam, where
the first SRS resource set is an SRS resource set with a smaller index in the two SRS resource sets, and the second SRS resource set is an SRS resource set with a larger index in the two SRS resource sets; the first SRS resource set is an SRS resource set with a larger index in the two SRS resource sets, and the second SRS resource set is an SRS resource set with a smaller index in the two SRS resource sets; the first SRS resource set is an SRS resource set with a higher configuration ranking in the two SRS resource sets, and the second SRS resource set is an SRS resource set with a lower configuration ranking in the two SRS resource sets; or the first SRS resource set is an SRS resource set with a lower configuration ranking in the two SRS resource sets, and the second SRS resource set is an SRS resource set with a higher configuration ranking in the two SRS resource sets.

In the foregoing implementation, when the network device configures the two SRS resource sets of the same type for the terminal device, a specific manner in which the first communication device determines the beam used for the first SRS resource is provided, so that the first communication device transmits the first SRS resource through the correct beam, to improve communication transmission performance.

In another possible implementation, if the network device configures one SRS resource set for a terminal device, and the first SRS resource belongs to the SRS resource set, that the first communication device determines, according to a first rule, a beam used for a first SRS resource includes:
the first communication device determines that the beam used for the first SRS resource is the first beam;
the first communication device determines that the beam used for the first SRS resource is the second beam;
if a beam currently used for the first SRS resource and the first beam belong to a same beam set, the first communication device updates the beam currently used for the first SRS resource to the first beam; or if a beam currently used for the first SRS resource and the second beam belong to a same beam set, the first communication device updates the beam currently used for the first SRS resource to the second beam;
the first communication device receives a first radio resource control (radio resource control, RRC) message or a first MAC CE from a second communication device, where the first RRC message or the first MAC CE indicates that one or two of the first beam and the second beam are used for the first SRS resource; and the first communication device determines, based on the first RRC message or the first MAC CE, the beam used for the first SRS resource; or
the first communication device receives a second RRC message or a second MAC CE from a second communication device, where the first RRC message or the second MAC CE indicates that the first beam, the second beam, or the first beam and the second beam are used for the first SRS resource; and the first communication device determines, based on the second RRC message or the second MAC CE, the beam used for the first SRS resource.

In the foregoing implementation, when the network device configures the SRS resource set for the terminal device, a specific determining manner in which the first communication device determines the beam used for the first SRS resource is provided. In this way, the first communication device correctly determines the beam used for the first SRS resource, to select an appropriate beam to transmit the first SRS resource, so as to improve communication transmission performance. For example, beams used by different sites are configured in different beam sets. In other words, a beam in a same beam set is a beam used by a same site. If the beam currently used for the first SRS resource and the first beam belong to the same beam set, a same site is preferably used to transmit the first SRS resource. Accordingly, the beam currently used for the first SRS resource is updated to the first beam. Descriptions of the second beam are similar. Details are not provided one by one herein again.

In another possible implementation, the first communication device includes a network device or a terminal device.

In another possible implementation, that a first communication device determines a first beam and a second beam includes:
the first communication device receives second indication information from the second communication device, where the second indication information indicates the first beam and the second beam, the first communication device is a terminal device, and the second communication device is a network device. In this implementation, the first communication device can determine the first beam and the second beam by using the second indication information from the second communication device.

A fifth aspect of this application provides a beam usage method, including:
a first communication device determines a first beam and a second beam, where the first beam and the second beam are beams of a same type; and the first communication device determines, according to a first rule, a beam used for a first channel state information reference signal (channel state information-reference signal, CSI-RS) resource, where the beam used for the first CSI-RS resource is the first beam or the second beam.

In the foregoing technical solution, the first communication device determines the first beam and the second beam, and the first beam and the second beam are the beams of the same type. For example, the first beam and the second beam are common beams of a same type. For example, the first beam and the second beam are two uplink common beams or two uplink and downlink common beams. The first communication device can determine, according to the first rule, the beam used for the first CSI-RS resource. In this way, the first communication device can correctly apply a beam, that is indicated by a network device, to transmission of a corresponding reference signal, to improve communication transmission performance.

In a possible implementation, if the network device configures two CSI-RS resource sets of a same type for a terminal device, that the first communication device determines, according to a first rule, a beam used for a first CSI-RS resource includes:
if the first CSI-RS resource belongs to a corresponding CSI-RS resource in a first CSI-RS resource set in the two CSI-RS resource sets, the first communication device determines that the beam used for the first CSI-RS resource is the first beam; or if the first CSI-RS resource belongs to a corresponding CSI-RS resource in a second CSI-RS resource set in the two CSI-RS resource sets, the first communication device determines that the beam used for the first CSI-RS resource is the second beam, where
the first CSI-RS resource set is a CSI-RS resource set with a smaller index in the two CSI-RS resource sets, and the second CSI-RS resource set is a CSI-RS resource set with a larger index in the two CSI-RS resource sets; the first CSI-RS resource set is a CSI-RS resource set with a larger index in the two CSI-RS resource sets, and the second CSI-RS resource set is a CSI-RS resource set with a smaller index in the two CSI-RS resource sets; the first CSI-RS resource set is a CSI-RS resource set with a higher configuration ranking in the two CSI-RS resource sets, and the second CSI-RS resource set is a CSI-RS resource set with a lower configuration ranking in the two CSI-RS resource sets; or the first CSI-RS resource set is a CSI-RS resource set with a lower configuration ranking in the two CSI-RS resource sets, and the second CSI-RS resource set is a CSI-RS resource set with a higher configuration ranking in the two CSI-RS resource sets.

In the foregoing implementation, when the network device configures the two CSI-RS resource sets of the same type for the terminal device, a specific manner in which the first communication device determines the beam used for the first CSI-RS resource is provided, so that the first communication device transmits the first CSI-RS resource through the correct beam, to improve communication transmission performance.

In another possible implementation, if the network device configures one CSI-RS resource set for a terminal device, and the first CSI-RS resource belongs to the CSI-RS resource set, that the first communication device determines, according to a first rule, a beam used for a first CSI-RS resource includes:
the first communication device determines that the beam used for the first CSI-RS resource is the first beam;
the first communication device determines that the beam used for the first CSI-RS resource is the second beam;
if a beam currently used for the first CSI-RS resource and the first beam belong to a same beam set, the first communication device updates the beam currently used for the first CSI-RS resource to the first beam; or if a beam currently used for the first CSI-RS resource and the second beam belong to a same beam set, the first communication device updates the beam currently used for the first CSI-RS resource to the second beam;
the first communication device receives a first RRC message or a first MAC CE from a second communication device, where the first RRC message or the first MAC CE indicates that one or two of the first beam and the second beam are used for the first CSI-RS resource; and the first communication device determines, based on the first RRC message or the first MAC CE, the beam used for the first CSI-RS resource; or
the first communication device receives a second RRC message or a second MAC CE from a second communication device, where the first RRC message or the second MAC CE indicates that the first beam, the second beam, or the first beam and the second beam are used for the first CSI-RS resource; and the first communication device determines, based on the second RRC message or the second MAC CE, the beam used for the first CSI-RS resource.

In the foregoing implementation, when the network device configures the CSI-RS resource set for the terminal device, a specific determining manner in which the first communication device determines the beam used for the first CSI-RS resource is provided. In this way, the first communication device correctly determines the beam used for the first CSI-RS resource, to select an appropriate beam to transmit the first CSI-RS resource, so as to improve communication transmission performance. For example, beams used by different sites are configured in different beam sets. In other words, a beam in a same beam set is a beam used by a same site. If the beam currently used for the first CSI-RS resource and the first beam belong to the same beam set, a same site is preferably used to transmit the first CSI-RS resource. Accordingly, the beam currently used for the first CSI-RS resource is updated to the first beam. Descriptions of the second beam are similar. Details are not provided one by one herein again.

In another possible implementation, the first communication device includes a network device or a terminal device.

In another possible implementation, that a first communication device determines a first beam and a second beam includes:
the first communication device receives second indication information from the second communication device, where the second indication information indicates the first beam and the second beam, the first communication device is a terminal device, and the second communication device is a network device. In this implementation, the first communication device can determine the first beam and the second beam by using the second indication information from the second communication device.

On a basis of any one of the first aspect to the fifth aspect, the first beam and the second beam are two common beams of a same type that are indicated by the network device to the terminal device. The first beam and the second beam include any one of the following:
the first beam is a beam with a smaller index in the two beams, and the second beam is a beam with a larger index in the two beams;
the first beam is a beam corresponding to a smaller transmission configuration indicator (transmission configuration indicator, TCI) field value in the two beams, and the second beam is a beam corresponding to a larger TCI field value in the two beams;
the first beam is a beam with a higher configuration ranking in the two beams, and the second beam is a beam with a lower configuration ranking in the two beams;
the first beam belongs to a first beam set, the second beam belongs to a second beam set, the first beam set and the second beam set are two beam sets of a same type that are configured by the network device for the terminal device, the first beam set is a beam set with a smaller index in the two beam sets of the same type, and the second beam set is a beam set with a larger index in the two beam sets; or the first beam set is a beam set with a higher configuration ranking in the two beam sets of the same type, and the second beam set is a beam set with a lower configuration ranking in the two beam sets;
the first beam belongs to a first beam group, the second beam belongs to a second beam group, the first beam group and the second beam group are two beam groups of a same type that are activated by the network device by using a MAC CE, the first beam group is a beam group with a smaller index in the two beam groups of the same type, and the second beam group is a beam group with a larger index in the two beam groups of the same type; or the first beam group is a beam group with a higher activation ranking in the MAC CE in the two beam groups of the same type, and the second beam group is a beam group with a lower activation ranking in the MAC CE in the two beam groups of the same type;
the first beam is a beam indicated by a 1^{st} TCI field in DCI, and the second beam is a beam indicated by a 2^{nd} TCI field in the DCI; the 1^{st} TCI field corresponds to a first beam group, and the 2^{nd} TCI field corresponds to a second beam group; and the first communication device determines the first beam from the first beam group by using a field value of the 1^{st} TCI field, and determines the second beam from the second beam group by using a field value of the 2^{nd} TCI field;
the first beam is a beam corresponding to a first part of field values in all field values of a TCI field in DCI, and the second beam is a beam corresponding to a second part of field values in all the field values of the TCI field in the DCI; the first part of field values corresponds to a beam group, and the second part of field values corresponds to a second beam group; and the first communication device determines the first beam from the first beam group by using the first part of field values, and determines the second beam from the second beam group by using the second part of field values;
the first beam and the second beam are two beams of a same type that are indicated by a same TCI field in DCI, the first beam is a 1^{st} beam in the two beams of the same type that are indicated by the same TCI field, and the second beam is a 2^{nd} beam in the two beams of the same type that are indicated by the same TCI field;
the first beam is a beam with a higher activation ranking in a MAC CE in two beams of a same type, and the second beam is a beam with a lower activation ranking in the MAC CE in the two beams of the same type; or
the first beam is a beam indicated by first DCI, the second beam is a beam indicated by second DCI, the first DCI is DCI carried on a PDCCH corresponding to a first control resource set group in two control resource set groups configured by the network device for the terminal device, the second DCI is DCI carried on a PDCCH corresponding to a second control resource set group in the two control resource set groups, the first control resource set group is a control resource set group with a smaller group index in the two control resource set groups, and the second control resource set group is the control resource set group with a larger group index in the two control resource set groups; or a value of a field or a value of a part of bits of a field in the first DCI is a first value, and a value of a field or a value of a part of bits of a field in the second DCI is a second value.

In the foregoing implementation, some possible manners of distinguishing between the first beam and the second beam are shown, so that the first communication device distinguishes two beams of a same type that are indicated by the network device. For example, in a multi-site transmission scenario, the first beam and the second beam may be beams used by two different sites. Specifically, the first beam and the second beam may be indicated in any one of the manners shown above.

A sixth aspect of this application provides a communication apparatus, including:
a processing module, configured to: determine a first beam and a second beam, where the first beam and the second beam are beams of a same type; and determine, according to a first rule, a beam used for a first control resource set, where the beam used for the first control resource set is the first beam and/or the second beam.

In a possible implementation, if a network device configures two control resource set groups for a terminal device, and each control resource set group includes at least one control resource set, the processing module is specifically configured to:
if the first control resource set belongs to a first control resource set group in the two control resource set groups, determine that the beam used for the first control resource set is the first beam; or if the first control resource set belongs to a second control resource set group in the two control resource set groups, determine that the beam used for the first control resource set is the second beam, where
the first control resource set group is a control resource set group with a smaller group index in the two control resource set groups, and the second control resource set group is a control resource set group with a larger group index in the two control resource set groups; or the first control resource set group is a control resource set group with a larger group index in the two control resource set groups, and the second control resource set group is a control resource set group with a smaller group index in the two control resource set groups.

In another possible implementation, if a network device configures two control resource sets for a terminal device, and the two control resource sets are used for repeat transmission of a control channel, the processing module is specifically configured to:
if the first control resource set is a control resource set with a smaller index in the two control resource sets, determine that the beam used for the first control resource set is the first beam; or if the first control resource set is a control resource set with a larger index in the two control resource sets, determine that the beam used for the first control resource set is the second beam; or
if the first control resource set is a control resource set with a higher configuration ranking in the two control resource sets, determine that the beam used for the first control resource set is the first beam; or if the first control resource set is a control resource set with a lower configuration ranking in the two control resource sets, determine that the beam used for the first control resource set is the second beam.

In another possible implementation, if a network device configures two control resource sets for a terminal device, and the two control resource sets are used for repeat transmission of a control channel, the processing module is specifically configured to:
if the first control resource set is a control resource set with a larger index in the two control resource sets, determine that the beam used for the first control resource set is the first beam; or if the first control resource set is a control resource set with a smaller index in the two control resource sets, determine that the beam used for the first control resource set is the second beam; or
if the first control resource set is a control resource set with a lower configuration ranking in the two control resource sets, determine that the beam used for the first control resource set is the first beam; or if the first control resource set is a control resource set with a higher configuration ranking in the two control resource sets, determine that the beam used for the first control resource set is the second beam.

In another possible implementation, that the two control resource sets are used for repeat transmission of the control channel meets any one of the following conditions:
the network device configures two control resource set groups for the terminal device, and the two control resource sets belong to different control resource set groups;
the network device configures two control resource set groups for the terminal device, an index of a control resource set in a first control resource set group in the two control resource set groups is less than an index of a control resource set in a second control resource set group in the two control resource set groups; or a configuration ranking of a control resource set in a first control resource set group is prior to a configuration ranking of a control resource set in a second control resource set group, where the first control resource set group is a control resource set group with a smaller group index in the two control resource set groups, and the second control resource set group is a control resource set group with a larger group index in the two control resource set groups; or
the network device configures two control resource set groups for the terminal device, an index of a control resource set in a first control resource set group in the two control resource set groups is greater than an index of a control resource set in a second control resource set group in the two control resource set groups; or a configuration ranking of a control resource set in a first control resource set group is after a configuration ranking of a control resource set in a second control resource set group, where the first control resource set group is a control resource set group with a smaller group index in the two control resource set groups, and the second control resource set group is a control resource set group with a larger group index in the two control resource set groups; or
the network device configures only one control resource set group for the terminal device, and the two control resource sets belong to the control resource set group.

In another possible implementation, if a network device configures one control resource set group for a terminal device, the control resource set group includes one or more single-beam control resource sets, and the first control resource set belongs to one of the one or more single-beam control resource sets, the processing module is specifically configured to:
determine that the beam used for the first control resource set is the first beam;
determine that the beam used for the first control resource set is the second beam; or
if a beam currently used for the first control resource set and the first beam belong to a same beam set, determine to update the beam currently used for the first control resource set to the first beam, or if a beam currently used for the first control resource set and the second beam belong to a same beam set, determine to update the beam currently used for the first control resource set to the second beam.

In another possible implementation, the first control resource set is not used for repeat transmission of a control channel.

In another possible implementation, if a network device configures one control resource set group for a terminal device, the control resource set group includes one or more multi-beam control resource sets, and the first control resource set belongs to one of the one or more multi-beam control resource sets, the processing module is specifically configured to:
determine that the beam used for the first control resource set is the first beam and the second beam.

In another possible implementation, a transceiver module is configured to receive a first MAC CE from a second communication device, where the first MAC CE includes an index of the first control resource set. The processing module is specifically configured to:
if the first MAC CE is a first-type MAC CE, the first MAC CE includes first beam indication information, and the first beam indication information indicates the first beam, determine that at any moment within a first time period, a 1^{st} common beam in two common beams of a same type that become effective at the any moment is used for the first control resource set, where the first time period is a time interval from an effective time point of a beam indicated by the first MAC CE to an effective time point of a beam indicated by a second MAC CE, and the second MAC CE is a MAC CE that indicates the beam used for the first control resource set and that is recently received by the communication apparatus after the first MAC CE is received;
if the first MAC CE is a first-type MAC CE, the first MAC CE includes first beam indication information, and the first beam indication information indicates the second beam, determine that at any moment within a first time period, a 2^{nd} common beam in two common beams of a same type that become effective at the any moment is used for the first control resource set; or
if the first MAC CE is a second-type MAC CE, the first MAC CE includes second beam indication information and third beam indication information, the second beam indication information indicates the first beam, and the third beam indication information indicates the second beam, determine that at any moment within a first time period, two common beams of a same type that become effective at the any moment are used for the first control resource set.

In another possible implementation, the processing module is further configured to:
determine a type of the first control resource set, where the type of the first control resource set includes a single-beam control resource set or a multi-beam control resource set.

In another possible implementation, the processing module is specifically configured to:
determine the type of the first control resource set based on a configuration parameter in the first control resource set;
receive first indication information from the second communication device, where the first indication information indicates whether a plurality of beams are allowed to be used for the first control resource set, or the first indication information indicates the type of the first control resource set, the communication apparatus is a terminal device, and the second communication device is a network device;
determine the type of the first control resource set based on a quantity of beams currently used for the first control resource set;
receive a third MAC CE from the second communication device, where the third MAC CE indicates the type of the first control resource set, or the third MAC CE indicates a quantity of beams used for the first control resource set, and the quantity of beams includes 1 or 2; or the third MAC CE indicates the beam used for the first control resource set, and the beam used for the first control resource set includes the first beam and/or the second beam; or
receive the first MAC CE from the second communication device; and determine the type of the first control resource set based on a type of the first MAC CE.

In another possible implementation, the processing module is specifically configured to:
if the first MAC CE is the first-type MAC CE, determine that the first control resource set is a single-beam control resource set; or if the first MAC CE is the second-type MAC CE, determine that the first control resource set is a multi-beam control resource set, where the first-type MAC CE is a MAC CE that indicates a single beam, and the second-type MAC CE is a MAC CE that indicates a plurality of beams.

In another possible implementation, the processing module is specifically configured to:
if the quantity of beams currently used for the first control resource set is 1, determine that the type of the first control resource set is a single-beam control resource set; or
if the quantity of beams currently used for the first control resource set is greater than 1, determine that the type of the first control resource set is a multi-beam control resource set.

In another possible implementation, a quantity of beams currently used for the single-beam resource set is 1, and a quantity of beams currently used for the multi-beam resource set is greater than 1.

In another possible implementation, the communication apparatus includes a network device or a terminal device.

In another possible implementation, the processing module is specifically configured to:
receive second indication information from the second communication device, where the second indication information indicates the first beam and the second beam, the communication apparatus is a terminal device, and the second communication device is a network device.

A seventh aspect of this application provides a communication apparatus, including:
a processing module, configured to: determine a first beam and a second beam, where the first beam and the second beam are beams of a same type; and determine, according to a first rule, a beam used for a first PUCCH, where the beam used for the first PUCCH is the first beam and/or the second beam.

In a possible implementation, if the first PUCCH is a single-beam PUCCH, the processing module is specifically configured to:
determine that the beam used for the first PUCCH is the first beam;
determine that the beam used for the first PUCCH is the second beam; or
if a beam currently used for the first PUCCH and the first beam belong to a same beam set, determine to update the beam currently used for the first PUCCH to the first beam; or if a beam currently used for the first PUCCH and the second beam belong to a same beam set, determine to update the beam currently used for the first PUCCH to the second beam.

In another possible implementation, if the first PUCCH is a multi-beam PUCCH, the processing module is specifically configured to:
determine that the beam used for the first PUCCH is the first beam and the second beam.

In another possible implementation, a transceiver module is configured to receive a fourth MAC CE from a second communication device, where the fourth MAC CE includes an index of the first PUCCH.

The processing module is specifically configured to:
if the fourth MAC CE is a first-type MAC CE, the fourth MAC CE includes fourth beam indication information, and the fourth beam indication information indicates the first beam, determine that at any moment within a second time period, a 1^{st} common beam in two common beams of a same type that become effective at the any moment is used for the first PUCCH, where the second time period is a time interval from an effective time point of a beam, that is indicated by the fourth MAC CE, to an effective time point of a beam indicated by a fifth MAC CE; and the fifth MAC CE is a MAC CE that indicates the beam used for the first PUCCH and that is recently received by the communication apparatus after the fourth MAC CE is received;
if the fourth MAC CE is a first-type MAC CE, the fourth MAC CE includes fourth beam indication information, and the fourth beam indication information indicates the second beam, determine that at any moment within a second time period, a 2^{nd} common beam in two common beams of a same type that become effective at the any moment is used for the first PUCCH; or
if the fourth MAC CE is a second-type MAC CE, the fourth MAC CE includes fifth beam indication information and sixth beam indication information, the fifth beam indication information indicates the first beam, and the sixth beam indication information indicates the second beam, determine that at any moment within a second time period, two common beams of a same type that become effective at the any moment are used for the first PUCCH.

In another possible implementation, the processing module is further configured to:
determine a type of the first PUCCH, where the type of the first PUCCH includes a single-beam PUCCH or a multi-beam PUCCH, a quantity of beams used for a single-beam PUCCH is 1, and a quantity of beams used for a multi-beam PUCCH is greater than 1.

In another possible implementation, the processing module is specifically configured to:
determine the type of the first PUCCH based on a configuration parameter in the first PUCCH;
receive first indication information from the second communication device, where the first indication information indicates whether a plurality of beams are allowed to be used for the first PUCCH, or indicates the type of the first PUCCH;
determine the type of the first PUCCH based on a quantity of beams currently used for the first PUCCH;
receive a sixth MAC CE from the second communication device, where the sixth MAC CE indicates the type of the first PUCCH, or indicates a quantity of beams used for the first PUCCH, and the quantity of beams is 1 or 2, or the sixth MAC CE indicates the beam used for the first PUCCH, and the beam used for the first PUCCH includes the first beam and/or the second beam; or
receive the fourth MAC CE from the second communication device; and determine the type of the first PUCCH based on a type of the fourth MAC CE.

In another possible implementation, the processing module is specifically configured to:
if the fourth MAC CE is a first-type MAC CE, determine that the first PUCCH is a single-beam PUCCH; or if the fourth MAC CE is a second-type MAC CE, determine that the first PUCCH is a multi-beam PUCCH, where the first-type MAC CE is a MAC CE that indicates a single beam, and the second-type MAC CE is a MAC CE that indicates a plurality of beams.

In another possible implementation, if a network device configures two control resource set groups for a terminal device, the processing module is specifically configured to:
if the first PUCCH is associated with a group index of a first control resource set group in the two control resource set groups, determine that the beam used for the first PUCCH is the first beam; or if the first PUCCH is associated with a group index of a second control resource set group in the two control resource set groups, determine that the beam used for the first PUCCH is the second beam, where
the first control resource set group is a control resource set group with a smaller group index in the two control resource set groups, and the second control resource set group is a control resource set group with a larger group index in the two control resource set groups; or the first control resource set group is a control resource set group with a larger group index in the two control resource set groups, and the second control resource set group is a control resource set group with a smaller group index in the two control resource set groups.

In another possible implementation, the communication apparatus includes a network device or a terminal device.

In another possible implementation, the processing module is specifically configured to:
receive second indication information from the second communication device, where the second indication information indicates the first beam and the second beam, the communication apparatus is a terminal device, and the second communication device is a network device.

An eighth aspect of this application provides a communication apparatus, including:
a transceiver module, configured to: determine a first beam and a second beam, where the first beam and the second beam are beams of a same type; and receive third indication information from a second communications device, where the third indication information indicates any one of the following:
the first beam is used for a first shared channel;
the second beam is used for a first shared channel;
the first beam and the second beam are used for a first shared channel; or
the first beam and the second beam are not used for a first shared channel.

In a possible implementation, the third indication information is carried in DCI.

In another possible implementation, if a value of the third indication information is "00", the third indication information indicates that the first beam is used for the first shared channel. If a value of the third indication information is "01", the third indication information indicates that the second beam is used for the first shared channel. If a value of the third indication information is "10", the third indication information indicates that the first beam and the second beam are used for the first shared channel. If a value of the third indication information is "11", the third indication information indicates that the first beam and the second beam are not used for the first shared channel.

In another possible implementation, the communication apparatus includes a network device or a terminal device.

In another possible implementation, the processing module is specifically configured to:
receive second indication information from the second communication device, where the second indication information indicates the first beam and the second beam, the communication apparatus is a terminal device, and the second communication device is a network device.

A ninth aspect of this application provides a communication apparatus, including:
a processing module, configured to: determine a first beam and a second beam, where the first beam and the second beam are beams of a same type; and determine, according to a first rule, a beam used for a first SRS resource, where the beam used for the first SRS resource is the first beam and/or the second beam.

In a possible implementation, if a network device configures two SRS resource sets of a same type for a terminal device, the processing module is specifically configured to:
if the first SRS resource belongs to a corresponding SRS resource in a first SRS resource set in the two SRS resource sets, determine that the beam used for the first SRS resource is the first beam; or if the first SRS resource belongs to a corresponding SRS resource in a second SRS resource set in the two SRS resource sets, determine that the beam used for the first SRS resource is the second beam, where
the first SRS resource set is an SRS resource set with a smaller index in the two SRS resource sets, and the second SRS resource set is an SRS resource set with a larger index in the two SRS resource sets; the first SRS resource set is an SRS resource set with a larger index in the two SRS resource sets, and the second SRS resource set is an SRS resource set with a smaller index in the two SRS resource sets; the first SRS resource set is an SRS resource set with a higher configuration ranking in the two SRS resource sets, and the second SRS resource set is an SRS resource set with a lower configuration ranking in the two SRS resource sets; or the first SRS resource set is an SRS resource set with a lower configuration ranking in the two SRS resource sets, and the second SRS resource set is an SRS resource set with a higher configuration ranking in the two SRS resource sets.

In another possible implementation, if a network device configures one SRS resource set for a terminal device, and the first SRS resource belongs to the SRS resource set, the processing module is specifically configured to:
determine that the beam used for the first SRS resource is the first beam;
determine that the beam used for the first SRS resource is the second beam; or
if a beam currently used for the first SRS resource and the first beam belong to a same beam set, update the beam currently used for the first SRS resource to the first beam; or if a beam currently used for the first SRS resource and the second beam belong to a same beam set, update the beam currently used for the first SRS resource to the second beam.

In another possible implementation, the communication apparatus includes a network device or a terminal device.

In another possible implementation, the processing module is specifically configured to:
receive second indication information from the second communication device, where the second indication information indicates the first beam and the second beam.

A tenth aspect of this application provides a communication apparatus, including:
a processing module, configured to: determine a first beam and a second beam, where the first beam and the second beam are beams of a same type; and determine, according to a first rule, a beam used for a first CSI-RS resource, where the beam used for the first CSI-RS resource is the first beam and/or the second beam.

In a possible implementation, if a network device configures two CSI-RS resource sets of a same type for a terminal device, the processing module is specifically configured to:
if the first CSI-RS resource belongs to a corresponding CSI-RS resource in a first CSI-RS resource set in the two CSI-RS resource sets, determine that the beam used for the first CSI-RS resource is the first beam; or if the first CSI-RS resource belongs to a corresponding CSI-RS resource in a second CSI-RS resource set in the two CSI-RS resource sets, determines that the beam used for the first CSI-RS resource is the second beam, where
the first CSI-RS resource set is a CSI-RS resource set with a smaller index in the two CSI-RS resource sets, and the second CSI-RS resource set is a CSI-RS resource set with a larger index in the two CSI-RS resource sets; the first CSI-RS resource set is a CSI-RS resource set with a larger index in the two CSI-RS resource sets, and the second CSI-RS resource set is a CSI-RS resource set with a smaller index in the two CSI-RS resource sets; the first CSI-RS resource set is a CSI-RS resource set with a higher configuration ranking in the two CSI-RS resource sets, and the second CSI-RS resource set is a CSI-RS resource set with a lower configuration ranking in the two CSI-RS resource sets; or the first CSI-RS resource set is a CSI-RS resource set with a lower configuration ranking in the two CSI-RS resource sets, and the second CSI-RS resource set is a CSI-RS resource set with a higher configuration ranking in the two CSI-RS resource sets.

In another possible implementation, if a network device configures one CSI-RS resource set for a terminal device, and the first CSI-RS resource belongs to the CSI-RS resource set, the processing module is specifically configured to:
determine that the beam used for the first CSI-RS resource is the first beam;
determine that the beam used for the first CSI-RS resource is the second beam;
if a beam currently used for the first CSI-RS resource and the first beam belong to a same beam set, update the beam currently used for the first CSI-RS resource to the first beam; or if a beam currently used for the first CSI-RS resource and the second beam belong to a same beam set, update the beam currently used for the first CSI-RS resource to the second beam.

In another possible implementation, the communication apparatus includes a network device or a terminal device.

In another possible implementation, the processing module is specifically configured to:
receive second indication information from a second communication device, where the second indication information indicates the first beam and the second beam.

On a basis of any one of the sixth aspect to the tenth aspect, in a possible implementation, the first beam and the second beam are two common beams of a same type that are indicated by the network device to the terminal device. The first beam and the second beam include any one of the following:
the first beam is a beam with a smaller index in the two beams, and the second beam is a beam with a larger index in the two beams;
the first beam is a beam corresponding to a smaller TCI field value in the two beams, and the second beam is a beam corresponding to a larger TCI field value in the two beams;
the first beam is a beam with a higher configuration ranking in the two beams, and the second beam is a beam with a lower configuration ranking in the two beams;
the first beam belongs to a first beam set, the second beam belongs to a second beam set, the first beam set and the second beam set are two beam sets of a same type that are configured by the network device for the terminal device, the first beam set is a beam set with a smaller index in the two beam sets of the same type, and the second beam set is a beam set with a larger index in the two beam sets; or the first beam set is a beam set with a higher configuration ranking in the two beam sets of the same type, and the second beam set is a beam set with a lower configuration ranking in the two beam sets;
the first beam belongs to a first beam group, the second beam belongs to a second beam group, the first beam group and the second beam group are two beam groups of a same type that are activated by the network device by using a MAC CE, the first beam group is a beam group with a smaller index in the two beam groups of the same type, and the second beam group is a beam group with a larger index in the two beam groups of the same type; or the first beam group is a beam group with a higher activation ranking in the MAC CE in the two beam groups of the same type, and the second beam group is a beam group with a lower activation ranking in the MAC CE in the two beam groups of the same type;
the first beam is a beam indicated by a 1^{st} TCI field in DCI, and the second beam is a beam indicated by a 2^{nd} TCI field in the DCI; the 1^{st} TCI field corresponds to a first beam group, and the 2^{nd} TCI field corresponds to a second beam group; and the communication apparatus determines the first beam from the first beam group by using a field value of the 1^{st} TCI field, and determines the second beam from the second beam group by using a field value of the 2^{nd} TCI field;
the first beam is a beam corresponding to a first part of field values in all field values of a TCI field in DCI, and the second beam is a beam corresponding to a second part of field values in all the field values of the TCI field in the DCI; the first part of field values corresponds to a beam group, and the second part of field values corresponds to a second beam group; and the communication apparatus determines the first beam from the first beam group by using the first part of field values, and determines the second beam from the second beam group by using the second part of field values;
the first beam and the second beam are two beams of a same type that are indicated by a same TCI field in DCI, the first beam is a 1^{st} beam in the two beams of the same type that are indicated by the same TCI field, and the second beam is a 2^{nd} beam in the two beams of the same type that are indicated by the same TCI field;
the first beam is a beam with a higher activation ranking in a MAC CE in two beams of a same type, and the second beam is a beam with a lower activation ranking in the MAC CE in the two beams of the same type; or
the first beam is a beam indicated by first DCI, the second beam is a beam indicated by second DCI, the first DCI is DCI carried on a PDCCH corresponding to a first control resource set group in two control resource set groups configured by the network device for the terminal device, the second DCI is DCI carried on a PDCCH corresponding to a second control resource set group in the two control resource set groups, the first control resource set group is a control resource set group with a smaller group index in the two control resource set groups, and the second control resource set group is the control resource set group with a larger group index in the two control resource set groups; or a value of a field or a value of a part of bits of a field in the first DCI is a first value, and a value of a field or a value of a part of bits of a field in the second DCI is a second value.

In the foregoing implementation, some possible manners of distinguishing between the first beam and the second beam are shown, so that the communication apparatus distinguishes two beams of a same type that are indicated by the network device. For example, in a multi-site transmission scenario, the first beam and the second beam may be beams used by two different sites. Specifically, the first beam and the second beam may be indicated in any one of the manners shown above.

An eleventh aspect of this application provides a communication apparatus. The communication apparatus includes a processor and a memory. The memory stores a computer program or computer instructions. The processor is configured to invoke and run the computer program or the computer instructions stored in the memory, to enable the processor to implement any implementation of any one of the first aspect to the fifth aspect.

Optionally, the communication apparatus further includes a transceiver. The processor is configured to control the transceiver to receive and send signals.

A twelfth aspect of this application provides a communication apparatus. The communication apparatus includes a processor. The processor is configured to invoke a computer program or computer instructions in a memory, to enable the processor to implement any implementation of any one of the first aspect to the fifth aspect. Alternatively, the processor is configured to perform any implementation of any one of the first aspect to the fifth aspect.

Optionally, the communication apparatus further includes a transceiver. The processor is configured to control the transceiver to receive and send signals.

A thirteenth aspect of this application provides a communication apparatus. The communication apparatus includes a processor. The processor is configured to perform any implementation of any one of the first aspect to the fifth aspect.

A fourteenth aspect of this application provides a computer program product including instructions. When the computer program product runs on a computer, the computer is enabled to perform any implementation of any one of the first aspect to the fifth aspect.

A fifteenth aspect of this application provides a computer-readable storage medium, including computer instructions. When the instructions are run on a computer, the computer is enabled to perform any implementation of any one of the first aspect to the fifth aspect.

A sixteenth aspect of this application provides a chip apparatus, including a processor, configured to invoke a computer program or computer instructions in a memory, to enable the processor to perform any implementation of any one of the first aspect to the fifth aspect.

Optionally, the processor is coupled to the memory through an interface.

It can be learned from the foregoing technical solutions that embodiments of this application have the following advantages.

It can be learned from the foregoing technical solutions that the first communication device determines the first beam and the second beam, the first beam and the second beam are the beams of the same type, and the first beam and the second beam are the two beams indicated by the network device to the terminal device. The first communication device determines, according to the first rule, the beam used for the first control resource set, where the beam used for the first control resource set is the first beam and/or the second beam. It can be learned that, according to the technical solutions of this application, the first communication device can determine, from the first beam and the second beam according to the first rule, the beam used for the first control resource set. In this way, the first communication device can correctly apply a beam, that is indicated by the network device, to a channel corresponding to a control resource set, so that the channel corresponding to the control resource set is transmitted through the correct beam, to improve communication transmission performance. For example, in the multi-site transmission scenario, the first communication device determines, according to the technical solutions of this application, to correctly apply the first beam and the second beam to the corresponding physical downlink control channel, to implement multi-site transmission.

### BRIEF DESCRIPTION OF DRAWINGS

FIG. 1 is a schematic diagram of a communication system according to an embodiment of this application;
FIG. 2 is another schematic diagram of a communication system according to an embodiment of this application;
FIG. 3 is a schematic diagram of a structure of a MAC CE that is for activating a TCI and to which a beam usage method is applicable according to an embodiment of this application;
FIG. 4 is a schematic diagram of an embodiment of a beam usage method according to an embodiment of this application;
FIG. 5 is a schematic diagram of a scenario of a beam usage method according to an embodiment of this application;
FIG. 6 is a schematic diagram of another embodiment of a beam usage method according to an embodiment of this application;
FIG. 7 is a schematic diagram of another embodiment of a beam usage method according to an embodiment of this application;
FIG. 8 is a schematic diagram of another embodiment of a beam usage method according to an embodiment of this application;
FIG. 9 is a schematic diagram of another embodiment of a beam usage method according to an embodiment of this application;
FIG. 10 is a schematic diagram of a structure of a communication apparatus according to an embodiment of this application;
FIG. 11 is a schematic diagram of another structure of a communication apparatus according to an embodiment of this application;
FIG. 12 is a schematic diagram of another structure of a communication apparatus according to an embodiment of this application;
FIG. 13 is a schematic diagram of another structure of a communication apparatus according to an embodiment of this application; and
FIG. 14 is a schematic diagram of another structure of a communication apparatus according to an embodiment of this application.

### DESCRIPTION OF EMBODIMENTS

Embodiments of this application provide a beam usage method and a related apparatus, so that a first communication device determines, according to a first rule, a beam used for a first control resource set. In this way, the first communication device correctly applies a beam, that is indicated by a network device, to a channel corresponding to a control resource set, so that the channel corresponding to the control resource set is transmitted through the correct beam, to improve communication transmission performance.

The following describes the technical solutions in this application with reference to the accompanying drawings.

The technical solutions of this application may be applied to various communication systems, for example, a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a mobile communication system (for example, a 6G mobile communication system) after a 5G network, or a vehicle-to-everything (vehicle to everything, V2X) communication system.

A communication system to which this application is applicable includes a first communication device. The first communication device is a terminal device or a network device. Optionally, if the first communication device is a terminal device, the communication system further includes a second communication device. The second communication device is a network device. Unless otherwise specified in the following descriptions, the first communication device may be understood as a terminal device or a network device.

The following describes the terminal device and the network device in this application.

The terminal device may be a wireless terminal device that can receive scheduling and indication information from the network device. The terminal device may be a device that provides voice and/or data connectivity for a user, a handheld device having a wireless connection function, or another processing device connected to a wireless modem.

The terminal device is also be referred to as user equipment (user equipment, UE), a mobile station (mobile station, MS), a mobile terminal (mobile terminal, MT), or the like. The terminal device is a device that includes a wireless communication function (providing voice/data connectivity for the user), for example, a handheld device or a vehicle-mounted device having the wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. For example, the wireless terminal in the internet of vehicles may be a vehicle-mounted device, an entire vehicle device, a vehicle-mounted module, a vehicle, or the like. The wireless terminal in industrial control may be a camera, a robot, or the like. The wireless terminal in the smart home may be a television, an air conditioner, a floor sweeper, a speaker, a set-top box, or the like.

The network device may be a device in a wireless network. For example, the network device may be a device deployed in a radio access network to provide a wireless communication function for the terminal device. For example, the network device may be a radio access network (radio access network, RAN) node that enables the terminal device to access the wireless network, and may also be referred to as an access network device.

The network device includes but is not limited to an evolved NodeB (evolved Node B, eNB), a radio network controller (radio network controller, RNC), a NodeB (Node B, NB), a base station controller (base station controller, BSC), a base transceiver station (BTS), a home base station (for example, a home evolved NodeB or a home NodeB, HNB), a baseband unit (baseband unit, BBU), an access point (access point, AP) in a wireless fidelity (wireless fidelity, WIFI) system, a wireless relay node, a wireless backhaul node, a transmission point (transmission point, TP), a transmission and reception point (transmission and reception point, TRP), and the like, or may be a network device in a 5G mobile communication system, for example, a next generation base station (next generation NodeB, gNB), a transmission reception point (transmission reception point, TRP), or a TP in the NR system, or one or one group of antenna panels (including a plurality of antenna panels) of a base station in a 5G mobile communication system. Alternatively, the network device may be a network node that forms a gNB or a transmission point, for example, a BBU or a distributed unit (distributed unit, DU).

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of the radio link control (radio link control, RLC) layer, a MAC layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or the CU may be classified as a network device in a core network (core network, CN). This is not limited in this application.

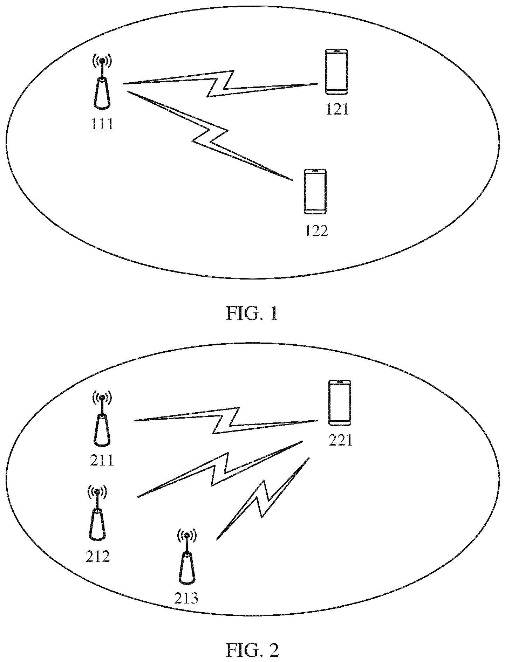

For ease of understanding the technical solutions in embodiments of this application, with reference to FIG. 1 and FIG. 2, the following shows two possible communication systems to which a beam usage method provided in embodiments of this application is applicable.

FIG. 1 is a schematic diagram of a communication system according to an embodiment of this application. As shown in FIG. 1, the communication system includes at least one network device, for example, a network device 111 shown in FIG. 1. The communication system further includes at least one terminal device, for example, a terminal device 121 and a terminal device 122 that are shown in FIG. 1. The network device 111 may perform transmission with the terminal device 121 and the terminal device 122 through a beam.

FIG. 2 is another schematic diagram of a communication system according to an embodiment of this application. As shown in FIG. 2, the communication system may include at least two network devices, for example, a network device 211, a network device 212, and a network device 213 that are shown in FIG. 2. The communication system further includes at least one terminal device, for example, a terminal device 221 shown in FIG. 2. A plurality of network devices may provide communication services for the terminal device 221. For example, as shown in FIG. 2, the network device 211 may perform transmission with the terminal device 221 through a beam 1. The network device 212 may perform transmission with the terminal device 221 through a beam 2. The network device 213 may perform transmission with the terminal device 221 through a beam 3. In other words, a plurality of network devices may all provide communication services for one terminal device.

For ease of understanding the technical solutions of this application, the following describes some technical terms in this application.
1. Beam (beam): A beam is a communication resource. The beam may be a wide beam, a narrow beam, or another type of beam. A beam forming technology may be a beamforming technology or another technical means. The beamforming technology may be specifically a digital beamforming technology, an analog beamforming technology, or a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a TCI-state parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (including an uplink TCI-state and a downlink TCI-state), the spatial relation, or the like. The foregoing terms are also equivalent to each other. The beam may alternatively be replaced with another term for representing the beam. This is not limited in this application.

A beam used to send a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). The transmission beam may be indicated by using a TCI-state.

A beam used to receive a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

The transmission beam and the reception beam each may be indicated by using any one of a spatial relation, a TCI-state, and an SRS resource (indicating a transmission beam for which an SRS is used). Therefore, the transmission beam may alternatively be replaced with the SRS resource.

The transmission beam may mean a distribution of signal strength formed in different directions in space after a signal is transmitted through an antenna. The reception beam may mean a distribution of signal strength, in different directions in space, of a radio signal received through an antenna.

In addition, the beam may be a wide beam, a narrow beam, or another type of beam. A beam forming technology may be the beamforming technology or another technology. The beamforming technology may be specifically the digital beamforming technology, the analog beamforming technology, the hybrid digital beamforming technology, the hybrid analog beamforming technology, or the like.

The beam generally corresponds to a resource. For example, when performing beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a PDSCH beam of the terminal device by using a TCI field in DCI.

In a possible implementation, a plurality of beams having a same or similar communication feature are considered as one beam. One beam may include one or more antenna ports, configured to transmit a data channel, a control channel, a sounding signal, and the like. The one or more antenna ports forming the beam may also be considered as one antenna port set.

### 2. Transmission configuration indicator state (transmission configuration indicator state, TCI-state)

The TCI-state indicates a downlink beam. A network device may generate different beams that point to different transmission directions. In downlink data transmission, when sending data to a terminal device by using a specified beam, the network device needs to notify the terminal device of information about the transmission beam used by the network device. In this way, the terminal device can receive, by using a reception beam corresponding to the transmission beam, the data sent by the network device. In the 3rd generation partnership project release 15 (3rd generation partnership project release 15, 3GPP R15) protocol or the 3GPP R16 protocol, the network device indicates, to the terminal device by using a TCI field in DCI, related information of the transmission beam used by the network device. Specifically, a size of the TCI field is 3 bits that may specifically indicate eight different field values (code points). Each value of the TCI field corresponds to one TCI-state index, and the TCI-state index may uniquely identify one TCI-state. The TCI-state includes several parameters, and the related information of the transmission beam may be determined by using these parameters. A TCI-state is configured by the network device for each terminal device. A structure of the TCI-state is shown as follows.

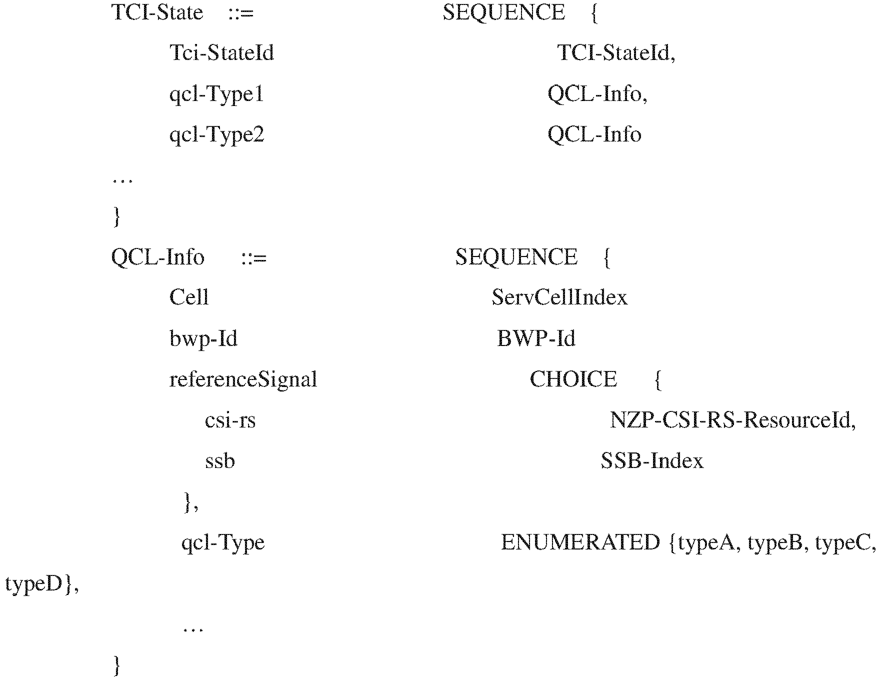

Each TCI-state includes an index Tci-StateId of the TCI-state, and two pieces of QCL-Info. Each piece of QCL-Info includes a cell (cell) field and a bwp-Id that respectively indicate which cell and which bandwidth part (bandwidth part, BWP) the TCI-state is applied to. To be specific, different QCL-Info may be configured for different BWPs of different cells or a same cell. The QCL-Info further includes a reference signal (reference signal) that indicates forming a quasi-colocation relationship with a specific reference signal resource. In the 3GPP R15 protocol or the 3GPP R16 protocol, a beam is generally replaced with another term. For example, in both data transmission and channel measurement, the beam corresponds to a reference signal resource, and one beam corresponds to one reference signal resource. Therefore, indicating forming the QCL relationship with the specific reference signal resource herein essentially means forming a QCL relationship with a specific beam. A QCL relationship means that two reference signal resources (or two antenna ports, where the antenna ports and the reference signal resources are also in a one-to-one correspondence) have same spatial parameters. Which specific spatial parameters are the same depends on a type of the QCL-Info, namely, another field qcl-Type of the QCL-Info. There may be four values of the qcl-Type: {typeA, typeB, typeC, typeD}. Herein, typeD is used as an example. Herein, typeD indicates that the two reference signal resources have same spatial reception parameter information. To be specific, two beams have a same reception beam. There is at most one piece of QCL-Info whose type is typeD in the two pieces of QCL-Info included in the TCI-state.

The following uses an example to specifically describe how the network device indicates reception beam information of a data transmission beam to a terminal device by using a TCI-state and based on the 3GPP R15 protocol or 3GPP R16 protocol, including TCI-state configuration, activation, and indication.

TCI-state configuration: The network device configures a plurality of TCI-states for the terminal device by using RRC signaling. These TCI-states each include a piece of QCL-Info whose type is typeD. The network device may alternatively configure a TCI-state that does not include QCL-info whose type is typeD. However, these TCI-states do not indicate the data transmission beam. Therefore, further descriptions are not provided herein.

TCI-state activation: After configuring the plurality of TCI-states, the network device further needs to activate eight of the TCI-states by using a MAC CE. The eight TCI-states are in a one-to-one correspondence with eight values of the TCI field in the DCI. In other words, which eight TCI-states correspond to the eight values of the TCI field in the DCI is determined by using the MAC CE.

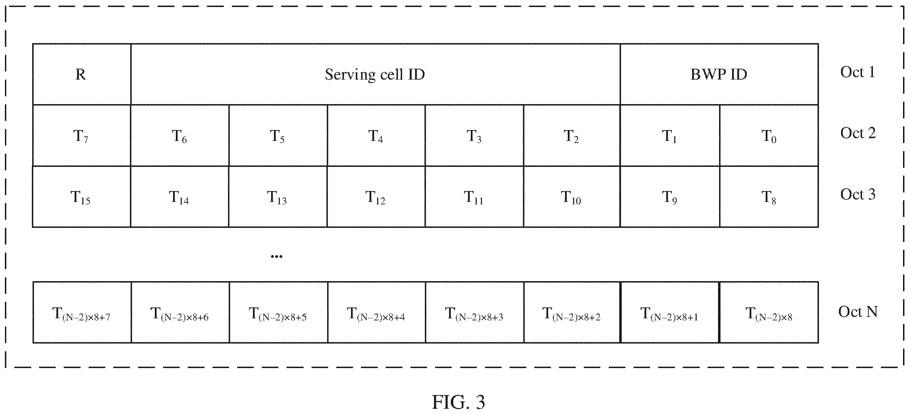

FIG. 3 is a schematic diagram of a structure of a MAC CE that is for activating the TCI state and to which an embodiment of this application is applicable. As shown in FIG. 3, Fields T0 to T(R-2)×8+07 respectively correspond to TCI-states whose indexes are 0 to (R-2)×8+7 and that are configured in the first step, each field has a size that is 1 bit and a value that may be 0 or 1. The value that is 1 indicates that the TCI-state is to be activated, and the value that is 0 indicates that the TCI-state is not to be activated. Theoretically, each MAC CE may have eight activation fields whose values are 1, and values of remaining fields are all 0. TCI-states corresponding to the eight fields whose values are 1 are eight TCI-states corresponding to the eight values of the TCI field in the DCI. For example, a smallest value (000) of the TCI field corresponds to an activated TCI-state with a smallest index in the MAC CE, and so on. The values and the TCI-states are in a one-to-one correspondence. There are many types of MAC CEs. In addition to the MAC CE for activating the TCI-state, there are still many MAC CEs for other purposes. This application relates only to the MAC CE for activating the TCI-state or a TCI-state combination. Therefore, unless otherwise specified, the MAC CE in this application is such a MAC CE.

TCI-state indication: The network device indicates a specific TCI-state by using the TCI field in the DCI. For example, a value of the TCI field in the DCI sent by the network device to the terminal device is 000, which indicates a TCI-state that corresponds to 000 and that is used for the data transmission beam. A reference signal included in QCL-Info whose type is typeD in the TCI-state is a CSI-RS whose index is #1, which indicates that the data transmission beam is the same as a reception beam corresponding to the CSI-RS whose index is #1. The reception beam corresponding to the CSI-RS whose index is #1 may be determined in a beam measurement procedure, and is known to the terminal device. Therefore, the terminal device may determine, by using a specific value of the TCI field, the reception beam corresponding to the data transmission beam, to receive the data through the corresponding reception beam. It should be noted that two description manners, namely, the TCI-state and the TCI state, in this specification may be replaced with each other.

### 3. Spatial relation (indicating an uplink beam)

In a current communication protocol, a transmission beam for uplink transmission is indicated by using the spatial relation. The spatial relation has a function similar to that of a TCI-state, and notifies a terminal device of the transmission beam used for uplink transmission.

The spatial relation also needs to be first configured through RRC. A configuration structure of the spatial relation is as follows.

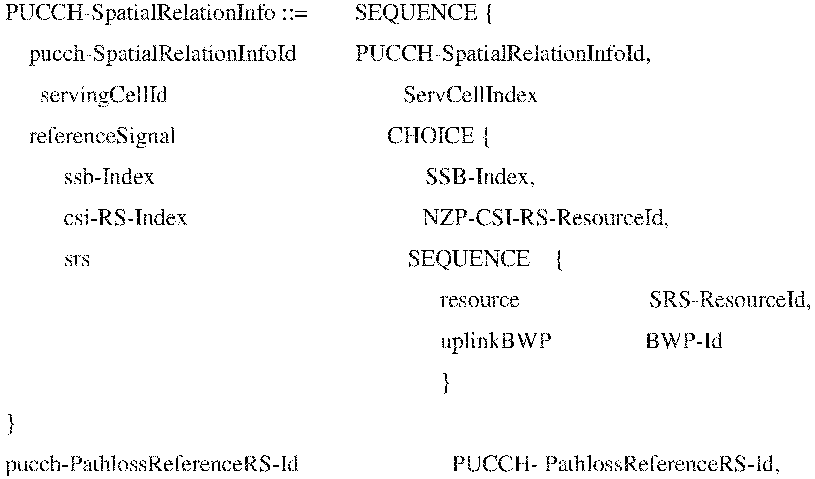

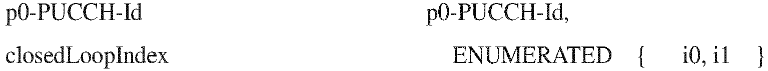

The configuration structure includes an identifier of the spatial relation, a cell identifier, a target reference signal resource, a path loss measurement reference signal, a power control parameter, and the like. The target reference signal resource (which may be any one of an SRS, a synchronization signal and physical broadcast channel block (synchronization signal and physical broadcast channel block, SSB), and a CSI-RS) indicates the corresponding uplink beam. If a spatial relation #1 is used for uplink transmission, and the spatial relation #1 includes a target reference signal resource #2, it indicates that the transmission beam used for uplink transmission is a transmission beam or a reception beam of the target reference signal. For example, when the target reference signal resource is an uplink resource SRS, it indicates that the transmission beam used for uplink transmission is a transmission beam of the SRS (the transmission beam of the SRS is known). For another example, the target reference signal resource is a downlink resource like an SSB or a CSI-RS, which indicates that the transmission beam used for uplink transmission is a reception beam of the SSB or a reception beam of the CSI-RS (the reception beam of the SSB or the reception beam of the CSI-RS is known).

A network device may configure a plurality of spatial relations for the terminal device. Then, one of the spatial relations is activated for corresponding data transmission by using a MAC CE. Uplink transmission includes transmission of a PUCCH, transmission of the SRS, transmission of a PUSCH, and the like, which each require a corresponding spatial relation. A spatial relation of the PUCCH is indicated by using MAC CE signaling. A spatial relation of the SRS is also indicated by using MAC CE signaling. The PUSCH is associated with a specific SRS during transmission, and is transmitted by using a spatial relation of the SRS.

### 4. Antenna panel (panel)

The panel is an antenna panel, and may be an antenna panel of a network device, or may be an antenna panel of a terminal device. There are generally one or more antennas on one antenna panel. These antennas are arranged into an antenna array, to perform beamforming, so as to form an analog beam. The antenna array may generate analog beams pointing to different directions. In other words, a plurality of analog beams may be formed on each antenna panel, and which analog beam is best used for the antenna panel may be determined through beam measurement. The terminal device may be equipped with a plurality of antenna panels. These antenna panels may be distributed in different positions, and face different directions. This can ensure that at least one antenna panel faces the network device regardless of which direction the terminal device faces, and the terminal device can perform data transmission with the network device. The terminal device may enable all the antenna panels for transmission at the same time. Alternatively, to reduce power consumption of the terminal device, the terminal device may perform transmission by using only one antenna panel at a time, and another unused antenna panel may be closed. Whether the antenna panel of the terminal device is in an enabled state or a disabled state generally needs to be notified to the network device. In other words, the terminal device and the network device generally need to exchange status information of the antenna panel.

In embodiments of this application, unless otherwise specified, each antenna panel is the antenna panel of the terminal device. The antenna panel may also be indicated by using an antenna panel index (panel index) or the like. In addition, the antenna panel may alternatively be implicitly indicated in another manner. For example, the antenna panel may alternatively be indicated by using an antenna port (for example, a CSI-RS port, an SRS port, a demodulation reference signal (demodulation reference signal, DMRS) port, a phase tracking reference signal (phase tracking reference signal, PTRS) port, a CRS port, a time-frequency tracking reference signal (tracking reference signal, TRS) port, or an SSB port) or an antenna port group, may alternatively be indicated by using a resource (for example, a CSI-RS resource, an SRS resource, a DMRS resource, a PTRS resource, a cell reference signal (cell reference signal, CRS) resource, a TRS resource, or an SSB resource) or a resource group, may be alternatively indicated by using a channel (for example, a PUCCH, a PUSCH, or a physical random access channel (physical random access channel, PRACH), a PDSCH, a PDCCH, or a physical broadcast channel (physical broadcast channel, PBCH)), may alternatively be indicated through a beam, QCL, a TCI-state, a spatial relation, or an index configured in QCL, a TCI-state, or a spatial relation, and may alternatively be indicated through a beam group, a QCL group, a TCI-state group, or a spatial relation group. In other words, an identifier of the antenna panel/panel in this application may be replaced with an identifier of the foregoing content.

### 5. Common beam

Currently, a separate beam indication is used for each channel. For example, a beam of a PDCCH and a beam of a PDSCH are indicated by using TCI-states, and a beam of a PUCCH and a beam of a PUSCH are indicated by using spatial relations. Each channel has a respective corresponding beam. In this application, a common beam is defined, and is for all of a plurality of uplink and/or downlink channels.

The common beam is a same beam jointly used for a plurality of channels, a plurality of types of channels, a plurality of reference signals, and/or a plurality of types of reference signals. The plurality of channels or the plurality of types of channels include but are not limited to at least one of the following channels: the PDCCH, the PDSCH, the PUCCH, the PUSCH, and a PRACH. The reference signal includes but is not limited to at least one of the following signals: an SSB, a CSI-RS, a DMRS, a PTRS, a TRS, an SRS, and the like.

For example, the common beam may be specifically classified into the following three types.

A joint (joint) common beam is for transmitting both at least one uplink channel or reference signal and at least one downlink channel or reference signal, for example, the PDCCH, the PDSCH, the PUCCH, and the PUSCH. The joint common beam may also be referred to as an uplink and downlink common beam.

An uplink common beam is for transmitting all of a plurality of uplink channels, and/or is for transmitting all of a plurality of types of uplink channels, and/or is for transmitting all of one or more uplink reference signals, for example, PUCCHs, PUSCHs, and the SRS.

A downlink common beam is for transmitting all of a plurality of downlink channels, and/or is for transmitting all of a plurality of types of downlink channels, and/or is for transmitting all of one or more downlink reference signals, for example, PDCCHs, PDSCHs, and the CSI-RS.

Unless otherwise specified, the common beam mentioned subsequently may be any one of the three types of common beams.

In this application, a network device may indicate at least two common beams of a same type to a terminal device, for example, a first beam and a second beam in the following descriptions are two common beams of a same type. For example, the first beam and the second beam are two uplink and downlink common beams, two uplink common beams, or two downlink common beams. A type of the first beam and the second beam should be specifically understood with reference to a specific embodiment.

Form of the common beam: The common beam may be a newly defined structure (different from an existing structure of a TCI-state and a spatial relation). For example, the common beam includes related information of a beam indication, including but not limited to one or more of the following: a common beam identifier (identifier, ID), a logical cell ID (cell ID), a physical cell ID, a bandwidth part ID, a reference signal resource for determining a beam, a QCL type, and an uplink power control related parameter (for example, a path loss measurement reference signal resource, p0, or a closed loop index (closedLoopIndex)).

Application range of the common beam: The common beam may be at a level of a cell. To be specific, one common beam is for transmission of a plurality of channels within a cell. The common beam may be at a level of a BWP, and for transmission of a plurality of beams within one BWP. The common beam may alternatively be cross-cell, that is, for transmission of a plurality of channels within a plurality of cells. The plurality of cells may be a plurality of cells within one band (band). The plurality of cells may alternatively be a plurality of cross-band cells. The common beam may be at a level of a control resource set (control-resource set, CORESET). To be specific, a same common beam is used for all PDCCHs corresponding to the CORESET, and/or all PDSCHs scheduled by the PDCCH of the CORESET, and/or all PUSCHs scheduled by the PDCCH of the CORESET, and/or a PUCCH or a PUSCH that transmits feedback information (ACK or NACK) of the PDSCH scheduled by the PDCCH of the CORESET.

The common beam is also indicated by using a TCI-state or a spatial relation. For example, the downlink common beam is indicated by using a TCI-state. The uplink common beam is indicated by using a spatial relation.

In other words, the common beam in this application may be embodied in a protocol in a form of the TCI-state, the spatial relation, another parameter indicating an uplink transmission beam, or another parameter indicating a downlink transmission beam.

Compared with the common beam, a beam, for example, the TCI-state, the spatial relation, or a spatial filter, that is defined in the 3GPP R15 protocol and the 3GPP R16 protocol is referred to as an ordinary beam. The common beam is for transmission of a single channel, and cannot be for transmission of a plurality of channels or a plurality of reference signals at the same time. The network device needs to separately indicate an ordinary beam for each channel for transmission. However, in the technical solutions of this application, the network device may indicate at least two common beams of a same type to the terminal device. The common beam is a same beam jointly used by a plurality of channels or a plurality of signals. Therefore, a corresponding beam may be collectively indicated for the plurality of channels or the plurality of signals. This efficiently performs beam indication, avoids a complex indication instruction, and saves additional overheads.
6. A control resource set indicates a frequency domain resource set for PDCCH transmission, is a parameter configuration unit for PDCCH transmission, and includes a related configuration parameter of a PDCCH.
7. A control resource set group includes at least one control resource set. Each control resource set group corresponds to one group index (CORESETPoolIndex). A configuration parameter of the control resource set includes a group index that indicates the control resource set group corresponding to the control resource set.
8. Search space indicates a time domain position set for PDCCH transmission and time-frequency positions corresponding to a plurality of PDCCH resources within the search space. For example, the search space defines a PDCCH transmission cycle, namely, a cycle of a PDCCH occasion within the search space. A PDCCH may actually be understood as a detection point or a detection time period of the PDCCH in time domain. For example, one time unit is a slot. One PDCCH transmission cycle includes P slots. Further, the search space indicates an offset value of a start slot of the PDCCH transmission cycle. For example, if the offset value is S, one PDCCH transmission period corresponds to one time window, a start slot number is S+P×n, and an end slot number is S+P×(n+1)-1, where n is a positive integer, and P is a positive integer. Further, the search space indicates which consecutive slots within the PDCCH transmission cycle have the PDCCH occasion and which symbols within these slots have the PDCCH occasion.

In this application, a network device indicates at least two beams of a same type to a terminal device. The at least two beams of the same type may be at least two downlink common beams, at least two uplink common beams, or at least two uplink and downlink common beams. If the at least two beams of the same type are downlink common beams, the at least two beams of the same type may be for transmitting a PDCCH, a PDSCH, and/or a CSI-RS. If the at least two beams of the same type are uplink common beams, the at least two beams of the same type may be for transmitting a PUCCH, a PUSCH, and/or an SRS. If the at least two beams of the same type are uplink and downlink common beams, the at least two beams of the same type may be for transmitting a PDCCH, a PDSCH, a CSI-RS, a PUCCH, a PUSCH, and/or an SRS. In the following embodiments, an example in which the network device indicates a first beam and a second beam to the terminal device is for describing a solution in which a first communication device correctly applies a beam, that is indicated by the network device, to transmission of a corresponding channel or reference signal.

The following describes the technical solutions of this application with reference to specific embodiments.

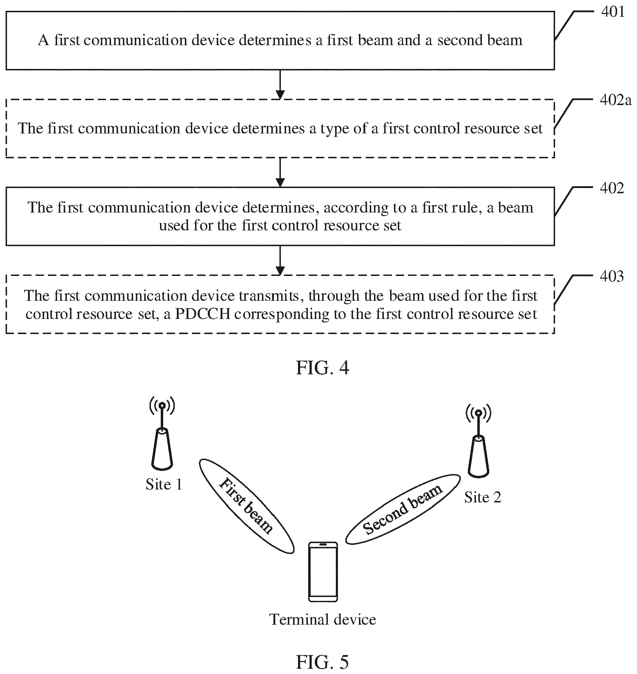

FIG. 4 is a schematic diagram of an embodiment of the beam usage method according to an embodiment of this application. Refer to FIG. 4. The beam usage method includes the following steps.

401: The first communication device determines the first beam and the second beam.

The first beam and the second beam are two beams indicated by the network device to the terminal device. For example, the first beam and the second beam are two beams indicated by the network device to the terminal device by using DCI.

The first beam and the second beam are two common beams of a same type. In the embodiment shown in FIG. 4, the first beam and the second beam are two downlink common beams, or the first beam and the second beam are two uplink and downlink common beams. The first communication device includes a terminal device or a network device.

In some implementations, in this application, the first beam and the second beam may be beams used by a same site. Alternatively, the first beam and the second beam are beams used by different sites. For example, as shown in FIG. 5, in a scenario in which the terminal device performs transmission with a plurality of sites, a site 1 performs transmission with the terminal device through the first beam, and a site 2 performs transmission with the terminal device through the second beam.

The following describes some manners of distinguishing between the first beam and the second beam. Optionally, the first beam and the second beam include any one of the following.
1. The first beam is a beam with a smaller index in the two beams, and the second beam is a beam with a larger index in the two beams; or the first beam is a beam with a larger index in the two beams, and the second beam is a beam with a smaller index in the two beams.
2. The first beam is a beam corresponding to a smaller TCI field value in the two beams, and the second beam is a beam corresponding to a larger TCI field value in the two beams; or the first beam is a beam corresponding to a larger TCI field value in the two beams, and the second beam is a beam corresponding to a smaller TCI field value in the two beams.

Specifically, the network device indicates the beam to the terminal device by using a TCI field in the DCI. For example, the network device sends two pieces of DCI. DCI with a smaller value of a TCI field indicates the first beam, and DCI with a larger value of a TCI field indicates the second beam. In other words, a value of the TCI field that indicates the first beam is less than a value of the TCI field that indicates the second beam. Alternatively, DCI with a larger value of a TCI field indicates the first beam, and DCI with a smaller value of a TCI field indicates the second beam. In other words, a value of the TCI field that indicates the first beam is greater than a value of the TCI field that indicates the second beam.

3. The first beam is a beam with a higher configuration ranking in the two beams, and the second beam is a beam with a lower configuration ranking in the two beams; or the first beam is a beam with a lower configuration ranking in the two beams, and the second beam is a beam with a higher configuration ranking in the two beams.

Specifically, a configuration ranking of a beam may be understood as an arrangement ranking of the beam in a beam list configured by the network device for the terminal device. The beam list includes a plurality of beams of a same type that are configured by the network device for the terminal device, and specifically includes the first beam and the second beam. For example, the beam list is a beam list {beam 0, beam 2, beam 3}. A configuration ranking of the beam 0 is the highest, and a configuration ranking of the beam 3 is the lowest.

4. The first beam belongs to a first beam set, and the second beam belongs to a second beam set. The first beam set and the second beam set are two beam sets of a same type that are configured by the network device for the terminal device.

Optionally, the first beam set is a beam set with a smaller index in the two beam sets of the same type, and the second beam set is a beam set with a larger index in the two beam sets of the same type. Alternatively, the first beam set is a beam set with a larger index in the two beam sets of the same type, and the second beam set is a beam set with a smaller index in the two beam sets of the same type. Alternatively, the first beam set is a beam set with a higher configuration ranking in the two beam sets of the same type, and the second beam set is a beam set with a lower configuration ranking in the two beam sets of the same type. Alternatively, the first beam set is a beam set with a lower configuration ranking in the two beam sets of the same type, and the second beam set is a beam set with a higher configuration ranking in the two beam sets of the same type.

5. The first beam belongs to a first beam group, and the second beam belongs to a second beam group. The first beam group and the second beam group are two beam groups of a same type that are activated by the network device for the terminal device by using a MAC CE.

Optionally, the first beam group is a beam group with a smaller index in the two beam groups of the same type, and the second beam group is a beam group with a larger index in the two beam groups of the same type. Alternatively, the first beam group is a beam group with a higher activation ranking in the MAC CE in the two beam groups of the same type, and the second beam group is a beam group with a lower activation ranking in the MAC CE in the two beam groups of the same type. Alternatively, the first beam group is a beam group with a lower activation ranking in the MAC CE in the two beam groups of the same type, and the second beam group is a beam group with a higher activation ranking in the MAC CE in the two beam groups of the same type.

6. The first beam is a beam indicated by the network device by using a 1^{st} TCI field in the DCI, and the second beam is a beam indicated by the network device by using a 2^{nd} TCI field in the DCI. The 1^{st} TCI field corresponds to a first beam group, and the 2^{nd} TCI field corresponds to a second beam group. The first communication device determines the first beam from the first beam group by using a field value of the 1^{st} TCI field, and determines the second beam from the second beam group by using a field value of the 2^{nd} TCI field. The 2^{nd} TCI field does not always exist, and whether the 2^{nd} TCI field exists in the DCI is determined by configuration information. For example, the 2^{nd} TCI field does not exist when two control resource set groups are configured. For another example, the 2^{nd} TCI field exists when a single control resource set group is configured and two common beams of a same type are configured.

Specifically, the DCI includes a plurality of TCI fields. The TCI fields in the DCI are sequentially interpreted. A TCI field that is first read may be considered as the 1^{st} TCI field in the DCI. A TCI field that is second read may be considered as the 2^{nd} TCI field in the DCI. The beam indicated by the 1^{st} TCI field in the DCI is the first beam, and the beam indicated by the 2^{nd} TCI field in the DCI is the second beam.

Optionally, the 1^{st} TCI field and the 2^{nd} TCI field in the DCI may be understood as two different subfields in a same TCI field, or a former part of bits and a latter part of bits in a same TCI field.

7. The first beam is a beam corresponding to a first part of field values in all field values of a TCI field in the DCI transmitted by the network device, and the second beam is a beam corresponding to a second part of field values in all the field values of the TCI field in the DCI transmitted by the network device. The first part of field values corresponds to a beam group, and the second part of field values corresponds to a second beam group. The first communication device determines the first beam from the first beam group by using the first part of field values, and determines the second beam from the second beam group by using the second part of field values.

Specifically, all field values of a TCI field in the DCI are divided into two parts, including a first part of field values and a second part of field values. Optionally, the first part of field values are a part of smaller field values, and the second part of field values are a part of larger field values. For example, the first part of field values are a field value 0 to a field value 3, and the second part of field values are a field value 4 to a field value 7. Alternatively, the first part of field values are an even-numbered field value, and the second part of field values are an odd-numbered field value. For example, the first part of field values are an even number, and the second part of field values are an odd number. Alternatively, the first part of field values are an odd-numbered field value, and the second part of field values are an even-numbered field value. In other words, if a value of a TCI field in a piece of DCI is a first part of field values, it indicates that the DCI indicates the first beam. If a value of a TCI field in a piece of DCI is a second part of field values, it indicates that the DCI indicates the second beam.

8. The first beam and the second beam are two beams of a same type that are indicated by the network device by using a same TCI field in the DCI, where the first beam is a 1^{st} beam in the two beams of the same type that are indicated by the same TCI field. The second beam is a 2^{nd} beam in the two beams of the same type that are indicated by the same TCI field; the first beam is a beam with a higher activation ranking in a MAC CE in the two beams of the same type, and the second beam is a beam with a lower activation ranking in the MAC CE in the two beams of the same type; or the first beam is a beam with a lower activation ranking in the MAC CE in the two beams of the same type, and the second beam is a beam with a higher activation ranking in the MAC CE in the two beams of the same type.

9. The first beam is a beam indicated by first DCI, and the second beam is a beam indicated by second DCI.

In a possible implementation, the first DCI is used by the network device to indicate the first beam to the terminal device, and the second DCI is used by the network device to indicate the second beam to the terminal device. A value of a first field in the first DCI indicates that the beam indicated by the first DCI is the first beam, and a value of a first field in the second DCI indicates that the beam indicated by the second DCI is the second beam.

The first DCI and the second DCI may be distinguished by using a field or a part of bits (for example, a 1^{st} or a last bit of a TCI field) of a field in the DCI. For example, if a value of a 1^{st} bit of a TCI field in a piece of DCI is equal to 0, the DCI is the first DCI. If a value of a 1^{st} bit of a TCI field in a piece of DCI is equal to 1, the DCI is the second DCI. For another example, if a value of a 1-bit field in a piece of DCI is equal to 0, the DCI is the first DCI. If the value of the 1-bit field is equal to 1, the DCI is the second DCI. In other words, a field or a part of bits of a field exist in the DCI and indicates that the DCI indicates the first beam or the second beam. When a value of the field of the part of bits of the field is a first value, for example, the value is equal to 0, it indicates that the DCI indicates the first beam, that is, the DCI is the first DCI. When a value of the field of the part of bits of the field is a second value, for example, the value is equal to 1, it indicates that the DCI indicates the second beam, that is, the DCI is the second DCI. For another example, if a value of a field or a part of bits of a field in a piece of DCI is a first value, for example, the value is equal to 0, a TCI field in the DCI corresponds to a first beam group. The first communication device determines the first beam from the first beam group by using a field value of the TCI field. In other words, the DCI is the first DCI. If a value of a field or a part of bits of a field in a piece of DCI is a second value, for example, the value is equal to 1, a TCI field in the DCI corresponds to a second beam group. The first communication device determines the second beam from the second beam group by using a field value of the TCI field. In other words, the DCI is the second DCI.

In the foregoing implementation, the first beam group and the second beam group are two beam groups activated by using a single MAC CE. Alternatively, the first beam group and the second beam group are two beam groups separately activated by using two independent MAC CEs. The MAC CE includes a field. When a value of the field is the first value, for example, when the value is 0, it indicates that a beam group indicated by the MAC CE is the first beam group. When a value of the field is the second value, for example, when the value is 1, it indicates that a beam group indicated by the MAC CE is the second beam group.

In another possible implementation, the first DCI and the second DCI may be distinguished by using control resource set groups corresponding to PDCCHs. The first DCI is DCI carried by a PDCCH corresponding to a first control resource set group in two control resource set groups configured by the network device for the terminal device. The second DCI is DCI carried by a PDCCH corresponding to a second control resource set group in the two control resource set groups.

Optionally, the first control resource set group is a control resource set group with a smaller group index in the two control resource set groups, and the second control resource set group is a control resource set group with a larger group index in the two control resource set groups. Alternatively, the first control resource group is a control resource set group with a larger group index in the two control resource set groups, and the second control resource set group is a control resource set group with a smaller group index in the two control resource set groups.

In this application, in a multi-site transmission scenario, the network device may include a plurality of sites. In other words, the network device is a collective name of the plurality of sites. Alternatively, the network device is a part of the plurality of sites. For example, the network device is one of the plurality of sites. This is not specifically limited in this application.

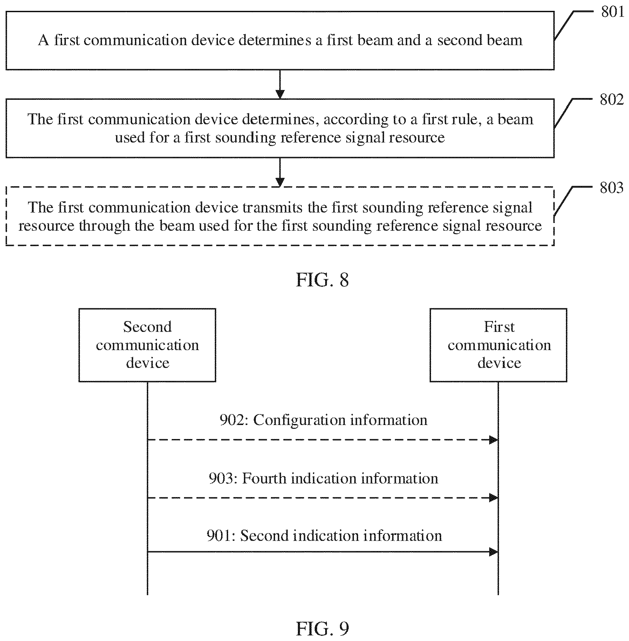

Optionally, if the first communication device is a terminal device, the first beam and the second beam in 401 may be indicated by a second communication device to the first communication device. For details, refer to related descriptions in the following embodiment shown in FIG. 9.

402: The first communication device determines, according to a first rule, a beam used for the first control resource set.

The beam used for the first control resource set is the first beam and/or the second beam.

Optionally, that the first communication device determines, according to a first rule, a beam used for the first control resource set may alternatively be described as that the first communication device determines, according to the first rule, a beam used for a first PDCCH set. A first PDCCH belongs to a PDCCH corresponding to the first control resource set. The following describes the technical solutions of this application by using an example in which the first communication device determines, according to the first rule, the beam used for the first control resource set.

The following describes 402 with reference to some possible cases.

Case 1: If the network device configures the two control resource set groups for the terminal device, and each control resource set group includes at least one control resource set, 402 specifically includes:
if the first control resource set belongs to a first control resource set group in the two control resource set groups, the first communication device determines that the beam used for the first control resource set is the first beam; or
if the first control resource set belongs to a second control resource set group in the two control resource set groups, the first communication device determines that the beam used for the first control resource set is the second beam.

In other words, based on Case 1, the first rule specifically includes: If the first control resource set belongs to the first control resource set group in the two control resource set groups, the beam used for the first control resource set is the first beam; or if the first control resource set belongs to the second control resource set group in the two control resource set groups, the beam used for the first control resource set is the second beam.

The following describes two possible implementations of the first control resource set group and the second control resource set group.

Implementation 1: The first control resource set group is the control resource set group with the smaller group index in the two control resource set groups, and the second control resource set group is the control resource set group with the larger group index in the two control resource set groups.

Implementation 2: The first control resource group is the control resource set group with the larger group index in the two control resource set groups, and the second control resource set group is the control resource set group with the smaller group index in the two control resource set groups.

Specifically, a process in which the network device configures the two control resource set groups for the terminal device includes: The network device configures a plurality of control resource sets for the terminal device, where in the plurality of control resource sets, a first part of control resource sets correspond to a group index 0, and a second part of control resource sets correspond to a group index 1. In other words, the plurality of control resource sets are put into two control resource set groups, and each control resource set group has a corresponding group index (CORESETPoonIndex). In other words, control resource sets that have a same group index may form a control resource set group. In other words, control resource sets in a same control resource set group correspond to a same group index. In other words, the network device implicitly configures the two control resource set groups for the terminal device.

For example, the first control resource set group has a group index CORESETPoolIndex=0, and the second control resource set group has a group index CORESETPoolIndex=1. A configuration parameter of each control resource set includes the group index that indicates a control resource set group to which the control resource set belongs.

It should be noted that, if a configuration parameter of the control resource set includes no group index, a group index corresponding to the control resource set is equal to 0 by default. Therefore, the control resource set may also be considered as a control resource set belonging to a control resource set group whose group index is 0.

Optionally, in the multi-site transmission scenario, the two control resource set groups may be understood as control resource set groups respectively used by two sites. For example, as shown in FIG. 5, a site 1 corresponds to the first control resource set group, and a site 2 corresponds to the second control resource set group. The site 1 uses the first beam, and the site 2 uses the second beam. According to the technical solutions of this application, the first communication device can determine that the first beam is used for a control resource set in the first control resource set group of the site 1, and the second beam is used for a control resource set in the second control resource set group of the site 2.

Case 2: The network device configures the two control resource sets for the terminal device, and the two control resource sets are used for repeat transmission of a control channel PDCCH. That the two control resource sets are used for repeat transmission of the PDCCH may be understood as follows: PDCCHs corresponding to the two control resource sets are a same PDCCH, or content transmitted on PDCCHs corresponding to the two control resource sets is the same. For example, the terminal device may determine, by using an association relationship between the two control resource sets or an association relationship between search space corresponding to the two control resource sets, that the two control resource sets are used for repeat transmission of the PDCCH. The following describes two possible implementations of 402.

### Implementation 1

402 specifically includes:
if the first control resource set is a control resource set with a smaller index in the two control resource sets, the first communication device determines that the beam used for the first control resource set is the first beam; or if the first control resource set is a control resource set with a larger index in the two control resource sets, the first communication device determines that the beam used for the first control resource set is the second beam;
if the first control resource set is a control resource set with a smaller index in the two control resource sets, the first communication device determines that the beam used for the first control resource set is a 1^{st} beam indicated by the network device to the terminal device; or if the first control resource set is a control resource set with a larger index in the two control resource sets, the first communication device determines that the beam used for the first control resource set is a 2^{nd} beam indicated by the network device to the terminal device, where the beam indicated by the network device to the terminal device includes the first beam and the second beam;
if the first control resource set is a control resource set with a higher configuration ranking in the two control resource sets, the first communication device determines that the beam used for the first control resource set is the first beam; or if the first control resource set is a control resource set with a lower configuration ranking in the two control resource sets, the first communication device determines that the beam used for the first control resource set is the second beam; or
if the first control resource set is a control resource set with a higher configuration ranking in the two control resource sets, the first communication device determines that the beam used for the first control resource set is a 1^{st} beam indicated by the network device to the terminal device; or if the first control resource set is a control resource set with a lower configuration ranking in the two control resource sets, the first communication device determines that the beam used for the first control resource set is a 2^{nd} beam indicated by the network device to the terminal device, where the beam indicated by the network device to the terminal device includes the first beam and the second beam.

A configuration ranking of the control resource set may be understood as an arrangement ranking of the control resource set in a control resource set list configured by the network device for the terminal device.

The foregoing two control resource sets are used for repeat transmission of a control channel, that is, same content (for example, same data) is transmitted on the control channels corresponding to the two control resource sets. Specifically, each of the two control resource sets may correspond to one or more pieces of search space. If an association relationship exists between search space respectively corresponding to the two control resource sets, it indicates that the two control resource sets are used for repeat transmission of the control channel.

In other words, based on Implementation 1 in Case 2, the first rule specifically includes:
if the first control resource set is the control resource set with the smaller index in the two control resource sets, the beam used for the first control resource set is the first beam; or if the first control resource set is the control resource set with the larger index in the two control resource sets, the beam used for the first control resource set is the second beam; or
if the first control resource set is the control resource set with the higher configuration ranking in the two control resource sets, the beam used for the first control resource set is the first beam; or if the first control resource set is the control resource set with the lower configuration ranking in the two control resource sets, the beam used for the first control resource set is the second beam.

### Implementation 2

402 specifically includes:
if the first control resource set is a control resource set with a larger index in the two control resource sets, the first communication device determines that the beam used for the first control resource set is the first beam; or if the first control resource set is a control resource set with a smaller index in the two control resource sets, the first communication device determines that the beam used for the first control resource set is the second beam;
if the first control resource set is a control resource set with a larger index in the two control resource sets, the first communication device determines that the beam used for the first control resource set is a 1^{st} beam indicated by the network device to the terminal device; or if the first control resource set is a control resource set with a smaller index in the two control resource sets, the first communication device determines that the beam used for the first control resource set is a 2^{nd} beam indicated by the network device to the terminal device, where the beam indicated by the network device to the terminal device includes the first beam and the second beam;
if the first control resource set is a control resource set with a lower configuration ranking in the two control resource sets, the first communication device determines that the beam used for the first control resource set is the first beam; or if the first control resource set is a control resource set with a higher configuration ranking in the two control resource sets, the first communication device determines that a beam used for the second control resource set is the second beam; or
if the first control resource set is a control resource set with a lower configuration ranking in the two control resource sets, the first communication device determines that the beam used for the first control resource set is a 1^{st} beam indicated by the network device to the terminal device; or if the first control resource set is a control resource set with a higher configuration ranking in the two control resource sets, the first communication device determines that a beam used for the second control resource set is a 2^{nd} beam indicated by the network device to the terminal device, where the beam indicated by the network device to the terminal device includes the first beam and the second beam.

In other words, based on Implementation 2 in Case 2, the first rule specifically includes:
if the first control resource set is the control resource set with the larger index in the two control resource sets, the beam used for the first control resource set is the first beam; or if the first control resource set is the control resource set with the smaller index in the two control resource sets, the beam used for the first control resource set is the second beam; or
if the first control resource set is a control resource set with a lower configuration ranking in the two control resource sets, the beam used for the first control resource set is the first beam; or if the first control resource set is a control resource set with a higher configuration ranking in the two control resource sets, the beam used for the second control resource set is the second beam.

It should be noted that, if Case 1 and Case 2 are satisfied, that is, if the network device configures the two control resource set groups for the terminal device, and the two control resource sets are used for repeat transmission of the control channel, a conflict may occur when the determining manners provided in Case 1 and Case 2 are used. For example, when the two control resource sets belong to a same control resource set group, in the determining manner provided in Case 1, a same beam should be used for the two control resource sets. However, in the determining manner provided in Case 2, the first beam and the second beam should be respectively used for the two control resource sets. For another example, when the two control resource sets belong to different control resource set groups, and the control resource set with the smaller index in the two control resource sets falls within a control resource set group with a larger group index. According to Implementation 1 in Case 1, the second beam is used for the control resource set with the smaller index. However, according to Implementation 1 in Case 2, the first beam should be used for the control resource set with the smaller index.

Therefore, the following further proposes any one of the following provisions for the solution in Case 2, to resolve the foregoing conflict, so that the first communication device determines, in the determining manner provided in Case 1 or Case 2, the beam used for the first control resource set. In Case 2, any one of the following is further included.
1. If the network device configures the two control resource set groups for the terminal device, the two control resource sets belong to different control resource set groups.
   In other words, if the network device configures the two control resource set groups, and the two control resource sets are used for repeat transmission of the control channel, the two control resource sets need to belong to the different control resource set groups, and cannot belong to the same control resource set group.
2. If the network device configures the two control resource set groups for the terminal device, based on Implementation 1 in Case 1 and Implementation 1 in Case 2, an index of a control resource set in the first control resource set group in the two control resource set groups is less than an index of a control resource set in the second control resource set group in the two control resource set groups. Alternatively, a configuration ranking of a control resource set in the first control resource set group is prior to a configuration ranking of a control resource set in the second control resource set group.
   The first control resource set group is the control resource set group with the smaller group index in the two control resource set groups, and the second control resource set group is the control resource set group with the larger group index in the two control resource set groups.
3. If the network device configures the two control resource set groups for the terminal device, based on Implementation 1 in Case 1 and Implementation 2 in Case 2, an index of a control resource set in the first control resource set group in the two control resource set groups is greater than an index of a control resource set in the second control resource set group in the two control resource set groups. Alternatively, a configuration ranking of a control resource set in the first control resource set group is after a configuration ranking of a control resource set in the second control resource set group.
   The first control resource set group is the control resource set group with the smaller group index in the two control resource set groups, and the second control resource set group is the control resource set group with the larger group index in the two control resource set groups.
4. That the two control resource sets are used for repeat transmission of a control channel meets the following condition: The network device configures only one control resource set group for the terminal device.

In other words, if the network device configures only one control resource set group for the terminal device, the two control resource sets can be configured for repeat transmission of the control channel. In other words, if the network device configures the two control resource set groups for the terminal device, the network device cannot configure the two control resource sets for repeat transmission of the control channel.

Optionally, in the multi-site transmission scenario, the two control resource sets may be understood as control resource sets respectively used by two sites. For example, as shown in FIG. 5, a site 1 uses a control resource set with a smaller index, and a site 2 uses a control resource set with a larger index. According to the technical solutions of this application, the first communication device can determine beams used for control resource sets of the different sites. For example, as shown in FIG. 5, in the technical solutions of this application, the first communication device can determine that the first beam is used for a control resource set of the site 1, and the second beam is used for a control resource set of the site 2.

Case 3: If the network device configures a control resource set group for the terminal device, the control resource set group includes one or more single-beam control resource sets, and the first control resource set belongs to one of the one or more single-beam control resource sets, 402 specifically includes any one of the following.
1. The first communication device determines that the beam used for the first control resource set is the first beam.
   In this implementation, if Case 3 is satisfied, the first communication device can determine by default that the beam used for the first control resource set is the first beam. In other words, the first communication device does not need to consider a beam currently used for the first control resource set, but directly determines by default that the first beam is used for the first control resource set.
2. The first communication device determines that the beam used for the first control resource set is the second beam.
   In this implementation, if Case 3 is satisfied, the first communication device can determine by default that the beam used for the first control resource set is the second beam. In other words, the first communication device does not need to consider a beam currently used for the first control resource set, but directly determines by default that the second beam is used for the first control resource set.
3. If a beam currently used for the first control resource set and the first beam belong to a same beam set, the first communication device determines to update the beam currently used for the first control resource set to the first beam, or if a beam currently used for the first control resource set and the second beam belong to a same beam set, the first communication device determines to update the beam currently used for the first control resource set to the second beam.

In this implementation, if Case 3 is satisfied, the first communication device determines, in consideration of the beam currently used for the first control resource set, a beam used for the first control resource set after update. The beam currently used for the first control resource set is updated to the first beam if the beam currently used for the first control resource set and the first beam belong to the same beam set (for example, a beam set configured by the network device for the terminal device). The beam currently used for the first control resource set is updated to the second beam if the beam currently used for the first control resource set and the second beam belong to the same beam set.

For example, the beam set is one of a plurality of beam sets including common beams of a same type that are configured by the network device for the terminal device. Different beam sets may correspond to the different sites. In other words, beams used by the different sites are configured in the different beam sets. In other words, a beam in a same beam set is a beam used by a same site. Accordingly, if the beam currently used for the first control resource set and the first beam belong to the same beam set, a same site is preferably used to transmit the PDCCH corresponding to the first control resource set. Accordingly, the beam currently used for the first control resource set is updated to the first beam. Descriptions of the second beam are similar. Details are not provided one by one herein again.

In other words, based on Case 3, the first rule specifically includes:
if the beam currently used for the first control resource set and the first beam belong to the same beam set, the beam currently used for the first control resource set is updated to the first beam, or if the beam currently used for the first control resource set and the second beam belong to the same beam set, the beam currently used for the first control resource set is updated to the second beam.

Optionally, a condition for using the method shown in Case 3 is as follows: The first control resource set is not used for repeat transmission of a control channel. In other words, the first control resource set is not combined with another control resource set for repeat transmission of the control channel.

Case 4: If the network device configures a control resource set group for the terminal device, the control resource set group includes one or more multi-beam control resource sets, and the first control resource set belongs to one of the one or more multi-beam control resource sets, 402 specifically includes: The first communication device determines that the beam used for the first control resource set is the first beam and the second beam. In other words, the first beam and the second beam are both used for the first control resource set for transmission.

In other words, based on Case 4, the first rule specifically includes: The beam used for the first control resource set is the first beam and the second beam.

Case 5: The first communication device receives a first MAC CE from the second communication device. The first MAC CE includes an index of the first control resource set. 402 specifically includes:
if the first MAC CE is a first-type MAC CE, the first MAC CE includes first beam indication information, and the first beam indication information indicates the first beam, the first communication device determines that at any moment within a first time period, a 1^{st} common beam in two common beams of a same type that become effective at the any moment is used for the first control resource set, where the first time period is a time interval between an effective time point of a beam indicated by the first MAC CE and an effective time point of a beam indicated by a second MAC CE, and the second MAC CE is a MAC CE that indicates the beam used for the first control resource set and that is recently received by the first communication device after the first MAC CE is received;
if the first MAC CE is a first-type MAC CE, the first MAC CE includes first beam indication information, and the first beam indication information indicates the second beam, the first communication device determines that at any moment within a first time period, a 2^{nd} common beam in two common beams of a same type that become effective at the any moment is used for the first control resource set; or
if the first MAC CE is a second-type MAC CE, the first MAC CE includes second beam indication information and third beam indication information, the second beam indication information indicates the first beam, and the third beam indication information indicates the second beam, the first communication device determines that at any moment within a first time period, two common beams of a same type that become effective at the any moment are used for the first control resource set.

In Case 5, if the first MAC CE is the first-type MAC CE, the first MAC CE further includes the first beam indication information, and the first beam indication information indicates one beam. If the first MAC CE sent by the second communication device and received by the first communication device is the first-type MAC CE, and the first MAC CE includes the index of the first control resource set, the first communication device determines that the first control resource set is a single-beam control resource set, that is, determines that a single beam is used for the first control resource set. The second communication device may indicate, through the first beam indication information, which beam is specifically used, that is, the first beam or the second beam is used. It may be specified that the beam indicated by the first beam indication information needs to be the same as one of two currently used beams (namely, the first beam and the second beam). For example, if the two currently used beams (namely, the first beam and the second beam) respectively correspond to a TCI state 1 and a TCI state 2, a TCI state corresponding to the beam indicated by the first beam indication information is either the TCI state 1 or the TCI state 2. If the beam indicated by the first beam indication information is the same as the currently used first beam, the first communication device determines that the first beam is to be subsequently used for the first control resource set. If the beam indicated by the first beam indication information is the same as the currently used second beam, the first communication device determines that the second beam is to be subsequently used for the first control resource set.

It should be noted that, after beams corresponding to the first beam and the second beam change, the beam used for the first control resource set also changes accordingly. For example, according to the foregoing method, the first communication device determines that the first beam is used for the first control resource set. After a TCI state corresponding to the first beam changes from the TCI state 1 to a TCI state 3, a beam corresponding to the TCI state 3 rather than the beam corresponding to the TCI state 1 is to be used for the first control resource set. In other words, the first MAC CE indicates the beam, which does not notify the terminal device to always use the beam subsequently, but notifies, based on which one of two beams (namely, the first beam and the second beam) that currently become effective is the same as the beam, the first communications device to subsequently use the one of the two common beams. Specifically, if the beam indicated in the first MAC CE is the same as a 1^{st} common beam in the two common beams that currently become effective, the terminal device uses, at any moment within a subsequent first time period, the 1^{st} common beam in the two common beams that become effective at the moment. If the beam indicated in the first MAC CE is the same as a 2^{nd} common beam in the two common beams that currently become effective, the terminal device uses, at any moment within a subsequent first time period, the 2^{nd} common beam in the two common beams that become effective at the moment.

If the first MAC CE is the second-type MAC CE, the first MAC CE further includes the second beam indication information and the third beam indication information. The second beam indication information indicates one beam, and the third beam indication information indicates one beam. It may be specified that the two beams indicated by the two pieces of beam indication information included in the first MAC CE need to be the same as two currently used beams (namely, the first beam and the second beam). The first communication device may alternatively ignore beam indication information in the first MAC CE, because in a common beam mode, the beam for the first control resource set does not need to be indicated in the MAC CE, but a common beam (namely, the first beam and the second beam) indicated by the second communication device is directly used. In other words, if the second communication apparatus configures the common beam for the first communication device (that is, a current mode is the common beam mode), the first communication device may directly ignore the two beams indicated in the received first MAC CE. Alternatively, if the second communication apparatus indicates the two beams (namely, the first beam and the second beam) for the first communication device, the first communication device may directly ignore the two beams indicated in the received first MAC CE. Optionally, it may alternatively be specified that the two beams indicated by the second beam indication information and the third indication information are directly used for the first control resource set. It is not required herein that the two beams indicated by the second beam indication information and the third indication information are the same as the two common beams that currently become effective.

Based on Case 3 to Case 5, optionally, the embodiment shown in FIG. 4 further includes 402a. 402a may be performed before 402.

402a: The first communication device determines a type of the first control resource set. The type of the first control resource set includes a single-beam control resource set or a multi-beam control resource set.

A quantity of beams used for a single-beam control resource set is 1, and a quantity of beams used for a multi-beam control resource set is greater than 1. For example, the quantity of beams used for the multi-beam control resource set is 2.

The following describes several possible implementations in which the first communication device determines the type of the first control resource set.

Implementation 1: The first communication device determines the type of the first control resource set based on a configuration parameter in the first control resource set.

Specifically, the network device configures the first control resource set for the terminal device, and the configuration parameter of the first control resource set includes information that indicates the type of the first control resource set. The first communication device may determine the type of the first control resource set by using the configuration parameter. For example, the configuration parameter may be for configuring that the first control resource set is a single-beam control resource set or a multi-beam control resource set.

Implementation 2: The first communication device receives first indication information from the second communication device. The first indication information indicates whether a plurality of beams are allowed to be used for the first control resource set, or indicates the type of the first control resource set. The first indication information is included in configuration information sent by the network device to the terminal device.

In Implementation 2, the first communication device may be a terminal device, and the second communication device may be a network device.

Specifically, the network device configures the first control resource set for the terminal device. The configuration parameter of the first control resource set indicates that one or more beams may be used for the first control resource set for transmission, which may be determined with reference to the indication information from the network device. The network device may indicate, by using the additional first indication information, whether the plurality of beams are allowed to be used for the first control resource set. If the plurality of beams are allowed to be used for the first control resource set, it indicates that the first control resource set is a multi-beam control resource set. If the plurality of beams are not allowed to be used for the first control resource set, it indicates that the first control resource set is a single-beam control resource set. The terminal device may determine the type of the first control resource set by using the first indication information. For example, the first indication information may be for configuring that the single beam or the plurality of beams are used for the first control resource set. Further, when the first indication information indicates that the single beam is used for the first control resource set, the network device may further indicate, to the terminal device by using second indication information, that the first beam or the second beam is used for the first control resource set. The second indication information may be indicated by using RRC signaling, MAC CE signaling, or DCI signaling. Alternatively, the first indication information may directly indicate that the first beam, the second beam, or both the first beam and the second beam are used for the first control resource set.

Implementation 3: The first communication device determines the type of the first control resource set based on a quantity of beams currently used for the first control resource set.

Specifically, if the quantity of beams currently used for the first control resource set is 1, the first communication device may determine that the type of the first control resource set is the single-beam control resource set. If the quantity of beams currently used for the first control resource set is greater than 1, the first communication device may determine that the type of the first control resource set is the multi-beam control resource set.

Implementation 4: The first communication device receives a third MAC CE from the second communication device. The third MAC CE indicates the type of the first control resource set, or the third MAC CE indicates that one or two beams are used for the first control resource set, or the third MAC CE indicates the beam for the first control resource set. The beam used for the first control resource set includes the first beam and/or the second beam. In other words, the third MAC CE indicates that the first beam, the second beam, or the first beam and the second beam are used for the first control resource set.

The first communication device may be a terminal device, and the second communication device may be a network device.

Specifically, the third MAC CE may include one or more 1-bit fields. Each 1-bit field corresponds to one control resource set, and indicates a type of the control resource set or indicates that one or two beams are used for the control resource set. Control resource sets respectively corresponding to the one or more 1-bit fields include the first control resource set. The third MAC CE may include one or more 2-bit fields. Each 2-bit field corresponds to one control resource set, and indicates that the first beam, the second beam, or two beams (namely, the first beam and the second beam) are used for the control resource set.

For example, the third MAC CE includes three 2-bit fields that correspond to three control resource sets within one bandwidth part (bandwidth part, BWP). Each 2-bit field corresponds to one control resource set, and indicates that the first beam, the second beam, or both the two beams (namely, the first beam and the second beam) are used for the control resource set. The control resource sets respectively corresponding to the three 2-bit fields include the first control resource set. Specifically, a 1^{st} 2-bit field corresponds to a control resource set with a smallest index, a 2^{nd} 2-bit field corresponds to a control resource set with an index ranked second, and so on.

For another example, the third MAC CE includes 12 2-bit fields that correspond to 12 control resource sets within one cell. Each 2-bit field corresponds to one control resource set, and indicates that the first beam, the second beam, or both the two beams (namely, the first beam and the second beam) are used for the control resource set. The control resource sets respectively corresponding to the 12 2-bit fields include the first control resource set. Specifically, a 1^{st} 2-bit field corresponds to a control resource set with a smallest index, a 2^{nd} 2-bit field corresponds to a control resource set with an index ranked second, and so on. Every four 2-bit fields in the 12 2-bit fields are located in a same 8-bit byte (namely, a row in the third MAC CE), that is, the 12 2-bit fields occupy three 8-bit bytes in total. Optionally, a quantity of 8-bit bytes that are for carrying the 2-bit fields and that are in the third MAC CE may alternatively be adjusted based on a quantity of control resource sets actually configured in the cell. For example, when the quantity of control resource sets configured in the cell is less than 4, the third MAC CE corresponding to the cell includes only one 8-bit byte that is for carrying the 2-bit fields. When the quantity of control resource sets configured in the cell is greater than 4 but less than 8, the third MAC CE corresponding to the cell includes two 8-bit bytes that are for carrying the 2-bit fields. When the quantity of control resource sets configured in the cell is greater than 8 and does not exceed 12, the third MAC CE corresponding to the cell includes only three 8-bit byte that are for carrying the 2-bit fields. When the quantity of control resource sets configured in the cell exceeds 12, the third MAC CE corresponding to the cell includes more than three 8-bit bytes that are for carrying the 2-bit fields, and a specific quantity of bytes is equal to that the quantity of control resource sets is divided by 4 and then rounded up. For example, 14 control resource sets are configured in the cell, and the quantity of 8-bit bytes that are for carrying the 2-bit fields and that are included in the third MAC CE corresponding to the cell is equal to 14/4 rounded up, that is, equal to 4.

Implementation 5: The first communication device receives the first MAC CE from the second communication device; and the first communication device determines the type of the first control resource set based on a type of the first MAC CE.

The first MAC CE is the first-type MAC CE or the second-type MAC CE. The first MAC CE includes the index of the first control resource set.

Specifically, the first communication device may determine the type of the first control resource set by using the received first MAC CE. For example, if the first MAC CE received by the first communication device from the second communication device is the first-type MAC CE, and the first MAC CE includes the index of the first control resource set, the first communication device determines that the first control resource set is a single-beam control resource set, that is, determines that the single beam, for example, the first beam, is used for the first control resource set. If the first MAC CE received by the first communication device from the second communication device is the second-type MAC CE, and the first MAC CE includes the index of the first control resource set, the first communication device determines that the first control resource set is a multi-beam control resource set, that is, determines that two beams are used for the first control resource set, for example, the first beam and the second beam are used for the first control resource set.

According to the foregoing method, the network device can send the first MAC CE to the terminal device to indicate or switch the type of the first control resource set, or indicate or switch a quantity of beams used for the first control resource set.

Optionally, the embodiment shown in FIG. 4 further includes 403, and 403 may be performed after 402.

403: The first communication device transmits, through the beam used for the first control resource set, the PDCCH corresponding to the first control resource set.

Specifically, after determining the beam used for the first control resource set, the first communication device may transmit, through the beam, the PDCCH corresponding to the first control resource set.

For example, as shown in FIG. 5, the beam used for the first control resource set is the first beam, and the terminal device may perform, with the site 1 through the first beam, transmission of the PDCCH corresponding to the first control resource set.

For example, as shown in FIG. 5, the beam used for the first control resource set is the second beam, and the terminal device may perform, with the site 2 through the second beam, transmission of the PDCCH corresponding to the first control resource set.

For example, as shown in FIG. 5, the beam used for the first control resource set is the first beam and the second beam, and the site 1 may perform, with the terminal device through the first beam, transmission of the PDCCH corresponding to the first control resource set, and the site 2 may perform, with the terminal device through the second beam, transmission of the PDCCH corresponding to the first control resource set, namely, repeat transmission of the PDCCH corresponding to the first control resource set.

It should be noted that, in the embodiment shown in FIG. 4, an example in which the first communication device determines the beam used for the first control resource set is for describing the technical solutions of this application. A process of determining a beam used for another control resource set is also similar. For example, as shown in FIG. 5, in the multi-site transmission scenario, the terminal device determines that the beam used for the first control resource set is the first beam, and determines that the beam used for the second control resource set is the second beam. The terminal device may perform, with the site 1 through the first beam, transmission of the PDCCH corresponding to the first control resource set, and perform, with the site 2 through the second beam, transmission of a PDCCH corresponding to the second control resource set. In this way, multi-site transmission is implemented. In other words, according to the technical solutions of this application, the first communication device can correctly apply, to a corresponding PDCCH, the two beams of the same type that are indicated by the network device, to implement multi-site transmission.

In embodiments of this application, the first communication device determines the first beam and the second beam, the first beam and the second beam are the beams of the same type, and the first beam and the second beam are the two beams indicated by the network device to the terminal device. The first communication device determines, according to the first rule, the beam used for the first control resource set. The beam used for the first control resource set is the first beam and/or the second beam. It can be learned that, according to the technical solutions of this application, the first communication device can determine, from the first beam and the second beam according to the first rule, the beam used for the first control resource set. In this way, the first communication device can correctly apply a beam, that is indicated by the network device, to a PDCCH corresponding to a control resource set, so that the PDCCH corresponding to the control resource set is transmitted through the correct beam, to improve communication transmission performance.

It should be noted that, in the embodiment shown in FIG. 4, an example in which the network device indicates the two beams of the same type to the terminal device is for describing the technical solutions of this application. When the network device indicates one beam to the terminal device, for the multi-beam control resource set, the first communication device may determine that the beam is not used for the multi-beam control resource set; the first communication device may determine to use the beam as a 1^{st} beam used for the multi-beam control resource set; or the first communication device may determine to use the beam as a 2^{nd} beam used for the multi-beam control resource set.

It should be noted that, in the embodiment shown in FIG. 4, the network device indicates, to the terminal device, the two beams of the same type, namely, the first beam and the second beam. It may be specified in a communication protocol that the first beam and the second beam are not applied to a specific control resource set. For example, the first beam and the second beam should not be applied to in the single beam control resource set. In other words, for the single-beam control resource set, the network device may additionally indicate a corresponding beam to the terminal device.

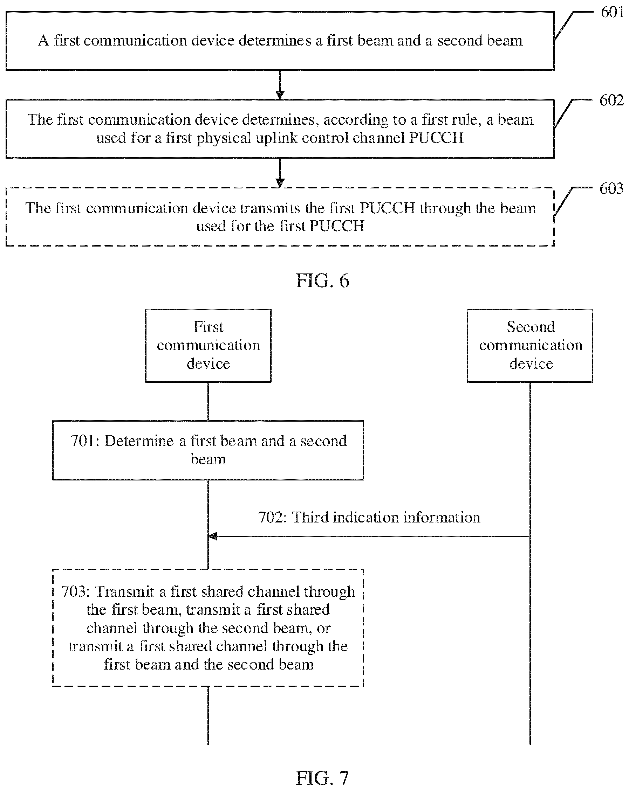

FIG. 6 is a schematic diagram of another embodiment of the beam usage method according to an embodiment of this application. Refer to FIG. 6. The beam usage method includes the following steps.

601: The first communication device determines the first beam and the second beam.

The first beam and the second beam are two beams indicated by the network device to the terminal device. For example, the first beam and the second beam are two beams indicated by the network device to the terminal device by using DCI.

The first beam and the second beam are two common beams of a same type. In the embodiment shown in FIG. 6, the first beam and the second beam are two uplink common beams, or the first beam and the second beam are two uplink and downlink common beams.

The first communication device includes a terminal device or a network device.

In some implementations, the first beam and the second beam may be beams used by a same site. Alternatively, the first beam and the second beam are beams used by different sites.

For some manners of distinguishing between the first beam and the second beam, refer to the related descriptions of the embodiment shown in FIG. 4. Details are not described herein again.

In this application, in a multi-site transmission scenario, the network device may include a plurality of sites. In other words, the network device is a collective name of the plurality of sites. Alternatively, the network device is a part of the plurality of sites. For example, the network device is one of the plurality of sites. This is not specifically limited in this application.

Optionally, if the first communication device is a terminal device, the first beam and the second beam in 601 may be indicated by a second communication device to the first communication device. For details, refer to related descriptions in the following embodiment shown in FIG. 9.

602: The first communication device determines, according to a first rule, a beam used for a first PUCCH.

The beam used for the first PUCCH is the first beam and/or the second beam.

The following describes 602 with reference to some possible cases.

Case A: If the first PUCCH is a single-beam PUCCH, 602 specifically includes any one of the following.
1. The first communication device determines that the beam used for the first PUCCH is the first beam.
   In this implementation, if Case A is satisfied, the first communication device can determine by default that the beam used for the first PUCCH is the first beam. In other words, the first communication device does not need to consider a beam currently used for the first PUCCH, but directly determines by default that the first beam is used for the first PUCCH.
2. The first communication device determines that the beam used for the first PUCCH is the second beam.
   In this implementation, if Case A is satisfied, the first communication device can determine by default that the beam used for the first PUCCH is the second beam. In other words, the first communication device does not need to consider a beam currently used for the first PUCCH, but directly determines by default that the second beam is used for the first PUCCH.
3. If a beam currently used for the first PUCCH and the first beam belong to a same beam set, the first communication device determines to update the beam currently used for the first PUCCH to the first beam; or if a beam currently used for the first PUCCH and the second beam belong to a same beam set, the first communication device determines to update the beam currently used for the first PUCCH to the second beam.

In this implementation, if Case A is satisfied, the first communication device determines, in consideration of the beam currently used for the first PUCCH, a beam used for the first PUCCH after update. The beam currently used for the first PUCCH is updated to the first beam if the beam currently used for the first PUCCH and the first beam belong to the same beam set. The beam currently used for the first PUCCH is updated to the second beam if the beam currently used for the first PUCCH and the second beam belong to the same beam set.

In other words, based on Case A, the first rule specifically includes:
the beam used for the first PUCCH is the first beam;
the beam used for the first PUCCH is the second beam; or
if the beam currently used for the first PUCCH and the first beam belong to the same beam set, the beam currently used for the first PUCCH is updated to the first beam; or if the beam currently used for the first PUCCH and the second beam belong to the same beam set, the beam currently used for the first PUCCH is updated to the second beam.

Case B: If the first PUCCH is a multi-beam PUCCH, 602 specifically includes: The first communication device determines that the beam used for the first PUCCH is the first beam and the second beam. In other words, the first communication device may determine to transmit the multi-beam PUCCH through the first beam and the second beam.

In other words, based on Case B, the first rule specifically includes: The beam used for the first PUCCH is the first beam and the second beam.

Case C: If the network device configures two control resource set groups for the terminal device, 602 specifically includes:
if the first PUCCH is associated with a first control resource set group in the two control resource set groups or is associated with a group index of a first control resource set group, the first communication device determines that the beam used for the first PUCCH is the first beam; or if the first PUCCH is associated with a second control resource set group in the two control resource set groups or is associated with a group index of a second control resource set group, the first communication device determines that the beam used for the first PUCCH is the second beam. For example, that the first PUCCH is associated with the group index of the first control resource set group includes: A configuration parameter of the first PUCCH includes the group index of the first control resource set group.

The first control resource set group is a control resource set group with a smaller group index in the two control resource set groups, and the second control resource set group is a control resource set group with a larger group index in the two control resource set groups. Alternatively, the first control resource set group is a control resource set group with a larger group index in the two control resource set groups, and the second control resource set group is a control resource set group with a smaller group index in the two control resource set groups.

For a configuration process in which the network device configures the two control resource set groups for the terminal device, refer to the related descriptions of 402 in the embodiment shown in FIG. 4. Details are not described herein again.

In other words, based on Case C, the first rule specifically includes:
if the first PUCCH is associated with the first control resource set group in the two control resource set groups or is associated with the group index of the first control resource set group, the beam used for the first PUCCH is the first beam; or if the first PUCCH is associated with the group index of the second control resource set group in the two control resource set groups, the beam used for the first PUCCH is the second beam.

Optionally, in the multi-site transmission scenario, the two control resource set groups may be understood as control resource set groups respectively used by two sites. For example, as shown in FIG. 5, a site 1 corresponds to the first control resource set group, and a site 2 corresponds to the second control resource set group. The site 1 uses the first beam, and the site 2 uses the second beam. If the first PUCCH is associated with the group index of the first control resource set group, it may be understood that the first PUCCH is a PUCCH between the site 1 and the terminal device. Therefore, according to the technical solutions of this application, the first communication device can determine that the first beam is used for the first PUCCH. If the first PUCCH is associated with the group index of the second control resource set group, it may be understood that the first PUCCH is a PUCCH between the site 2 and the terminal device. Therefore, according to the technical solutions of this application, the first communication device can determine that the second beam is used for the first PUCCH.

Case D: The first communication device receives a fourth MAC CE from the second communication device, and the fourth MAC CE includes an index of the first PUCCH. Step 602 specifically includes:
if the fourth MAC CE is a first-type MAC CE, the fourth MAC CE includes fourth beam indication information, and the fourth beam indication information indicates the first beam, the first communication device determines that at any moment within a second time period, a 1^{st} common beam in two common beams of a same type that become effective at the any moment is used for the first PUCCH, where the second time period is a time interval between an effective time point of a beam indicated by the fourth MAC CE and an effective time point of a beam indicated by a fifth MAC CE, and the fifth MAC CE is a MAC CE that indicates the beam used for the first PUCCH and that is recently received by the first communication device after the fourth MAC CE is received;
if the fourth MAC CE is a first-type MAC CE, the fourth MAC CE includes fourth beam indication information, and the fourth beam indication information indicates the second beam, the first communication device determines that at any moment within a second time period, a 2^{nd} common beam in two common beams of a same type that become effective at the any moment is used for the first PUCCH; or
if the fourth MAC CE is a second-type MAC CE, the fourth MAC CE includes fifth beam indication information and sixth beam indication information, the fifth beam indication information indicates the first beam, and the sixth beam indication information indicates the second beam, the first communication device determines that at any moment within a second time period, two common beams of a same type that become effective at the any moment are used for the first PUCCH.

Specifically, the fourth MAC CE is the first-type MAC CE, the fourth MAC CE further includes the fourth beam indication information, and the fourth beam indication information indicates one beam. If the fourth MAC CE that is sent by the second communication device and that is received by the first communication device is the first-type MAC CE, and the fourth MAC CE includes the index of a first PUCCH, the first communication device determines that the first PUCCH is a single-beam PUCCH, that is, determines that a single beam is used for the first PUCCH. The second communication device may indicate, by using the fourth beam indication information, which beam is specifically used, that is, the first beam or the second beam is used. It may be specified that the beam indicated by the fourth beam indication information needs to be the same as one of two currently used beams (namely, the first beam and the second beam). For example, if the two currently used beams (namely, the first beam and the second beam) respectively correspond to a TCI state 1 and a TCI state 2, a TCI state corresponding to the beam indicated by the fourth beam indication information is either the TCI state 1 or the TCI state 2. If the beam indicated by the fourth beam indication information is the same as the currently used first beam, the first communication device determines that the first beam is to be subsequently used for the first PUCCH. If the beam indicated by the fourth beam indication information is the same as the currently used second beam, the first communication device determines that the second beam is to be subsequently used for the first PUCCH.

It should be noted that, after beams corresponding to the first beam and the second beam change, the beam used for the first PUCCH also changes accordingly. For example, according to the foregoing method, the first communication device determines that the first beam is used for the first PUCCH. After a TCI state corresponding to the first beam changes from the TCI state 1 to a TCI state 3, a beam corresponding to the state 3 rather than the beam corresponding to the TCI state 1 is used for the first PUCCH. In other words, the fourth MAC CE indicates the beam, which does not notify the first communication device to always use the beam subsequently, but notifies, based on which one of two beams that currently become effective is the same as the beam, the first communications device to subsequently use the one of the two common beams. Specifically, if the beam indicated in the fourth MAC CE is the same as a 1^{st} common beam in the two common beams that currently become effective, the terminal device uses, at any moment within a subsequent second time period, the 1^{st} common beam in the two common beams that become effective at the moment. If the beam indicated in the fourth MAC CE is the same as a 2^{nd} common beam in the two common beams that currently become effective, the terminal device uses, at any moment within a subsequent second time period, the 2^{nd} common beam in the two common beams that become effective at the moment.

If the fourth MAC CE is the second-type MAC CE, the fourth MAC CE further includes the fifth beam indication information and the sixth beam indication information. The fifth beam indication information indicates one beam, and the sixth beam indication information indicates one beam. It may be specified that the two beams indicated by the two pieces of beam indication information included in the fourth MAC CE need to be the same as two currently used beams (namely, the first beam and the second beam). The first communication device may alternatively ignore beam indication information in the fourth MAC CE, because in a common beam mode, a beam for a PUCCH does not need to be indicated in a MAC CE, but a common beam (namely, the first beam and the second beam) indicated by the network device is directly used. In other words, if the second communication device configures the common beam for the first communication device (that is, a current mode is the common beam mode), the terminal device may directly ignore the two beams indicated in the received fourth MAC CE. Alternatively, if the second communication device indicates two common beams (namely, the first beam and the second beam) for the first communication device, the first communication device may directly ignore the two beams indicated in the received fourth MAC CE. Optionally, it may alternatively be specified that the two beams indicated by the fifth beam indication information and the sixth indication information are directly used for the first PUCCH. It is not required herein that the two beams indicated by the fifth beam indication information and the sixth indication information are the same as the two common beams that currently become effective.

Based on Case A, Case B, or Case D, optionally, the embodiment shown in FIG. 6 further includes 602a. 602a may be performed before 602.

602a: The first communication device determines a type of the first PUCCH. The type of the first PUCCH includes a single-beam PUCCH or a multi-beam PUCCH. The first communication device may be a terminal device.

A quantity of beams used for a single-beam PUCCH is 1, and a quantity of beams used for a multi-beam PUCCH is greater than 1. For example, the quantity of beams used for the multi-beam PUCCH is 2.

The following describes several possible implementations in which the first communication device determines the type of the first PUCCH.

Implementation 1: The first communication device determines the type of the first PUCCH based on a configuration parameter in the first PUCCH.

Specifically, the network device configures the first PUCCH for the terminal device, and the configuration parameter of the first PUCCH includes information that indicates the type of the first PUCCH. The first communication device may determine the type of the first PUCCH by using the configuration parameter. For example, the configuration parameter may be for configuring that the first PUCCH is a single-beam PUCCH or a multi-beam PUCCH.

Implementation 2: The first communication device receives first indication information from the second communication device. The first indication information indicates whether a plurality of beams are allowed to be used for the first PUCCH, or indicates the type of the first PUCCH.

For example, the first communication device is a terminal device, and the second communication device is a terminal device. The first indication information may be included in configuration information sent by the network device to the terminal device.

In Implementation 2, the first communication device may be a terminal device, and the second communication device may be a network device.

Specifically, the network device configures the first PUCCH for the terminal device. The configuration parameter of the first PUCCH indicates that one or more beams may be used for the first PUCCH for transmission, which may be determined with reference to the indication information from the network device. The network device may indicate, by using the first indication information, whether the plurality of beams are allowed to be used for the first PUCCH. If the plurality of beams are allowed to be used for the first PUCCH, it indicates that the first PUCCH is a multi-beam PUCCH. If the plurality of beams are not allowed to be used for the first PUCCH, it indicates that the first PUCCH is a single-beam PUCCH. The terminal device may determine the type of the first PUCCH by using the first indication information. For example, the first indication information may be for configuring that the single beam or the plurality of beams are used for the first PUCCH. Further, when the first indication information indicates that the single beam is used for the PUCCH, the network device may further indicate, to the terminal device by using second indication information, that the first beam or the second beam is used. The second indication information may be indicated by using RRC signaling, MAC CE signaling, or DCI signaling. Alternatively, the first indication information may indicate that the first beam, the second beam, or two beams (namely, the first beam and the second beam) are used for the first PUCCH.

Implementation 3: The first communication device determines the type of the first PUCCH based on a quantity of beams currently used for the first PUCCH.

Specifically, if the quantity of beams currently used for the first PUCCH is 1, the first communication device may determine that the type of the first PUCCH is the single-beam PUCCH. If the quantity of beams currently used for the first PUCCH is greater than 1, the first communication device may determine that the type of the first PUCCH is the multi-beam PUCCH.

Implementation 4: The first communication device receives a sixth MAC CE from the second communication apparatus, where the sixth MAC CE indicates a type of one or more PUCCHs, the sixth MAC CE indicates that one or two beams are used for one or more PUCCHs, or the sixth MAC CE indicates that the first beam, the second beam, or two beams (namely, the first beam and the second beam) are used for one or more PUCCHs. The one or more PUCCHs include the first PUCCH.

Specifically, the sixth MAC CE may include one or more 1-bit fields. Each 1-bit field corresponds to one PUCCH, and indicates a type of the PUCCH or indicates that one or two beams are used for the PUCCH. The sixth MAC CE may include one or more 2-bit fields. Each 2-bit field corresponds to one PUCCH, and indicates that the first beam, the second beam, or the two beams (namely, the first beam and the second beam) are used for the PUCCH.

For example, the sixth MAC CE includes three 2-bit fields that correspond to three PUCCHs within one bandwidth part (bandwidth part, BWP). Each 2-bit field corresponds to one PUCCH, and indicates that the first beam, the second beam, or the two beams (namely, the first beam and the second beam) are used for the PUCCH. Specifically, a 1^{st} 2-bit field corresponds to a PUCCH with a smallest index, a 2^{nd} 2-bit field corresponds to a PUCCH with an index ranked second, and so on.

For another example, the sixth MAC CE includes 12 2-bit fields that correspond to 12 PUCCHs in one cell. Each 2-bit field corresponds to one PUCCH, and indicates that the first beam, the second beam, or the two beams (namely, the first beam and the second beam) are used for the PUCCH. Specifically, a 1^{st} 2-bit field corresponds to a PUCCH with a smallest index, a 2^{nd} 2-bit field corresponds to a PUCCH with an index ranked second, and so on. Every four 2-bit fields in the 12 2-bit fields are located in a same 8-bit byte, that is, the 12 2-bit fields occupy three 8-bit bytes in total. Optionally, a quantity of 8-bit bytes that are for carrying the 2-bit fields and that are in the sixth MAC CE may alternatively be adjusted based on a quantity of PUCCHs actually configured in the cell. For example, when the quantity of PUCCHs configured in the cell is less than 4, the sixth MAC CE corresponding to the cell includes only one 8-bit byte that is for carrying the 2-bit fields. When the quantity of PUCCHs configured in the cell is greater than 4 but less than 8, the sixth MAC CE corresponding to the cell includes two 8-bit bytes that are for carrying the 2-bit fields. When the quantity of PUCCHs configured in the cell is greater than 8 and does not exceed 12, the sixth MAC CE corresponding to the cell includes only three 8-bit byte that are for carrying the 2-bit fields. When the quantity of PUCCHs configured in the cell exceeds 12, the sixth MAC CE corresponding to the cell includes more than three 8-bit bytes that are for carrying the 2-bit fields, and a specific quantity of bytes is equal to that the quantity of PUCCHs is divided by 4 and then rounded up. For example, 14 PUCCHs are configured in the cell, and the quantity of 8-bit bytes that are for carrying the 2-bit fields and that are included in the sixth MAC CE corresponding to the cell is equal to 14/4 rounded up, that is, equal to 4.

Implementation 5: The first communication device receives the fourth MAC CE from the second communication device; and the first communication device determines the type of the first PUCCH based on a type of the fourth MAC CE.

The fourth MAC CE is the first-type MAC CE or the second-type MAC CE. The fourth MAC CE includes the index of the first PUCCH.

Specifically, the first communication device may determine the type of the first PUCCH based on the type of the received fourth MAC CE. For example, if the fourth MAC CE that is sent by the second communication device and that is received by the first communication device is the first-type MAC CE, and the fourth MAC CE includes the index of the first PUCCH, the first communication device determines that the first PUCCH is a single-beam PUCCH, that is, determines that the single beam, for example, the first beam, is used for the first PUCCH. If the fourth MAC CE that is sent by the second communication device and that is received by the first communication device is the second-type MAC CE, and the fourth MAC CE includes the index of the first PUCCH, the first communication device determines that the first PUCCH is a multi-beam PUCCH, that is, determines that two beams are used for the first PUCCH. For example, the first beam and the second beam are used for the first PUCCH.

According to the foregoing method, the network device can send the fourth MAC CE to the terminal device to indicate or switch the type of the first PUCCH, or indicate or switch a quantity of beams used for the first PUCCH.

Optionally, the embodiment shown in FIG. 6 further includes 603, and 603 may be performed after 602.

603: The first communication device transmits the first PUCCH through the beam used for the first PUCCH.

Specifically, after determining the beam used for the first PUCCH, the first communication device may transmit the first PUCCH through the beam.

For example, as shown in FIG. 5, the beam used for the first PUCCH is the first beam, and the terminal device may perform transmission of the first PUCCH with the site 1 through the first beam.

For example, as shown in FIG. 5, the beam used for the first PUCCH is the second beam, and the terminal device may perform transmission of the first PUCCH with the site 2 through the second beam.

It should be noted that, in the embodiment shown in FIG. 6, an example in which the first communication device determines the beam used for the first PUCCH is for describing the technical solutions of this application. A process of determining a beam used for another PUCCH is also similar. For example, as shown in FIG. 5, in the multi-site transmission scenario, the terminal device determines that the beam used for the first PUCCH is the first beam, and determines that a beam used for a second PUCCH is the second beam. The terminal device may perform transmission of the first PUCCH with the site 1 through the first beam, and perform transmission of the second PUCCH with the site 2 through the second beam. In this way, multi-site transmission is implemented. In other words, according to the technical solutions of this application, the first communication device can correctly apply, to a corresponding PUCCH, two beams of a same type that are indicated by the network device, to implement multi-site transmission.

In embodiments of this application, the first communication device determines the first beam and the second beam, the first beam and the second beam are the beams of the same type, and the first beam and the second beam are the two beams indicated by the network device to the terminal device. The first communication device determines, according to the first rule, the beam used for the first PUCCH. The beam used for the first PUCCH is the first beam and/or the second beam. It can be learned that, according to the technical solutions of this application, the first communication device can determine, from the first beam and the second beam according to the first rule, the beam used for the first PUCCH. In this way, the first communication device can correctly apply, to the first PUCCH, the beam indicated by the network device, to transmit the first PUCCH through the correct beam, so as to improve communication transmission performance.

FIG. 7 is a schematic diagram of another embodiment of the beam usage method according to an embodiment of this application. Refer to FIG. 7. The beam usage method includes the following steps.

701: The first communication device determines the first beam and the second beam.

The first beam and the second beam are two beams indicated by the network device to the terminal device. For example, the first beam and the second beam are two beams indicated by the network device to the terminal device by using DCI. The first beam and the second beam are two common beams of a same type.

In some implementations, the first beam and the second beam may be beams used by a same site. Alternatively, the first beam and the second beam are beams used by different sites. For example, as shown in FIG. 5, in a scenario in which the terminal device performs transmission with a plurality of sites, a site 1 performs transmission with the terminal device through the first beam, and a site 2 performs transmission with the terminal device through the second beam.

For some possible manners of distinguishing between the first beam and the second beam, refer to the related descriptions of 401 in the embodiment shown in FIG. 4. Details are not described herein again.

Optionally, if the first communication device is a terminal device, the first beam and the second beam in 701 may be indicated by a second communication device to the first communication device. For details, refer to related descriptions in the following embodiment shown in FIG. 9.

702: The second communication device sends third indication information to the first communication device.

The third indication information indicates any one of the following: The first beam is used for a first shared channel; the second beam is used for a first shared channel; the first beam and the second beam are used for a first shared channel; or the first beam and the second beam are not used for a first shared channel.

Specifically, the first communication device is a terminal device, and the second communication device is a network device. The network device configures two beams of a same type for the terminal device. The network device may flexibly indicate the terminal device to transmit the first shared channel through the first beam and/or the second beam. For example, as shown in FIG. 5, in a multi-site transmission scenario, the site 1 performs transmission of the first shared channel with the terminal device through the first beam, and the site 2 performs transmission of the first shared channel through the second beam. It may be understood that the site 1 and the site 2 perform repeat transmission of same data with the terminal device. In this case, the network device may configure that the terminal device to transmit the first shared channel through the first beam and the second beam. For example, if it is configured that the site 1 transmits the first shared channel with the terminal device through the first beam, it may be configured by the network device that the terminal device transmits the first shared channel through the first beam.

In this application, in the multi-site transmission scenario, the network device may include a plurality of sites. In other words, the network device is a collective name of the plurality of sites. Alternatively, the network device is a part of the plurality of sites. For example, the network device is one of the plurality of sites. This is not specifically limited in this application.

Optionally, if the first shared channel is a PDSCH, the first beam and the second beam are two downlink common beams, or are two uplink and downlink common beams.

Optionally, if the first shared channel is a PUSCH, the first beam and the second beam are two uplink common beams, or are two uplink and downlink common beams.

In some implementations, the third indication information is carried in downlink control information DCI.

Specifically, the third indication information may be a field in the DCI. Four different values of the field may respectively indicate the following four cases: The first beam is used for the first shared channel; the second beam is used for the first shared channel; the first beam and the second beam are used for the first shared channel; and the first beam and the second beam are not used for the first shared channel.

For example, if a value of the third indication information is "00", the third indication information indicates that the first beam is used for the first shared channel. If a value of the third indication information is "01", the third indication information indicates that the second beam is used for the first shared channel. If a value of the third indication information is "10", the third indication information indicates that the first beam and the second beam are used for the first shared channel. If a value of the third indication information is "11", the third indication information indicates that the first beam and the second beam are not used for the first shared channel.

It should be noted that the foregoing is merely an example of the value of the third indication information, and is not a limitation on this application. For example, if the value of the third indication information is "01", the third indication information indicates that the first beam is used for the first shared channel. If the value of the third indication information is "00", the third indication information indicates that the second beam is used for the first shared channel. If the value of the third indication information is "10", the third indication information indicates that the first beam and the second beam are used for the first shared channel. If the value of the third indication information is "11", the third indication information indicates that the first beam and the second beam are not used for the first shared channel. This is not specifically limited in this application. In addition, a length of the third indication information may also be greater than 2 bits.

Optionally, the embodiment shown in FIG. 7 further includes 703, and 703 may be performed after 702.

703: The first communication device transmits the first shared channel through the first beam; the first communication device transmits the first shared channel through the second beam; or the first communication device transmits the first shared channel through the first beam and the second beam.

It should be noted that, in the embodiment shown in FIG. 7, an example in which the first communication device determines the beam used for the first shared channel is for describing the technical solutions of this application. A process of determining a beam used for another shared channel is also similar. For example, as shown in FIG. 5, in the multi-site transmission scenario, the terminal device determines that the beam used for the first shared channel is the first beam, and determines that a beam used for a second shared channel is the second beam. The terminal device may perform transmission of the first shared channel with the site 1 through the first beam, and perform transmission of the second shared channel with the site 2 through the second beam. In this way, multi-site transmission is implemented. In other words, according to the technical solutions of this application, the first communication device can correctly apply, to a corresponding shared channel, the two beams of the same type that are indicated by the network device, to implement multi-site transmission.

In embodiments of this application, the first communication device determines the first beam and the second beam, the first beam and the second beam are the beams of the same type, and the first beam and the second beam are the two beams indicated by the network device to the terminal device. The first communication device receives the third indication information from the second communication device. The third indication information indicates the any one of the following: The first beam is used for the first shared channel; the second beam is used for the first shared channel; the first beam and the second beam are used for the first shared channel; or the first beam and the second beam are not used for the first shared channel. It can be learned that, according to the technical solutions of this application, the first communication device can determine, based on the third indication information, the beam used for the first shared channel. In this way, the first communication device can correctly apply, to the first shared channel, the beam indicated by the network device, to transmit the first shared channel through the correct beam, so as to improve communication transmission performance.

FIG. 8 is a schematic diagram of another embodiment of the beam usage method according to an embodiment of this application. Refer to FIG. 8. The beam usage method includes the following steps.

801: The first communication device determines the first beam and the second beam.

The first beam and the second beam are two beams indicated by the network device to the terminal device. For example, the first beam and the second beam are two beams indicated by the network device to the terminal device by using DCI.

The first beam and the second beam are two common beams of a same type. In the embodiment shown in FIG. 4, the first beam and the second beam are two uplink common beams, or the first beam and the second beam are two uplink and downlink common beams. The first communication device includes a terminal device or a network device.

In some implementations, the first beam and the second beam may be beams used by a same site. Alternatively, the first beam and the second beam are beams used by different sites. For example, as shown in FIG. 5, in a scenario in which the terminal device performs transmission with a plurality of sites, a site 1 performs transmission with the terminal device through the first beam, and a site 2 performs transmission with the terminal device through the second beam.

For some manners of distinguishing between the first beam and the second beam, refer to the related descriptions of the embodiment shown in FIG. 4. Details are not described herein again.

In this application, in the multi-site transmission scenario, the network device may include a plurality of sites. In other words, the network device is a collective name of the plurality of sites. Alternatively, the network device is a part of the plurality of sites. For example, the network device is one of the plurality of sites. This is not specifically limited in this application.

Optionally, if the first communication device is a terminal device, the first beam and the second beam in 801 may be indicated by a second communication device to the first communication device. For details, refer to related descriptions in the following embodiment shown in FIG. 9.

802: The first communication device determines, according to a first rule, a beam used for a first SRS resource.

The beam used for the first SRS resource is the first beam and/or the second beam.

The following describes 802 with reference to some possible cases.

Case A: If the network device configures two SRS resource sets of a same type for the terminal device, 802 specifically includes:
if the first SRS resource belongs to a corresponding SRS resource in a first SRS resource set in the two SRS resource sets of the same type, the first communication device determines that the beam used for the first SRS resource is the first beam; or if the first SRS resource belongs to a corresponding SRS resource in a second SRS resource set in the two SRS resource sets of the same type, the first communication device determines that the beam used for the first SRS resource is the second beam.

In a possible implementation, the first SRS resource set is an SRS resource set with a smaller index in the two SRS resource sets of the same type, and the second SRS resource set is an SRS resource set with a larger index in the two SRS resource sets of the same type; or the first SRS resource set is an SRS resource set with a higher configuration ranking in the two SRS resource sets of the same type, and the second SRS resource set is an SRS resource set with a lower configuration ranking in the two SRS resource sets of the same type.

In another possible implementation, the first SRS resource set is an SRS resource set with a larger index in the two SRS resource sets of the same type, and the second SRS resource set is an SRS resource set with a smaller index in the two SRS resource sets of the same type; or the first SRS resource set is an SRS resource set with a lower configuration ranking in the two SRS resource sets of the same type, and the second SRS resource set is an SRS resource set with a higher configuration ranking in the two SRS resource sets of the same type.

Specifically, a type of the SRS resource set includes a codebook (codebook), a non-codebook (Noncodebook), antenna switching (antennaSwitch), and beam management (beamManagement).

In other words, based on Case A, the first rule specifically includes:
if the first SRS resource belongs to the corresponding SRS resource in the first SRS resource set in the two SRS resource sets of the same type, the beam used for the first SRS resource is the first beam; or if the first SRS resource belongs to the corresponding SRS resource in the second SRS resource set in the two SRS resource sets of the same type, the beam used for the first SRS resource is the second beam.

Case B: If the network device configures one SRS resource set for the terminal device, and the first SRS resource belongs to the SRS resource set, 802 specifically includes any one of the following.
1. The first communication device determines that the beam used for the first SRS resource is the first beam.
   In this implementation, if Case B is satisfied, the first communication device can determine by default that the beam used for the first SRS source is the first beam. In other words, the first communication device does not need to consider a beam currently used for the first SRS resource, but directly determines by default that the first beam is used for the first SRS resource.
2. The first communication device determines that the beam used for the first SRS resource is the second beam.
   In this implementation, if Case B is satisfied, the first communication device can determine by default that the beam used for the first SRS source is the second beam. In other words, the first communication device does not need to consider a beam currently used for the first SRS resource, but directly determines by default that the second beam is used for the first SRS resource.
3. If a beam currently used for the SRS resource set and the first beam belong to a same beam set, the first communication device updates the beam currently used for the first SRS resource to the first beam; or if a beam currently used for the SRS resource set and the second beam belong to a same beam set, the first communication device updates the beam currently used for the first SRS resource to the second beam.

In this implementation, if Case B is satisfied, the first communication device determines, in consideration of the beam currently used for the first SRS resource, a beam used for the first SRS source after update. The beam currently used for the first SRS source is updated to the first beam if the beam currently used for the first SRS source and the first beam belong to the same beam set. The beam currently used for the first SRS source is updated to the second beam if the beam currently used for the first SRS source and the second beam belong to the same beam set.

For example, the beam set is one of a plurality of beam sets including common beams of a same type that are configured by the network device for the terminal device. Different beam sets may correspond to the different sites. In other words, beams used by the different sites are configured in the different beam sets. In other words, a beam in a same beam set is a beam used by a same site. Therefore, if the beam currently used for the first SRS resource and the first beam belong to the same beam set, a same site is preferably used to transmit the first SRS resource. Accordingly, the beam currently used for the first SRS resource is updated to the first beam. Descriptions of the second beam are similar. Details are not provided one by one herein again.

4. The first communication device receives a first RRC message or a first MAC CE from the second communication device. The first RRC message or the first MAC CE indicates that one or two of the first beam and the second beam are used for the first SRS resource. The first communication device determines, by using the first RRC message or the first MAC CE, the beam used for the first SRS resource.

If the first RRC message or the first MAC CE indicates that the one of the first beam and the second beam is used for the first SRS resource, the first communication device considers by default that the first beam is used for the first SRS resource or considers by default that the second beam is used for the first SRS resource. Further, the second communication device may further indicate, to the first communication device by using the first RRC message or the first MAC CE, that the first beam or the second beam is used for the first SRS resource. Alternatively, the second communication device may indicate, to the first communication device by using another RRC message or MAC CE, that the first beam or the second beam are used for the first SRS resource.

5. The first communication device receives a second RRC message or a second MAC CE from the second communication device. The second RRC message or the second MAC CE indicates that the first beam, the second beam, or the first beam and the second beam are used for the first SRS resource. The first communication device determines, by using the second RRC message or the second MAC CE, the beam used for the first SRS resource.

It should be noted that the five methods in Case B may alternatively not be limited to Case B. To be specific, when the network device configures a plurality of SRS resource sets for the terminal device, the first communication device may also determine a beam for each SRS resource by using the foregoing method.

In other words, based on Case B, the first rule specifically includes:
the beam used for the first SRS resource is the first beam;
the beam used for the first SRS resource is the second beam;
if the beam currently used for the SRS resource set and the first beam belong to the same beam set, the beam currently used for the first SRS resource is updated to the first beam; or if the beam currently used for the SRS resource set and the second beam belong to the same beam set, the beam currently used for the first SRS resource is updated to the second beam;
the first RRC message or the first MAC CE indicates that the one or two of the first beam and the second beam are used for the first SRS resource; and if the first RRC message or the first MAC CE indicates that the one of the first beam and the second beam is used for the first SRS resource, it is considered by default that the first beam is used for the first SRS resource or it is considered by default that the second beam is used for the first SRS resource; or if the first RRC message or the first MAC CE indicates that the two of the first beam and the second beam are used for the first SRS resource, the first beam and the second beam are used for the first SRS resource; or
the second RRC message or the second MAC CE indicates that the first beam, the second beam, or both the first beam and the second beam are used for the first SRS resource, and the beam indicated by the second RRC message or the second MAC CE is used for the first SRS resource.

Optionally, the embodiment shown in FIG. 8 further includes 803, and 803 may be performed after 802.

803: The first communication device transmits the first SRS resource through the beam used for the first SRS resource.

For example, the first communication device determines that the first beam is used for the first SRS resource. If the first communication device is a terminal device, the terminal device sends an SRS on the first SRS resource through the first beam. If the first communication device is a network device, the network device receives an SRS on the first SRS resource through the first beam.

For example, the first communication device determines that the second beam is used for the first SRS resource. If the first communication device is a terminal device, the terminal device sends an SRS on the first SRS resource through the second beam. If the first communication device is a network device, the network device receives an SRS on the first SRS resource through the second beam.

In embodiments of this application, the first communication device determines the first beam and the second beam, the first beam and the second beam are the beams of the same type, and the first beam and the second beam are the two beams indicated by the network device to the terminal device. The first communication device determines, according to the first rule, the beam used for the first SRS resource. The beam used for the first SRS resource is the first beam and/or the second beam. It can be learned that, according to the technical solutions of this application, the first communication device can determine, according to the first rule, the beam used for the first SRS resource. In this way, the first communication device can correctly apply the beam, that is indicated by the network device, to transmission of a corresponding reference signal, to improve communication transmission performance.

This application further provides another embodiment. This embodiment is similar to the embodiment shown in FIG. 8. The following describes technical solutions in this embodiment with reference to step 8001 to step 8003. The method provided in this embodiment includes the following steps.

8001: The first communication device determines the first beam and the second beam.

The first beam and the second beam are two beams indicated by the network device to the terminal device. For example, the first beam and the second beam are two beams indicated by the network device to the terminal device by using DCI.

The first beam and the second beam are two common beams of a same type. In the embodiment shown in FIG. 4, the first beam and the second beam are two uplink common beams, or the first beam and the second beam are two uplink and downlink common beams. The first communication device includes a terminal device or a network device.

In some implementations, the first beam and the second beam may be beams used by a same site. Alternatively, the first beam and the second beam are beams used by different sites. For example, as shown in FIG. 5, in a scenario in which the terminal device performs transmission with a plurality of sites, a site 1 performs transmission with the terminal device through the first beam, and a site 2 performs transmission with the terminal device through the second beam.

For some manners of distinguishing between the first beam and the second beam, refer to the related descriptions of the embodiment shown in FIG. 4. Details are not described herein again.

In this application, in the multi-site transmission scenario, the network device may include a plurality of sites. In other words, the network device is a collective name of the plurality of sites. Alternatively, the network device is a part of the plurality of sites. For example, the network device is one of the plurality of sites. This is not specifically limited in this application.

Optionally, if the first communication device is a terminal device, the first beam and the second beam in step 8001 may be indicated by a second communication device to the first communication device. For details, refer to related descriptions in the following embodiment shown in FIG. 9.

8002: The first communication device determines, according to a first rule, a beam used for a first CSI-RS resource.

The beam used for the first CSI-RS resource is the first beam and/or the second beam.

The following describes 8002 with reference to some possible cases.

Case A: If the network device configures two CSI-RS resource sets for the terminal device in a same CSI-RS resource configuration, 8002 specifically includes:
if the first CSI-RS resource belongs to a corresponding CSI-RS resource in a first CSI-RS resource set in the two CSI-RS resource sets, the first communication device determines that the beam used for the first CSI-RS resource is the first beam; or if the first CSI-RS resource belongs to a corresponding CSI-RS resource in a second CSI-RS resource set in the two CSI-RS resource sets, the first communication device determines that the beam used for the first CSI-RS resource is the second beam.

In a possible implementation, the first CSI-RS resource set is a CSI-RS resource set with a smaller index in the two CSI-RS resource sets, the second CSI-RS resource set is a CSI-RS resource set with a larger index in the two CSI-RS resource sets; or the first CSI-RS resource set is a CSI-RS resource set with a higher configuration ranking in the two CSI-RS resource sets, and the second CSI-RS resource set is a CSI-RS resource set with a lower configuration ranking in the two CSI-RS resource sets.

In another possible implementation, the first CSI-RS resource set is a CSI-RS resource set with a larger index in the two CSI-RS resource sets, the second CSI-RS resource set is a CSI-RS resource set with a smaller index in the two CSI-RS resource sets; or the first CSI-RS resource set is a CSI-RS resource set with a lower configuration ranking in the two CSI-RS resource sets, and the second CSI-RS resource set is a CSI-RS resource set with a higher configuration ranking in the two CSI-RS resource sets.

Specifically, a type of a CSI-RS resource set includes a codebook, a non-codebook, antenna switching, or beam management.

In other words, based on Case A, the first rule specifically includes:
if the first CSI-RS resource belongs to the corresponding CSI-RS resource in the first CSI-RS resource set in the two CSI-RS resource sets, the beam used for the first CSI-RS resource is the first beam; or if the first CSI-RS resource belongs to the corresponding CSI-RS resource in the second CSI-RS resource set in the two CSI-RS resource sets, the beam used for the first CSI-RS resource is the second beam.

Case B: If the network device configures one CSI-RS resource set for the terminal device, and the first CSI-RS resource belongs to the CSI-RS resource set, 8002 specifically includes any one of the following.
1. The first communication device determines that the beam used for the first CSI-RS resource is the first beam.
   In this implementation, if Case B is satisfied, the first communication device can determine by default that the beam used for the first CSI-RS source is the first beam. In other words, the first communication device does not need to consider a beam currently used for the first CSI-RS resource, but directly determines by default that the first beam is used for the first CSI-RS resource.
2. The first communication device determines that the beam used for the first CSI-RS resource is the second beam.
   In this implementation, if Case B is satisfied, the first communication device can determine by default that the beam used for the first CSI-RS source is the second beam. In other words, the first communication device does not need to consider a beam currently used for the first CSI-RS resource, but directly determines by default that the second beam is used for the first CSI-RS resource.
3. If a beam currently used for the CSI-RS resource set and the first beam belong to a same beam set, the first communication device updates the beam currently used for the first CSI-RS resource to the first beam; or if a beam currently used for the CSI-RS resource set and the second beam belong to a same beam set, the first communication device updates the beam currently used for the first CSI-RS resource to the second beam.

In this implementation, if Case B is satisfied, the first communication device determines, in consideration of the beam currently used for the first CSI-RS resource, a beam used for the first CSI-RS resource after update. The beam currently used for the first CSI-RS source is updated to the first beam if the beam currently used for the first CSI-RS source and the first beam belong to the same beam set. The beam currently used for the first CSI-RS source is updated to the second beam if the beam currently used for the first CSI-RS source and the second beam belong to the same beam set.

For example, the beam set is one of a plurality of beam sets including common beams of a same type that are configured by the network device for the terminal device. Different beam sets may correspond to the different sites. In other words, beams used by the different sites are configured in the different beam sets. In other words, a beam in a same beam set is a beam used by a same site. Therefore, if the beam currently used for the first CSI-RS resource and the first beam belong to the same beam set, a same site is preferably used to transmit the first CSI-RS resource. Accordingly, the beam currently used for the first CSI-RS resource is updated to the first beam. Descriptions of the second beam are similar. Details are not provided one by one herein again.

4. The first communication device receives a first RRC message or a first MAC CE from the second communication device. The first RRC message or the first MAC CE indicates that one or two of the first beam and the second beam are used for the first CSI-RS resource. The first communication device determines, by using the first RRC message or the first MAC CE, the beam used for the first CSI-RS resource.

If the first RRC message or the first MAC CE indicates that the one of the first beam and the second beam is used for the first CSI-RS resource, the first communication device considers by default that the first beam is used for the first CSI-RS resource or considers by default that the second beam is used for the first CSI-RS resource. Further, the second communication device may further indicate, to the first communication device by using the first RRC message or the first MAC CE, that the first beam or the second beam is used for the first CSI-RS resource. Alternatively, the second communication device may indicate, to the first communication device by using another RRC message or MAC CE, that the first beam or the second beam are used for the first CSI-RS resource.

5. The first communication device receives a second RRC message or a second MAC CE from the second communication device. The second RRC message or the second MAC CE indicates that the first beam, the second beam, or the first beam and the second beam are used for the first CSI-RS resource. The first communication device determines, by using the second RRC message or the second MAC CE, the beam used for the first CSI-RS resource.

It should be noted that the five methods in Case B may alternatively not be limited to Case B. To be specific, when the network device configures a plurality of CSI-RS resource sets for the terminal device, the first communication device may also determine a beam for each CSI-RS resource by using the foregoing method.

In other words, based on Case B, the first rule specifically includes:
the beam used for the first CSI-RS resource is the first beam;
the beam used for the first CSI-RS resource is the second beam;
if the beam currently used for the CSI-RS resource set and the first beam belong to the same beam set, the beam currently used for the first CSI-RS resource is updated to the first beam; or if the beam currently used for the CSI-RS resource set and the second beam belong to the same beam set, the beam currently used for the first CSI-RS resource is updated to the second beam;
the first RRC message or the first MAC CE indicates that the one or two of the first beam and the second beam are used for the first CSI-RS resource; and if the first RRC message or the first MAC CE indicates that the one of the first beam and the second beam is used for the first CSI-RS resource, it is considered by default that the first beam is used for the first CSI-RS resource or it is considered by default that the second beam is used for the first CSI-RS resource; or if the first RRC message or the first MAC CE indicates that the two of the first beam and the second beam are used for the first CSI-RS resource, the first beam and the second beam are used for the first CSI-RS resource; or
the second RRC message or the second MAC CE indicates that the first beam, the second beam, or both the first beam and the second beam are used for the first CSI-RS resource, and the beam indicated by the second RRC message or the second MAC CE is used for the first CSI-RS resource.

Optionally, this embodiment further includes 8003, and 8003 may be performed after 8002.

8003: The first communication device transmits the first CSI-RS resource through the beam used for the first CSI-RS resource.

For example, the first communication device determines that the first beam is used for the first CSI-RS resource. If the first communication device is a terminal device, the terminal device sends a CSI-RS on the first CSI-RS resource through the first beam. If the first communication device is a network device, the network device receives a CSI-RS on the first CSI-RS resource through the first beam.

For example, the first communication device determines that the first beam is used for the second CSI-RS resource. If the first communication device is a terminal device, the terminal device sends a CSI-RS on the first CSI-RS resource through the second beam. If the first communication device is a network device, the network device receives a CSI-RS on the first CSI-RS resource through the second beam.

In embodiments of this application, the first communication device determines the first beam and the second beam, the first beam and the second beam are the beams of the same type, and the first beam and the second beam are the two beams indicated by the network device to the terminal device. The first communication device determines, according to the first rule, the beam used for the first CSI-RS resource. The beam used for the first CSI-RS resource is the first beam and/or the second beam. It can be learned that, according to the technical solutions of this application, the first communication device can determine, according to the first rule, the beam used for the first CSI-RS resource. In this way, the first communication device can correctly apply the beam, that is indicated by the network device, to transmission of a corresponding reference signal, to improve communication transmission performance.

With reference to an embodiment shown in FIG. 9, the following describes a process in which the second communication device indicates the first beam and the second beam to the first communication device.

FIG. 9 is a schematic diagram of another embodiment of the beam usage method according to an embodiment of this application. Refer to FIG. 9. The method includes the following steps.

901: The second communication device sends the second indication information to the first communication device. Correspondingly, the first communication device receives the second indication information from the second communication device.

The second indication information indicates the at least two common beams of a same type. Specifically, the technical solutions of this application are described herein by using an example in which the second indication information indicates the first beam and the second beam. The first communication device is a terminal device, and the second communication device is a network device.

The first beam and the second beam are two downlink common beams, two uplink common beams, or two uplink and downlink common beams. Specifically, the first beam and the second beam should be understood with reference to the foregoing embodiments. For example, if the first beam and the second beam are used for PDCCH transmission, the first beam and the second beam are two downlink common beams or two uplink and downlink common beams.

In some implementations, the first beam and the second beam are the beams used by the same site. Alternatively, the first beam and the second beam are the beams used by the different sites, to implement multi-site transmission.

Optionally, the second indication information may be carried in DCI.

It should be noted that the network device may separately indicate the first beam and the second beam by using the two pieces of DCI; the network device may separately indicate the first beam and the second beam by using two TCI fields in same DCI; the network device may separately indicate the first beam and the second beam by using different field values in a same TCI field in same DCI; or the network device indicates the first beam and the second beam by using a same TCI field value.

For some manners of distinguishing between the first beam and the second beam, refer to the related descriptions of 401 in the embodiment shown in FIG. 4. Details are not described herein again.

Optionally, the embodiment shown in FIG. 9 further includes 902 and 903, and 902 and 903 may be performed before 901.

902: The second communication device sends configuration information to the first communication device. Correspondingly, the first communication device receives configuration information from the second communication device.

The configuration information is for configuring a full beam set for the first communication device. The full beam set includes at least one of the following: a downlink common beam, an uplink common beam, and an uplink and downlink common beam.

Optionally, the common beams configured by the second communication device for the first communication device may be further put into a plurality of beam sets. Indexes of beams in the plurality of beam sets may be different, so that the beam sets to which the beams belong can be distinguished by using the indexes of the beams. For example, the beams used for the different sites may be configured in the different beam sets, and different indexes are used. The first communication device may determine, by using an index of the indicated beam, which site corresponds to the beam.

Optionally, the configuration information may be carried in RRC signaling.

903: The second communication device sends fourth indication information to the first communication device. Correspondingly, the first communication device receives the fourth indication information from the second communication device.

The fourth indication information is for activating, for the first communication device, a subset of the beam set configured in the process in 902. A beam included in the subset further indicates the first beam and the second beam to the first communication device by using the first indication information in 901.

Optionally, the fourth indication information is carried in a MAC CE, and beam information included in the subset of the beam set is carried in the MAC CE. For example, each beam activated by the MAC CE corresponds to each field value in the TCI field in the DCI in 901. After the second communication device sends a piece of DCI to the first communication device, the first communication device may determine, by using a value of a TCI field in the DCI, which beam in activated beams is indicated by the second communication device. For example, 64 beams are configured by using the configuration information in 902, and the MAC CE activates eight beams in the 64 beams in the process in 903. The eight beams respectively correspond to eight field values of the TCI field in the DCI. After the first communication device receives a piece of DCI, a 1^{st} beam in the eight beams activated by the MAC CE is indicated if a value of a TCI field in the DCI is #0.

Optionally, one MAC CE may activate only one type of beam, or may activate a plurality of types of beams. Beams of a same type that are activated by the MAC CE may be put into a plurality of beam groups, and different beam groups correspond to different sites. The first communication device may determine, based on the beam group to which the beam belongs, which site corresponds to the beam.

Optionally, a plurality of beam groups of a same type may be activated by using one MAC CE. For example, one MAC CE activates a plurality of beams of a same type, and the plurality of beams of the same type may be put into a plurality of beam groups. A plurality of beam groups of a same type may alternatively be separately activated by using a plurality of MAC CEs. For example, each MAC CE activates only one group of beams of the same type.

It should be noted that, if a subset of a beam set activated by the MAC CE in 903 includes only one beam, the first communication device directly uses the beam, and the second communication device does not need to further indicate a beam from the activated beams in the process in 901. Therefore, it may be understood that, in this implementation, the first beam and the second beam in 901 may be directly indicated by using the MAC CE. This is not specifically limited in this application.

The foregoing method embodiments may be implemented separately, or may be implemented in combination. For terms and related technologies in embodiments, refer to each other. In other words, technical solutions that do not contradict or logically conflict between different embodiments may be combined with each other. This is not specifically limited in this application.

The following describes a communication apparatus provided in embodiments of this application.

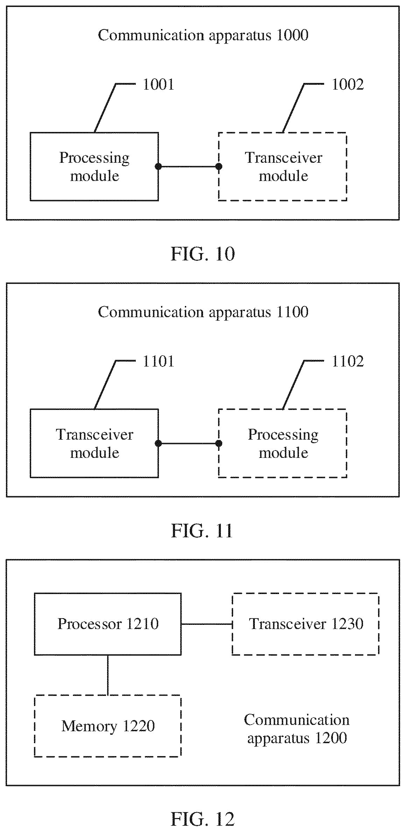

FIG. 10 is a schematic diagram of a structure of a communication apparatus according to an embodiment of this application. Refer to FIG. 10. The communication apparatus may be configured to perform a process performed by the first communication device in the embodiment shown in FIG. 4, the embodiments shown in FIG. 6 to FIG. 9, and the embodiment shown in step 8001 to step 8003. For details, refer to the related descriptions in the foregoing method embodiments.

The communication apparatus 1000 includes a processing module 1001. Optionally, the communication apparatus 1000 further includes a transceiver module 1002. The transceiver module 1002 may implement a corresponding communication function, and the processing module 1001 is configured to perform data processing. The transceiver module 1002 may also be referred to as a communication interface or a communication module.

Optionally, the communication apparatus 1000 may further include a storage module. The storage module may be configured to store instructions and/or data. The processing module 1001 may read the instructions and/or the data in the storage module, to enable the communication apparatus to implement the foregoing method embodiments.

The communication apparatus module 1000 may be configured to perform the actions performed by the first communication device in the foregoing method embodiments. The communication apparatus 1000 may be the first communication device or a component that may be disposed in the first communication device. The processing module 1001 is configured to perform the processing-related operations on the first communications device in the foregoing method embodiments. Optionally, the transceiver module 1002 is configured to perform the receiving-related operations on the first communications device in the foregoing method embodiments.

Optionally, the transceiver module 1002 may include a sending module and a receiving module. The sending module is configured to perform the sending operations in the foregoing method embodiments. The receiving module is configured to perform the receiving operations in the foregoing method embodiments.

It should be noted that the communication apparatus 1000 may include the sending module, but does not include the receiving module, or the communication apparatus 1000 may include the receiving module, but does not include the sending module, which may specifically depend on whether the foregoing solutions executed by the communication apparatus 1000 include the sending action and the receiving action.

In an example, the communication apparatus 1000 is configured to perform the actions performed by the first communication device in the embodiment shown in FIG. 4.

The processing module 1001 is configured to: determine a first beam and a second beam, where the first beam and the second beam are beams of a same type; and determine, according to a first rule, a beam used for a first resource set, where the beam used for the first control resource set is the first beam or the second beam.

Optionally, the processing module 1001 is configured to perform 402a and 403 in the embodiment shown in FIG. 4.

In an example, the communication apparatus 1000 is configured to perform the actions performed by the first communication device in the embodiment shown in FIG. 6.

The processing module 1001 is configured to: determine a first beam and a second beam, where the first beam and the second beam are beams of a same type; and determine, according to a first rule, a beam used for a first PUCCH, where the beam used for the first PUCCH is the first beam or the second beam.

Optionally, the processing module 1001 is configured to perform 603 in the embodiment shown in FIG. 6.

In an example, the communication apparatus 1000 is configured to perform the actions performed by the first communication device in the embodiment shown in FIG. 8.

The processing module 1001 is configured to: determine a first beam and a second beam, where the first beam and the second beam are beams of a same type; and determine, according to a first rule, a beam used for a first SRS resource, where the beam used for the first SRS resource is the first beam or the second beam.

Optionally, the processing module 1001 is configured to perform 803 in the embodiment shown in FIG. 8.

In an example, the communication apparatus 1000 is configured to perform the actions performed by the first communication device in the embodiment shown in FIG. 9. For example, the transceiver module 1002 is configured to perform 901 in the embodiment shown in FIG. 9. Optionally, the transceiver module 1002 is configured to perform 902 and 903 in the embodiment shown in FIG. 9.

It should be understood that a specific process in which the modules perform the foregoing corresponding processes is described in detail in the foregoing method embodiments. For brevity, details are not described herein again.

The processing module 1002 in the foregoing embodiment may be implemented by at least one processor or a processor-related circuit. The transceiver module 1002 may be implemented by a transceiver or a transceiver-related circuit. The transceiver module 1002 may also be referred to as a communication module or a communication interface. The storage module may be implemented by at least one memory.

The following describes the communication apparatus provided in embodiments of this application.

FIG. 11 is a schematic diagram of a structure of a communication apparatus according to an embodiment of this application. Refer to FIG. 11. The communication apparatus may be configured to perform a process performed by the first communication device in the embodiment shown in FIG. 7. For details, refer to the related descriptions in the foregoing method embodiment.

The communication apparatus 1100 includes a transceiver module 1101. Optionally, the communication apparatus 1100 further includes a processing module 1102. The transceiver module 1101 may implement a corresponding communication function, and the processing module 1102 is configured to perform data processing. The transceiver module 1101 may also be referred to as a communication interface or a communication module.

Optionally, the communication apparatus 1100 may further include a storage module. The storage module may be configured to store instructions and/or data. The processing module 1102 may read the instructions and/or the data in the storage module, to enable the communication apparatus to implement the foregoing method embodiments.

The communication apparatus module 1100 may be configured to perform the actions performed by the first communication device in the foregoing method embodiments. The communication apparatus 1100 may be the first communication device or a component that may be disposed in the first communication device. The transceiver module 1101 is configured to perform the receiving-related operations on the first communications device in the foregoing method embodiments. The processing module 1102 is configured to perform the processing-related operations on the first communications device in the foregoing method embodiments.

Optionally, the transceiver module 1101 may include a sending module and a receiving module. The sending module is configured to perform the sending operations in the foregoing method embodiments. The receiving module is configured to perform the receiving operations in the foregoing method embodiments.

It should be noted that the communication apparatus 1100 may include the sending module, but does not include the receiving module, or the communication apparatus 1100 may include the receiving module, but does not include the sending module, which may specifically depend on whether the foregoing solutions executed by the communication apparatus 1100 include the sending action and the receiving action.

In an example, the communication apparatus 1100 is configured to perform the actions performed by the first communication device in the embodiment shown in FIG. 7.

The transceiver module 1101 is configured to: determine a first beam and a second beam, where the first beam and the second beam are beams of a same type; and receive third indication information from a second communications device, where the third indication information indicates any one of the following:
the first beam is used for a first shared channel;
the second beam is used for a first shared channel;
the first beam and the second beam are used for a first shared channel; or
the first beam and the second beam are not used for a first shared channel.

Optionally, the processing module 1102 is configured to perform 703 in the embodiment shown in FIG. 7.

It should be understood that a specific process in which the modules perform the foregoing corresponding processes is described in detail in the foregoing method embodiments. For brevity, details are not described herein again.

The processing module 1102 in the foregoing embodiment may be implemented by at least one processor or a processor-related circuit. The transceiver module 1101 may be implemented by a transceiver or a transceiver-related circuit. The transceiver module 1101 may also be referred to as a communication module or a communication interface. The storage module may be implemented by at least one memory.

An embodiment of this application further provides a communication apparatus 1200. Refer to FIG. 12. The communication apparatus 1200 includes a processor 1210. The processor 1210 is coupled to a memory 1220. The memory 1220 is configured to store a computer program or instructions and/or data. The processor 1210 is configured to execute the computer program or the instructions and/or the data stored in the memory 1220, to perform the method in the foregoing method embodiments.

Optionally, the communication apparatus 1200 includes one or more processors 1210.

Optionally, as shown in FIG. 12, the communication apparatus 1200 may further include the memory 1220.

Optionally, the communication apparatus 1200 includes one or more memories 1220.

Optionally, the memory 1220 and the processor 1210 may be integrated together, or disposed separately.

Optionally, as shown in FIG. 12, the communication apparatus 1200 may further include a transceiver 1230. The transceiver 1230 is configured to receive and/or send signals. For example, the processor 1210 is configured to control the transceiver 1230 to receive and/or send the signals.

In a solution, the communication apparatus 1200 is configured to implement the operations performed by the first communications device in the foregoing method embodiments.

For example, the processor 1210 is configured to implement the processing-related operations performed by the first communication device in the foregoing method embodiments, and the transceiver 1230 is configured to implement the sending and receiving-related operations performed by the first communications device in the foregoing method embodiments.

This application further provides a communication apparatus 1300. The communication apparatus 1300 may be a terminal device, a processor of a terminal device, or a chip. The communication apparatus 1300 may be configured to perform the operations performed by the first communication device in the foregoing method embodiments.

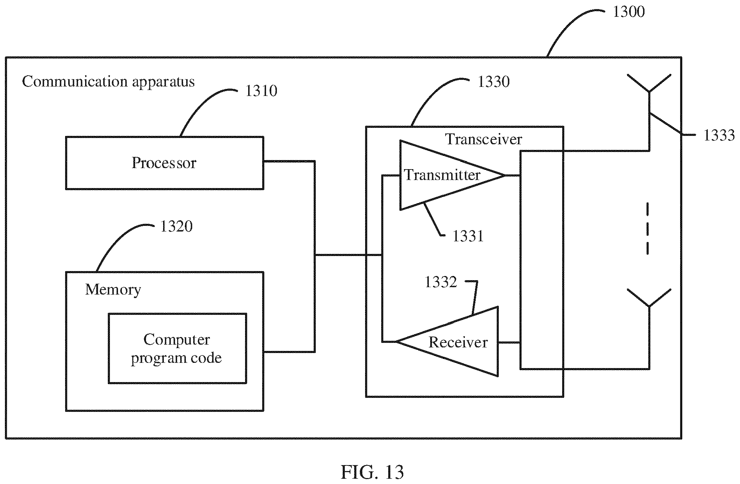

When the communication apparatus 1300 is a terminal device, FIG. 13 is a simplified schematic diagram of a structure of the terminal device. As shown in FIG. 13, the terminal device includes a processor, a memory, and a transceiver. The memory may store computer program code. The transceiver includes a transmitter 1331, a receiver 1332, a radio frequency circuit (not shown in the figure), an antenna 1333, and an input/output apparatus (not shown in the figure).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send radio frequency signals in a form of electromagnetic wave. The input/output apparatus, for example, a touchscreen, a display, or a keyboard, is mainly configured to: receive data input by a user and output data to the user. It should be noted that some types of terminal devices may have no input/output apparatus.

When data needs to be sent, the processor performs baseband processing on the to-be-sent data, and outputs a baseband signal to the radio frequency circuit. The radio frequency circuit performs radio frequency processing on the baseband signal, and then sends a radio frequency signal through the antenna in the form of electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 13 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, an antenna and a radio frequency circuit that have sending and receiving functions may be considered as a transceiver module of the terminal device, and a processor that has a processing function may be considered as a processing module of the terminal device.

As shown in FIG. 13, the terminal device includes the processor 1310, the memory 1320, and the transceiver 1330. The processor 1310 may also be referred to as a processing unit, a processing board, a processing module, a processing apparatus, or the like. The transceiver 1330 may also be referred to as a transceiver unit, a transceiver machine, a transceiver apparatus, or the like.

Optionally, a component that is in the transceiver 1330 and that is configured to implement a receiving function may be considered as a receiving module, and a component that is in the transceiver 1330 and that is configured to implement a sending function may be considered as a sending module. In other words, the transceiver 1330 includes a receiving machine and a sending machine. The transceiver may sometimes also be referred to as a transceiver machine, a transceiver module, a transceiver circuit, or the like. The receiving machine may also be referred to as a receiver, a receiving module, a receiving circuit, or the like. The sending machine may also be referred to as a transmitter, a transmitting module, a transmitting circuit, or the like.

For example, in an implementation, the processor 1310 is configured to perform the processing actions on the first communication device in the embodiment shown in FIG. 4, and the transceiver 1330 is configured to perform the sending and receiving actions on the first communication device in FIG. 4. For example, the transceiver 1330 is configured to perform the determining operation in 401 in the embodiment shown in FIG. 4, and specifically, that is, receive, from a second communication device, first indication information that indicates a first beam and a second beam. The processor 1310 is configured to perform the processing operation in 402 in the embodiment shown in FIG. 4. Optionally, the processor 1310 is further configured to perform the processing operations in 402a and 403 in the embodiment shown in FIG. 4.

For example, in an implementation, the processor 1310 is configured to perform the processing actions on the first communication device in the embodiment shown in FIG. 6. The transceiver 1330 is configured to perform the sending and receiving actions on the first communication device in the embodiment shown in FIG. 6. The processor 1310 is configured to perform the processing actions in the embodiment shown in FIG. 6. For example, the transceiver 1330 is configured to perform the determining operation in 601 in the embodiment shown in FIG. 6, and specifically, that is, receive, from a second communication device, first indication information that indicates a first beam and a second beam. The processor 1310 is configured to perform the processing operation in 602 in the embodiment shown in FIG. 6. Optionally, the processor 1310 is further configured to perform the processing operation in 603 in the embodiment shown in FIG. 6.

For example, in an implementation, the processor 1310 is configured to perform the processing actions on the first communication device in the embodiment shown in FIG. 7. The transceiver 1330 is configured to perform sending and receiving actions on the first communication device in the embodiment shown in FIG. 7. The processor 1310 is configured to perform the processing actions in the embodiment shown in FIG. 7. For example, the transceiver 1330 is configured to perform the determining operations in 701 and 702 in the embodiment shown in FIG. 7, and specifically, that is, receive, from a second communication device, first indication information that indicates a first beam and a second beam. Optionally, the processor 1310 is further configured to perform the processing operation in 703 in the embodiment shown in FIG. 7.

For example, in an implementation, the processor 1310 is configured to perform the processing actions on the first communication device in the embodiment shown in FIG. 8. The transceiver 1330 is configured to perform the sending and receiving actions on the first communication device in the embodiment shown in FIG. 8. The processor 1310 is configured to perform the processing actions in the embodiment shown in FIG. 8. For example, the transceiver 1330 is configured to perform the determining operation in 801 in the embodiment shown in FIG. 8, and specifically, that is, receive, from a second communication device, first indication information that indicates a first beam and a second beam. The processor 1310 is configured to perform the processing operation in 802 in the embodiment shown in FIG. 8. Optionally, the processor 1310 is further configured to perform the processing operation in 803 in the embodiment shown in FIG. 8.

For example, in an implementation, the processor 1310 is configured to perform the processing actions on the first communication device in the embodiment shown in step 8001 to step 8003. The transceiver 1330 is configured to perform the sending and receiving actions on the first communication device in the embodiment shown in step 8001 to step 8003. For example, the transceiver 1330 is configured to perform the determining operation in 8001 in the embodiment shown in step 8001 to step 8003, and specifically, that is, receive, from a second communication device, first indication information that indicates a first beam and a second beam. The processor 1310 is configured to perform the processing operation in 8002 in the embodiment shown in step 8001 to step 8003. Optionally, the processor 1310 is further configured to perform the processing operation in 8003 in the embodiment shown in step 8001 to step 8003.

For example, in an implementation, the transceiver 1330 is configured to perform sending and receiving actions on the first communication device in the embodiment shown in FIG. 9. The transceiver 1330 is configured to perform 901 in the embodiment shown in FIG. 9. Optionally, the transceiver 1330 is configured to perform 902 and 903 in the embodiment shown in FIG. 9.

It should be understood that FIG. 13 is merely an example instead of a limitation. The terminal device including the transceiver module and the processing module may not depend on the structure shown in FIG. 11 or FIG. 12.

When the communication apparatus 1300 is a chip, the chip includes a processor, a memory, and a transceiver. The transceiver may be an input/output circuit or a communication interface. The processor may be a processing module integrated on the chip, a microprocessor, or an integrated circuit. The sending operations of the terminal device in the foregoing method embodiments may be understood as outputs of the chip, and the receiving operations of the terminal device in the foregoing method embodiments may be understood as inputs of the chip.

This application further provides a communication apparatus 1400. The communication apparatus 1400 may be a network device or may be a chip. The communication apparatus 1400 may be configured to perform the operations performed by the first communication device in the method embodiments shown in FIG. 4, FIG. 6, FIG. 7, and FIG. 8, or may be configured to perform the operations performed by the second communication device in the method embodiment shown in FIG. 9.

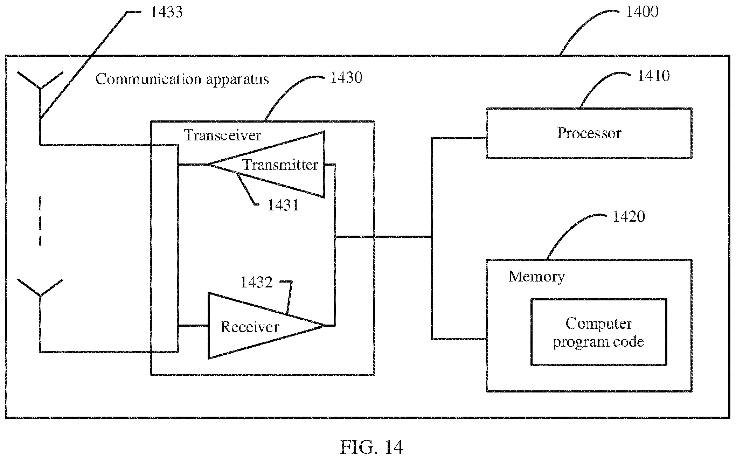

When the communication apparatus 1400 is a network device, for example, a base station, FIG. 14 is a simplified schematic diagram of a structure of the base station. The base station includes a part 1410, a part 1420, and a part 1430. The part 1410 is mainly configured for baseband processing, controlling the base station, and the like. The part 1410 is usually a control center of the base station, may be usually referred to as a processor, and is configured to control the base station to perform the processing operations on the network device in the foregoing method embodiments. The part 1420 is mainly configured to store computer program code and data. The part 1430 is mainly configured to: receive and send radio frequency signals and convert a radio frequency signal and a baseband signal. The part 1430 may be usually referred to as a transceiver module, a transceiver machine, a transceiver circuit, a transceiver, or the like. A transceiver module of the part 1430 may also be referred to as a transceiver machine, a transceiver, or the like, and includes an antenna 1433 and a radio frequency circuit (not shown in the figure). The radio frequency circuit is mainly configured to perform radio frequency processing. Optionally, in the part 1430, a component that is configured to implement a receiving function may be considered as a receiver, and a component that is configured to implement a sending function may be considered as a transmitter. In other words, the part 1430 includes a receiver 1432 and a transmitter 1431. The receiver may also be referred to as a receiving module, a receiving machine, a receiving circuit, or the like. A transmitter may be referred to as a transmitting module, a transmitting machine, a transmitting circuit, or the like.

The part 1410 and the part 1420 may include one or more boards. Each board may include one or more processors and one or more memories. The processor is configured to: read and execute a program in the memory to implement a baseband processing function and control of the base station. If there are a plurality of boards, the boards may be interconnected with each other to enhance a processing capability. In an optional implementation, the plurality of boards may share one or more processors, or the plurality of boards share one or more memories, or the plurality of boards all share one or more processors.

For example, in an implementation, the transceiver module of the part 1430 is configured to perform the sending and receiving-related processes performed by the first communication device in the embodiments shown in FIG. 4, FIG. 6, FIG. 7, and FIG. 8. The processor of the part 1410 is configured to perform the processing-related processes performed by the first communication device in the embodiments shown in FIG. 4, FIG. 6, FIG. 7, and FIG. 8 and in the embodiment shown in step 8001 to step 8003. In another implementation, the transceiver module of the part 1430 is configured to perform the sending and receiving-related processes performed by the second communication device in the embodiment shown in FIG. 9.

It should be understood that FIG. 14 is merely an example instead of a limitation. The network device including the processor, the memory, and the transceiver may not depend on the structure shown in FIG. 11 or FIG. 12.

When the communication apparatus 1400 is a chip, the chip includes a transceiver, a memory, and a processor. The transceiver may be an input/output circuit or a communication interface. The processor may be a processor integrated on the chip, a microprocessor, or an integrated circuit. The sending operations of the network device in the foregoing method embodiments may be understood as outputs of the chip, and the receiving operations of the network device in the foregoing method embodiments may be understood as inputs of the chip.

An embodiment of this application further provides a computer-readable storage medium. The computer-readable storage medium stores computer instructions used to implement the method performed by the first communication device in the foregoing method embodiments.

For example, when the computer program is executed by a computer, the computer is enabled to implement the method performed by the first communication device in the foregoing method embodiments.

An embodiment of this application further provides a computer program product including instructions. When the instructions are executed by a computer, the computer is enabled to implement the method performed by the first communication device in the foregoing method embodiments.

An embodiment of this application further provides a communication system. The communication system includes the first communication device and the second communication device in the foregoing embodiments.

An embodiment of this application further provides a chip apparatus, including a processor, configured to invoke a computer program or computer instructions stored in a memory, to enable the processor to perform the beam use method in the embodiments shown in FIG. 4, FIG. 6 to FIG. 9, and the embodiment shown in step 8001 to step 8003.

In a possible implementation, an input of the chip apparatus corresponds to the receiving operations in the embodiments shown in FIG. 4 and FIG. 6 to FIG. 9. An output of the chip apparatus corresponds to the sending operations in the embodiments shown in FIG. 4, FIG. 6 to FIG. 9, and the embodiment shown in step 8001 to step 8003.

Optionally, the processor is coupled to the memory through an interface.

Optionally, the chip apparatus further includes a memory. The memory stores a computer program or computer instructions.

The processor mentioned anywhere above may be a general-purpose central processing unit, a microprocessor, or an application-specific integrated circuit (application-specific integrated circuit, ASIC), or one or more integrated circuits configured to control program execution of the beam usage method in the embodiments shown in FIG. 4, FIG. 6 to FIG. 9, and the embodiment shown in step 8001 to step 8003. The memory mentioned anywhere above may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for explanations and beneficial effects of related content in any of the communication apparatuses provided above, refer to corresponding method embodiments provided above. Details are not described herein again.

In this application, the terminal device or the network device may include a hardware layer, an operating system layer running at the hardware layer, and an application layer running at the operating system layer. The hardware layer may include hardware such as a central processing unit (central processing unit, CPU), a memory management module (memory management unit, MMU), and a memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by persons skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and the parts displayed as modules may or may not be physical modules, may be located in one position, or may be distributed on a plurality of network modules. Some or all of the modules may be selected based on an actual requirement, to achieve the objectives of the solutions of embodiments.

In addition, functional modules in embodiments of this application may be integrated into one processing module, or each of the modules may exist alone physically, or two or more modules are integrated into one module. The integrated module may be implemented in a form of hardware, or may be implemented in a form of software functional module.

The integrated unit may be stored in a computer-readable storage medium when the integrated module is implemented in the form of software functional module and sold or used as an independent product. Based on such an understanding, the part of the technical solutions of this application that essentially contributes or all or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, USB flash drive, a removable hard disk, a read-only memory, a random access memory, a magnetic disk, or an optical disc.

In conclusion, the foregoing embodiments are merely intended for describing the technical solutions of this application, but not for limiting the technical solutions of this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A beam usage method, wherein the method comprises:
determining, by a first communication device, a first beam and a second beam, wherein the first beam and the second beam are beams of a same type; and
determining, by the first communication device according to a first rule, a beam used for a first control resource set, wherein the beam used for the first control resource set is the first beam and/or the second beam.

2. The method according to claim 1, wherein if a network device configures two control resource set groups for a terminal device, and each control resource set group comprises at least one control resource set, the determining, by the first communication device according to a first rule, a beam used for a first control resource set comprises:
if the first control resource set belongs to a first control resource set group in the two control resource set groups, determining, by the first communication device, that the beam used for the first control resource set is the first beam; or
if the first control resource set belongs to a second control resource set group in the two control resource set groups, determining, by the first communication device, that the beam used for the first control resource set is the second beam, wherein
the first control resource set group is a control resource set group with a smaller group index in the two control resource set groups, and the second control resource set group is a control resource set group with a larger group index in the two control resource set groups.

3. The method according to claim 1, wherein if a network device configures two control resource sets for a terminal device, and the two control resource sets are used for repeat transmission of a control channel, the determining, by the first communication device according to a first rule, a beam used for a first control resource set comprises:
if the first control resource set is a control resource set with a smaller index in the two control resource sets, determining, by the first communication device, that the beam used for the first control resource set is the first beam; or if the first control resource set is a control resource set with a larger index in the two control resource sets, determining, by the first communication device, that the beam used for the first control resource set is the second beam; or
if the first control resource set is a control resource set with a higher configuration ranking in the two control resource sets, determining, by the first communication device, that the beam used for the first control resource set is the first beam; or if the first control resource set is a control resource set with a lower configuration ranking in the two control resource sets, determining, by the first communication device, that the beam used for the first control resource set is the second beam.

4. The method according to claim 3, wherein that the two control resource sets are used for repeat transmission of the control channel meets any one of the following conditions:
the network device configures two control resource set groups for the terminal device, and the two control resource sets belong to different control resource set groups;
the network device configures two control resource set groups for the terminal device, an index of a control resource set in a first control resource set group in the two control resource set groups is less than an index of a control resource set in a second control resource set group in the two control resource set groups; or a configuration ranking of a control resource set in a first control resource set group is prior to a configuration ranking of a control resource set in a second control resource set group, wherein the first control resource set group is a control resource set group with a smaller group index in the two control resource set groups, and the second control resource set group is a control resource set group with a larger group index in the two control resource set groups; or
the network device configures only one control resource set group for the terminal device, and the two control resource sets belong to the control resource set group.

5. The method according to claim 1, wherein if a network device configures one control resource set group for a terminal device, the control resource set group comprises one or more single-beam control resource sets, and the first control resource set belongs to one of the one or more single-beam control resource sets, the determining, by the first communication device according to a first rule, a beam used for a first control resource set comprises:
determining, by the first communication device, that the beam used for the first control resource set is the first beam;
determining, by the first communication device, that the beam used for the first control resource set is the second beam; or
if a beam currently used for the first control resource set and the first beam belong to a same beam set, determining, by the first communication device, to update the beam currently used for the first control resource set to the first beam, or if a beam currently used for the first control resource set and the second beam belong to a same beam set, determining, by the first communication device, to update the beam currently used for the first control resource set to the second beam.

6. The method according to claim 1, wherein if a network device configures one control resource set group for a terminal device, the control resource set group comprises one or more multi-beam control resource sets, and the first control resource set belongs to one of the one or more multi-beam control resource sets, the determining, by the first communication device according to a first rule, a beam used for a first control resource set comprises:
determining, by the first communication device, that the beam used for the first control resource set is the first beam and the second beam.

7. The method according to claim 1, wherein the method further comprises:
receiving, by the first communication device, a first media access control control element MAC CE from a second communication device, wherein the first MAC CE comprises an index of the first control resource set; and
the determining, by the first communication device according to a first rule, a beam used for a first control resource set comprises:
if the first MAC CE is a first-type MAC CE, the first MAC CE comprises first beam indication information, and the first beam indication information indicates the first beam, determining, by the first communication device, that at any moment within a first time period, a 1^{st} common beam in two common beams of a same type that become effective at the any moment is used for the first control resource set, wherein the first time period is a time interval from an effective time point of a beam indicated by the first MAC CE to an effective time point of a beam indicated by a second MAC CE, and the second MAC CE is a MAC CE that indicates the beam used for the first control resource set and that is recently received by the first communication device after the first MAC CE is received;
if the first MAC CE is a first-type MAC CE, the first MAC CE comprises first beam indication information, and the first beam indication information indicates the second beam, determining, by the first communication device, that at any moment within a first time period, a 2^{nd} common beam in two common beams of a same type that become effective at the any moment is used for the first control resource set; or
if the first MAC CE is a second-type MAC CE, the first MAC CE comprises second beam indication information and third beam indication information, the second beam indication information indicates the first beam, and the third beam indication information indicates the second beam, determining, by the first communication device, that at any moment within a first time period, two common beams of a same type that become effective at the any moment are used for the first control resource set.

8. The method according to any one of claims 5 to 7, wherein the method further comprises:
determining, by the first communication device, a type of the first control resource set, wherein the type of the first control resource set comprises a single-beam control resource set or a multi-beam control resource set.

9. The method according to claim 8, wherein the determining, by the first communication device, a type of the first control resource set comprises:
determining, by the first communication device, the type of the first control resource set based on a configuration parameter in the first control resource set;
receiving, by the first communication device, first indication information from the second communication device, wherein the first indication information indicates whether a plurality of beams are allowed to be used for the first control resource set, or the first indication information indicates the type of the first control resource set, the first communication device is a terminal device, and the second communication device is a network device;
determining, by the first communication device, the type of the first control resource set based on a quantity of beams currently used for the first control resource set;
receiving, by the first communication device, a third MAC CE from the second communication device, wherein the third MAC CE indicates the type of the first control resource set, or the third MAC CE indicates a quantity of beams used for the first control resource set, and the quantity of beams comprises 1 or 2; or the third MAC CE indicates the beam used for the first control resource set, and the beam used for the first control resource set comprises the first beam and/or the second beam; or
receiving, by the first communication device, the first MAC CE from the second communication device; and determining, by the first communication device, the type of the first control resource set based on a type of the first MAC CE.

10. The method according to claim 9, wherein the determining, by the first communication device, the type of the first control resource set based on a type of the second MAC CE comprises:
if the first MAC CE is the first-type MAC CE, determining, by the first communication device, that the first control resource set is a single-beam control resource set; or
if the first MAC CE is the second-type MAC CE, determining, by the first communication device, that the first control resource set is a multi-beam control resource set.

11. The method according to claim 9, wherein the determining, by the first communication device, the type of the first control resource set based on a quantity of beams currently used for the first control resource set comprises:
if the quantity of beams currently used for the first control resource set is 1, determining, by the first communication device, that the type of the first control resource set is a single-beam control resource set; or
if the quantity of beams currently used for the first control resource set is greater than 1, determining, by the first communication device, that the type of the first control resource set is a multi-beam control resource set.

12. The method according to any one of claims 1 to 11, wherein the first beam and the first beam are two beams indicated by the network device to the terminal device; and the first beam and the second beam comprise any one of the following:
the first beam is a beam with a smaller index in the two beams, and the second beam is a beam with a larger index in the two beams;
the first beam is a beam corresponding to a smaller transmission configuration indicator TCI field value in the two beams, and the second beam is a beam corresponding to a larger TCI field value in the two beams;
the first beam is a beam with a higher configuration ranking in the two beams, and the second beam is a beam with a lower configuration ranking in the two beams;
the first beam belongs to a first beam set, the second beam belongs to a second beam set, the first beam set and the second beam set are two beam sets of a same type that are configured by the network device for the terminal device, the first beam set is a beam set with a smaller index in the two beam sets of the same type, and the second beam set is a beam set with a larger index in the two beam sets; or the first beam set is a beam set with a higher configuration ranking in the two beam sets of the same type, and the second beam set is a beam set with a lower configuration ranking in the two beam sets;
the first beam belongs to a first beam group, the second beam belongs to a second beam group, the first beam group and the second beam group are two beam groups of a same type that are activated by the network device by using a MAC CE, the first beam group is a beam group with a smaller index in the two beam groups of the same type, and the second beam group is a beam group with a larger index in the two beam groups of the same type; or the first beam group is a beam group with a higher activation ranking in the MAC CE in the two beam groups of the same type, and the second beam group is a beam group with a lower activation ranking in the MAC CE in the two beam groups of the same type;
the first beam is a beam indicated by a 1^{st} TCI field in downlink control information DCI, and the second beam is a beam indicated by a 2^{nd} TCI field in the DCI;
the first beam is a beam corresponding to a first part of field values in all field values of a TCI field in DCI, and the second beam is a beam corresponding to a second part of field values in all the field values of the TCI field in the DCI;
the first beam and the second beam are two beams of a same type that are indicated by a same TCI field in DCI, the first beam is a beam with a higher activation ranking in a MAC CE in the two beams of the same type, and the second beam is a beam with a lower activation ranking in the MAC CE in the two beams of the same type; or
the first beam is a beam indicated by first DCI, the second beam is a beam indicated by second DCI, the first DCI is DCI carried on a physical downlink control channel PDCCH corresponding to the first control resource set group in the two control resource set groups configured by the network device for the terminal device, the second DCI is DCI carried on a PDCCH corresponding to the second control resource set group in the two control resource set groups, the first control resource set group is the control resource set group with the smaller group index in the two control resource set groups, and the second control resource set group is the control resource set group with the larger group index in the two control resource set groups; or a value of a first field in the first DCI indicates that the beam indicated by the first DCI is the first beam, and a value of a first field in the second DCI indicates that the beam indicated by the second DCI is the second beam.

13. The method according to any one of claims 1 to 12, wherein the first communication device comprises a network device or a terminal device.

14. The method according to any one of claims 1 to 13, wherein the determining, by a first communication device, a first beam and a second beam comprises:
receiving, by the first communication device, second indication information from the second communication device, wherein
the second indication information indicates the first beam and the second beam, the first communication device is a terminal device, and the second communication device is a network device.

15. A communication apparatus, wherein the communication apparatus comprises:
a processing module, configured to: determine a first beam and a second beam, wherein the first beam and the second beam are beams of a same type; and determine, according to a first rule, a beam used for a first control resource set, wherein the beam used for the first control resource set is the first beam and/or the second beam.

16. The communication apparatus according to claim 15, wherein if a network device configures two control resource set groups for a terminal device, and each control resource set group comprises at least one control resource set, the processing module is specifically configured to:
if the first control resource set belongs to a first control resource set group in the two control resource set groups, determine that the beam used for the first control resource set is the first beam; or
if the first control resource set belongs to a second control resource set group in the two control resource set groups, determine that the beam used for the first control resource set is the second beam, wherein
the first control resource set group is a control resource set group with a smaller group index in the two control resource set groups, and the second control resource set group is a control resource set group with a larger group index in the two control resource set groups.

17. The communication apparatus according to claim 15, wherein if a network device configures two control resource sets for a terminal device, and the two control resource sets are used for repeat transmission of a control channel, the processing module is specifically configured to:
if the first control resource set is a control resource set with a smaller index in the two control resource sets, determine that the beam used for the first control resource set is the first beam; or if the first control resource set is a control resource set with a larger index in the two control resource sets, determine that the beam used for the first control resource set is the second beam; or
if the first control resource set is a control resource set with a higher configuration ranking in the two control resource sets, determine that the beam used for the first control resource set is the first beam; or if the first control resource set is a control resource set with a lower configuration ranking in the two control resource sets, determine that the beam used for the first control resource set is the second beam.

18. The communication apparatus according to claim 17, wherein that the two control resource sets are used for repeat transmission of the control channel meets any one of the following conditions:
the network device configures two control resource set groups for the terminal device, and the two control resource sets belong to different control resource set groups;
the network device configures two control resource set groups for the terminal device, an index of a control resource set in a first control resource set group in the two control resource set groups is less than an index of a control resource set in a second control resource set group in the two control resource set groups; or a configuration ranking of a control resource set in a first control resource set group is prior to a configuration ranking of a control resource set in a second control resource set group, wherein the first control resource set group is a control resource set group with a smaller group index in the two control resource set groups, and the second control resource set group is a control resource set group with a larger group index in the two control resource set groups; or
the network device configures only one control resource set group for the terminal device, and the two control resource sets belong to the control resource set group.

19. The communication apparatus according to claim 15, wherein if a network device configures one control resource set group for a terminal device, the control resource set group comprises one or more single-beam control resource sets, and the first control resource set belongs to one of the one or more single-beam control resource sets, the processing module is specifically configured to:
determine that the beam used for the first control resource set is the first beam;
determine that the beam used for the first control resource set is the second beam; or
if a beam currently used for the first control resource set and the first beam belong to a same beam set, determine to update the beam currently used for the first control resource set to the first beam, or if a beam currently used for the first control resource set and the second beam belong to a same beam set, determine to update the beam currently used for the first control resource set to the second beam.

20. The communication apparatus according to claim 15, wherein if a network device configures one control resource set group for a terminal device, the control resource set group comprises one or more multi-beam control resource sets, and the first control resource set belongs to one of the one or more multi-beam control resource sets, the processing module is specifically configured to:
determine that the beam used for the first control resource set is the first beam and the second beam.

21. The communication apparatus according to claim 15, wherein the communication apparatus further comprises a transceiver module; and
the transceiver module is configured to receive a first media access control control element MAC CE from a second communication device, wherein the first MAC CE comprises an index of the first control resource set; and
the processing module is specifically configured to:
if the first MAC CE is a first-type MAC CE, the first MAC CE comprises first beam indication information, and the first beam indication information indicates the first beam, determine that at any moment within a first time period, a 1^{st} common beam in two common beams of a same type that become effective at the any moment is used for the first control resource set, wherein the first time period is a time interval from an effective time point of a beam indicated by the first MAC CE to an effective time point of a beam indicated by a second MAC CE, and the second MAC CE is a MAC CE that indicates the beam used for the first control resource set and that is recently received by the communication apparatus after the first MAC CE is received;
if the first MAC CE is a first-type MAC CE, the first MAC CE comprises first beam indication information, and the first beam indication information indicates the second beam, determine that at any moment within a first time period, a 2^{nd} common beam in two common beams of a same type that become effective at the any moment is used for the first control resource set; or
if the first MAC CE is a second-type MAC CE, the first MAC CE comprises second beam indication information and third beam indication information, the second beam indication information indicates the first beam, and the third beam indication information indicates the second beam, determine that at any moment within a first time period, two common beams of a same type that become effective at the any moment are used for the first control resource set.

22. The communication apparatus according to any one of claims 19 to 21, wherein the processing module is further configured to:
determine a type of the first control resource set, wherein the type of the first control resource set comprises a single-beam control resource set or a multi-beam control resource set.

23. The communication apparatus according to claim 22, wherein the processing module is specifically configured to:
determine the type of the first control resource set based on a configuration parameter in the first control resource set;
receive first indication information from the second communication device, wherein the first indication information indicates whether a plurality of beams are allowed to be used for the first control resource set, or the first indication information indicates the type of the first control resource set, the communication apparatus is a terminal device, and the second communication device is a network device;
determine the type of the first control resource set based on a quantity of beams currently used for the first control resource set;
receive a third MAC CE from the second communication device, wherein the third MAC CE indicates the type of the first control resource set, or the third MAC CE indicates a quantity of beams used for the first control resource set, and the quantity of beams comprises 1 or 2; or the third MAC CE indicates the beam used for the first control resource set, and the beam used for the first control resource set comprises the first beam and/or the second beam; or
receive the first MAC CE from the second communication device; and determine the type of the first control resource set based on a type of the first MAC CE.

24. The communication apparatus according to claim 23, wherein the processing module is specifically configured to:
if the first MAC CE is the first-type MAC CE, determine that the first control resource set is a single-beam control resource set; or
if the first MAC CE is the second-type MAC CE, determine that the first control resource set is a multi-beam control resource set.

25. The communication apparatus according to claim 23, wherein the processing module is specifically configured to:
if the quantity of beams currently used for the first control resource set is 1, determine that the type of the first control resource set is a single-beam control resource set; or
if the quantity of beams currently used for the first control resource set is greater than 1, determine that the type of the first control resource set is a multi-beam control resource set.

26. The communication apparatus according to any one of claims 15 to 25, wherein the first beam and the first beam are two beams indicated by the network device to the terminal device; and the first beam and the second beam comprise any one of the following:
the first beam is a beam with a smaller index in the two beams, and the second beam is a beam with a larger index in the two beams;
the first beam is a beam corresponding to a smaller transmission configuration indicator TCI field value in the two beams, and the second beam is a beam corresponding to a larger TCI field value in the two beams;
the first beam is a beam with a higher configuration ranking in the two beams, and the second beam is a beam with a lower configuration ranking in the two beams;
the first beam belongs to a first beam set, the second beam belongs to a second beam set, the first beam set and the second beam set are two beam sets of a same type that are configured by the network device for the terminal device, the first beam set is a beam set with a smaller index in the two beam sets of the same type, and the second beam set is a beam set with a larger index in the two beam sets; or the first beam set is a beam set with a higher configuration ranking in the two beam sets of the same type, and the second beam set is a beam set with a lower configuration ranking in the two beam sets;
the first beam belongs to a first beam group, the second beam belongs to a second beam group, the first beam group and the second beam group are two beam groups of a same type that are activated by the network device by using a MAC CE, the first beam group is a beam group with a smaller index in the two beam groups of the same type, and the second beam group is a beam group with a larger index in the two beam groups of the same type; or the first beam group is a beam group with a higher activation ranking in the MAC CE in the two beam groups of the same type, and the second beam group is a beam group with a lower activation ranking in the MAC CE in the two beam groups of the same type;
the first beam is a beam indicated by a 1^{st} TCI field in downlink control information DCI, and the second beam is a beam indicated by a 2^{nd} TCI field in the DCI;
the first beam is a beam corresponding to a first part of field values in all field values of a TCI field in DCI, and the second beam is a beam corresponding to a second part of field values in all the field values of the TCI field in the DCI;
the first beam and the second beam are two beams of a same type that are indicated by a same TCI field in DCI, the first beam is a beam with a higher activation ranking in a MAC CE in the two beams of the same type, and the second beam is a beam with a lower activation ranking in the MAC CE in the two beams of the same type; or
the first beam is a beam indicated by first DCI, the second beam is a beam indicated by second DCI, the first DCI is DCI carried on a physical downlink control channel PDCCH corresponding to the first control resource set group in the two control resource set groups configured by the network device for the terminal device, the second DCI is DCI carried on a PDCCH corresponding to the second control resource set group in the two control resource set groups, the first control resource set group is the control resource set group with the smaller group index in the two control resource set groups, and the second control resource set group is the control resource set group with the larger group index in the two control resource set groups; or a value of a first field in the first DCI indicates that the beam indicated by the first DCI is the first beam, and a value of a first field in the second DCI indicates that the beam indicated by the second DCI is the second beam.

27. The communication apparatus according to any one of claims 15 to 26, wherein the communications apparatus comprises a network device or a terminal device.

28. The communication apparatus according to any one of claims 15 to 27, wherein the processing module is specifically configured to:
receive second indication information from the second communication device, wherein the second indication information indicates the first beam and the second beam, the communication apparatus is a terminal device, and the second communication device is a network device.

29. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 14.

30. A communication apparatus, wherein the communication apparatus comprises a processor, and the processor is configured to execute a computer program or computer instructions in a memory, to perform the method according to any one of claims 1 to 14.

31. A communication apparatus, wherein the communication apparatus comprises a processor, and the processor is configured to perform the method according to any one of claims 1 to 14.

32. A computer-readable storage medium, wherein the computer-readable storage medium stores a computer program, and when the computer program is executed by a communication apparatus, the communication apparatus is enabled to perform the method according to any one of claims 1 to 14.

33. A computer program product, wherein the computer program product comprises computer instructions, and when the computer instructions are run on a computer, the computer is enabled to perform the method according to any one of claims 1 to 14.
